# EUROPEAN PATENT SPECIFICATION

(11) **EP 4 601 787 B1**
(45) Date of publication and mention of the grant of the patent: **22.04.2026**
(21) Application number: 24731634.2
(22) Date of filing: 24.05.2024
(51) Int. Cl.: B01J 20/22

(54) **NEW METAL-ORGANIC FRAMEWORK MONOLITHIC BODY COMPOSITION**
NEUE MONOLITHISCHE KÖRPERZUSAMMENSETZUNG MIT METALLORGANISCHEM GERÜST
NOUVELLE COMPOSITION DE CORPS MONOLITHIQUE À STRUCTURE ORGANOMÉTALLIQUE

(30) Priority: 24.05.2023 GB 202307799; 24.05.2023 US 202363468638 P; 29.12.2023 GB 202320147
(43) Date of publication of application: 20.08.2025
(73) Proprietor: Immaterial Ltd, Cambridge CB4 0FW (GB)
(72) Inventor: CAMUR, Ceren, Cambridge CB4 0FW (GB); BOIX I SOLER, Gerard, Cambridge CB4 0FW (GB); BABU, Robin, Cambridge CB4 0FW (GB); KUMAR, Naveen, Cambridge CB4 0FW (GB); MORRISON, Ailsa, Cambridge CB4 0FW (GB); FAIREN-JIMENEZ, David, Cambridge CB4 0FW (GB); AFFLECK, Sam, Cambridge CB4 0FW (GB); YOUSSEF ABDELRAOUF, Mohamed Maher, Cambridge CB4 0FW (GB); SOMERVILLE ROBERTS, Nigel, Cambridge CB4 0FW (GB)
(74) Representative: Potter Clarkson
(86) International application number: PCT/GB2024/051352
(87) International publication number: WO 2024/241066

(56) References cited:
- WO-A1-2013/083992
- WO-A1-2018/065555
- AU-B2- 2020 202 940
- CN-A- 108 620 023
- US-A1- 2020 088 352
- US-A1- 2021 129 086
- GAIKWAD RANJIT ET AL: "Bimetallic UTSA-16 (Zn, X;X = Mg, Mn, Cu) metal organic framework developed by a microwave method with improved CO2capture performances", JOURNAL OF INDUSTRIAL AND ENGINEERING CHEMISTRY, THE KOREAN SOCIETY OF INDUSTRIAL AND ENGINEERING CHEMISTRY, KOREA, vol. 111, 22 April 2022 (2022-04-22), pages 346 - 355, XP087100728, ISSN: 1226-086X, [retrieved on 20220422], DOI: 10.1016/J.JIEC.2022.04.016

## Description

The present invention relates to metal-organic framework (MOF) monolithic compositions, processes for preparing such compositions, gas storage vessels comprising the compositions and uses of such compositions in gas storage vessels for the uptake, storage and release of gases.

There has been, and continues to be, significant interest in the use of improved sorbents for use in gas storage applications. Separation and purification processes of gases are critical for gas production and storage and applications in which the use of gases with enhanced purity is required, such as air purification, electronics, fine chemicals, fuel cells, power plants, etc (Metal-Organic Frameworks: Applications from Catalysis to Gas Storage, Part II: Gas Storage and Separation Applications, Wiley, July 2011, Ed. D. Farrusseng). Sorbent materials are materials which can adsorb and desorb specific species, such as gases, under specific conditions. Solid sorbents are highly porous and the pores provide the mechanism for adsorbing the target species.

### MOFs

Metal-organic frameworks (referred to as MOFs) are a class of sorbent materials that can be used to adsorb, store and desorb gases. MOFs can offer many performance advantages over current sorbent materials (such as zeolites and activated carbons) and are candidates for improved gas storage systems required for practical transport systems as well as applications such as gas separation, purification and carbon capture. A particular feature of MOFs is their high selectivity for specific species. Specific MOFs can be modified by changing organic linkers and metal ions and fine-tuning the properties to increase their selectivity in adsorbing specific species.

MOFs have been widely investigated for various gas storage and purification applications, such as carbon capture from air and flue gases, methane storage, hydrogen storage, gas separation and purification and noble gas purification. MOFs may be suited for these applications since they typically possess high porosity, surface area and selectivity and can also be regenerated for continuous use, thereby potentially providing an effective and environmentally friendly means for gas storage and purification applications. However, problems relating to handling have often limited their industrial application to date.

MOFs may have advantages due to their ability to be functionalised and finetuned for adsorption of specific materials. For instance, the unique properties of MOFs allow fine-tuning of the shape, size and chemical nature of the pores, making them ideal for gas separation, storage and purification processes (Eddaoudi et al., Science 2002, 295(5554), p. 469-472).

### Issues with the Synthesis and Production of MOF Materials and Bodies

MOF materials are almost universally synthesised as fine particles or crystallites, typically by sol-gel or mechano-synthesis techniques. The shaping of fine particle powders of MOF material into larger MOF monolithic bodies, to avoid problems such as compaction and channelling, is of high importance if the MOF materials are to be used in bulk industrial processes involving gas flows and low pressure drops and where material handling is of concern.

These MOF monolithic bodies need to be mechanically robust and attritionresistant to be industrially useful, whilst still having high sorption performance. Ideally these larger bodies also have high envelope and bulk densities so as to increase the volumetric capacity of any storage vessel containing the MOF monolithic bodies. Volumetric capacity describes the adsorption capacity of a vessel per unit of volume of the vessel. Higher volumetric capacity means that smaller, and hence cheaper or more space efficient, vessels can be used for a given application. The simultaneous requirements of high monolith density and high sorption performance (ie high porosity) can seem to be contradictory.

A key challenge is the appropriate shaping of less robust MOF materials, into mechanically stable and robust monolithic bodies that still retain high accessibility, porosity and surface area. Therefore, there is significant interest in the preparation of densified MOF monolithic bodies from fine, low-density powders that still retain the beneficial properties of the original MOF material and which are suitable for industrial gas storage and purification applications.

The use of compressive techniques such as tabletting to form a MOF monolithic body can be problematic for many MOFs in that they may result in the collapse and elimination of smaller-scale porosity within the MOF crystallites forming the shaped body. For example, very high pressures typically result in the collapse of some or all of the micropores of the MOF material which contribute heavily to the surface area and gas storage capacity of a material (in comparison to macropores). Pressure induced collapse of these micropores should be reduced or avoided.

Any process for making high-density MOF monolithic body needs to be capable of operating at high rates. Any process that is not capable of being scaled-up in an efficient and cost-effective manner has little commercial relevance. Industrial-scale gas storage and separation processes, such as carbon capture or hydrogen storage, will require large amounts of sorbent materials that will need to be prepared in an efficient and cost-effective manner.

Therefore, successful, large-scale use of MOF monolithic bodies, for gas storage, as well as purification and carbon capture purposes, requires that the MOF monolithic bodies simultaneously meet multiple quality parameters and processing requirements.

It is important for the MOF monolithic bodies to simultaneously possess good sorbent capacity and a high bulk density in order to obtain a gas storage vessel having a high volumetric capacity suitable for use in gas separation, storage and purification processes. However, the development of suitable quality MOF monolithic bodies that can be made by industrially relevant methods and which can efficiently pack inside gas storage vessels, thereby resulting in high volumetric capacity, has received little interest. Many processes inherently become less efficient and/or make products that are less homogeneous when scaled up from small lab-scale making to industrial-scale production.

Various methods have been described for the production of sorbent bodies comprising MOFs, such as granulation (WO2014118054), tabletting (US7524444) and extrusion (WO2017089344). However, these methods can have various disadvantages that can result in various issues including MOF monolithic bodies with low density, high macroporosity levels, low surface area, high excipient or binder content, damaged MOF structures leading to internal pore collapse and blockage of pores by additives.

Some known processing routes for preparing MOF monolithic bodies, for example tabletting, face various problems. Known MOF monolithic bodies, such as tablets, can have high envelope densities. However, even if they retain porosity during compaction and can be produced at rate, their bulk packing efficiency is typically low leading to a lower bulk density and reduced gas vessel volumetric efficiency.

In addition, most MOF powders typically have low bulk density and therefore poor flowability. The flowability is usually even poorer if the MOF material is solvated to reduce loss of porosity during compaction. Therefore, it may be challenging to feed the MOF at the required rates into the small individual moulds used for forming tablets. Such powders may also bridge over such a mould and not flow into, and fill, the mould. As a result, tablets often use additives to aid processing. However, this leads to a resulting tablet with a low content of active substance (i.e., MOF), thereby leading to a MOF monolithic body tablet with a lower performance.

Many of the issues described here for tabletting also apply to roller-compaction.

Other processing routes for preparing MOF monolithic bodies, such as granulation, also face drawbacks. For example, it is challenging to prepare MOF monolithic bodies with high bulk and/or envelope density via granulation processing. Sorbent powders, such as MOFs, are typically difficult to handle and have a low bulk density. Granulation processes tend to lack a strong compaction step during processing so that the resulting granulated bodies typically have high levels of macroporosity and a lower envelope density. In addition, granulation processes require that most or all of the sorbent material has been dried and processed to a powder, e.g., by spray-drying. This can introduce unwanted macroporosity as well as extra processing complexity.

### Use of Extrusion for Monolithic Body Making

Extrusion may be used to prepare MOF monolithic bodies and is widely reported in the art for making MOF bodies (e.g. WO2014/118074, AU2020202940, US2021129086). However, extrusion processing typically results in extrudates with lower packing efficiency and bulk density. This is inherent due to the shape of the extrudates, in particular the high aspect ratios typical of extrudates. The aspect ratio is the ratio of the length of an extrudate to its width/diameter. It is a measure that only really applies to extrudates and other shaped bodies. For example, if a monolithic body has a length of 10 mm and a width of 2 mm, it will have a particle aspect ratio of 5. The aspect ratio of most granules is typically close to 1 and a sphere will have an aspect ratio of 1. Some granules can be described as "ellipsoidal", but ellipsoids are essentially deformed spheres and will typically have small aspect ratios for example less than 2,

The void fraction of the extrudate packing in a container typically increases linearly with the aspect ratio of the extrudates. The void fraction is the proportion of the volume of the container that is not filled by the randomly packed extrudates and arises because of voids between the extrudates. The void fraction of randomly packed extrudates increases with aspect ratio in a linear manner from 0.32 at an aspect ratio of 1 to 0.46 at an aspect ratio of 5 (Rolland et al., Ind. Eng. Chem. Res. 2019, 58(9), p. 3902-3911). Higher void fractions are obviously detrimental to the volumetric capacity of a gas vessel. However, for a variety of reasons, producing extrudates with an aspect ratio close to 1 at scale is typically difficult, and often requires specific processing equipment wherein the rheology of the mixture being extruded is typically within certain parameters that can limit the composition.

Unlike other more spherical particle forms, extrudates typically have varying particle dimensions and particle aspect ratios, particularly when produced on an industrial scale. This often results in lower bulk densities or higher void fractions.

Therefore, the volumetric performance of a gas storage vessel containing sorbent monolithic MOF extrudates may be limited. In practice, it is difficult and constraining to produce extrudates at high rates having an aspect ratio close to 1 due to processing variability and material rheologies. It is easier to make extrudates with higher aspect ratios. This is problematic since extrusion has many processing advantages. Hence there is interest in developing compositions that have properties that enable extrusion to be used as a principal production process but counteract some of the negatives associated with use of extrudates.

These limitations include both bulk density and the kinetics of adsorption. The initial kinetics of adsorption are partially limited by the external surface area of the MOF bodies. Gases diffuse into the MOF bodies from contact with their external surfaces. The kinetics of adsorption can be important in separation processes where process cycle times can be very short. The rate at which material can be adsorbed and released by a sorbent can be as important as the total capacity of the sorbent. An example is the Rapid Cycle Pressure Swing Adsorption process, which can be used in processes such as the adsorption and capture of carbon dioxide.

At the same time, extrusion may be a promising way to prepare MOF monolithic bodies if it could overcome the limitations described herein. Extrusion is a practical process due to the ease of mixing powders and liquids and the formation of extrudates by passing the material through the orifices of a die-plate at the end of the extruder. Extruders can be either single screw extruders - as commonly used in plastics processing - or twin-screw extruders. Twin-screw extruders (either co- or counterrotating) allow an intense mixing of materials, such as MOF powders and binders, and are preferred for this application.

The inventors have found that MOF monolithic body compositions that combine beneficial chemical and physical attributes as well as the shape and distribution of sizes of the monolithic bodies can give an optimised sorbent product that can be produced more easily at industrial scale.

The present invention relates to a MOF monolithic body composition, a method of preparation of such composition, gas storage vessels comprising said composition and use of said gas storage vessels. The inventors have found that this composition is practical to make, possesses advantageous gas uptake, storage, separation and/or release properties and can be used to provide gas storage vessels with improved volumetric performance and efficient gas kinetics performance.

The MOF may be different depending on the gas storage or purification application and the type of gas or adsorbing species that are involved. For example, for a carbon capture application, it may be preferable to select a MOF with a high uptake and selectivity towards carbon dioxide.

The choice of MOF may also be selected based on the environment and conditions in which the MOF monolithic body is subjected, and the stability of the MOF, such as the thermal, chemical and/or mechanical stability of the MOF. For example, in gas purification and/or storage applications involving high temperatures and/or the presence of some species, such as water or steam, it may be preferable that a MOF with high thermal and chemical stability is selected. For example, for carbon capture from flue gas, the gas stream may contain water, and therefore it may be preferable to select a MOF with a high stability towards water.

It is important that the MOF retains its porosity during processing. MOFs are often not very robust due to the nature of the ligand-metal ion bonds forming the pore structures. These bonds depend on metal co-ordination chemistry rather than being stronger covalent or ionic bonds. It is possible to deform and crush the MOF pores by application of external pressure and hence reduce the surface area of the MOF that is available for gas sorption. Different MOFs have different stabilities and strengths, depending on properties such as the MOF composition and crystal structure.

It is also advantageous that the MOF monolithic bodies possess suitable properties that provide for fast gas uptake and release kinetics. One aspect of this is that the distance between the interior of the MOF monolithic body and an exterior surface should not be too large. Otherwise, the diffusion kinetics become limiting. Having a maximum distance of less than 2.5 mm or 2 mm, or less than 1 mm, is advantageous. In this way, a gas can rapidly diffuse into the interior of the MOF monolithic bodies. In addition, the gas will need to be able to easily flow into the gas storage vessel and around the monolithic bodies in the vessel. Therefore, the efficient packing of MOF monolithic bodies in a gas storage vessel has to also allow for fast gas kinetics.

A reduced diameter extrudate may seem potentially advantageous due to the increased external surface area of the extrudate, which would improve the kinetics of sorption in, for example, fast cycle Pressure Swing Adsorption processes. For example, an extrudate having a cross-sectional diameter of 2 mm and an aspect ratio of 3, will have a surface area/volume ratio that is 3.2 times greater than that of a 4 mm diameter extrudate also having an aspect ratio of 3. An extrudate having a cross-sectional diameter of 1 mm and an aspect ratio of 3, will have a surface area/volume ratio that is 11.2 times greater than that of a 4 mm diameter extrudate also having an aspect ratio of 3. However, reduced diameter extrudates present a number of problems, as described herein.

The MOF monolithic bodies must also be robust enough to survive agitation in general use and avoid excessive production of dust. Typically, MOF bodies comprise MOF and a binder to improve robustness and resistance to mechanical abrasion. Such binders can be inorganic, such as hydrated aluminas, or organic polymers, such as PVA. However, the inclusion of binders in the MOF monolithic body can lead to issues, such as blockage of the pores and/or dilution of the active sorbent material. Therefore, the development of MOF monolithic bodies with good mechanical stability that also possess high surface area, porosity and volumetric capacity is of significant interest.

The MOF monolithic bodies themselves must also have good properties, especially a low macroporosity. The larger macropores do not contribute significantly to the sorbent ability of an adsorbent body and just lower the density. There is little point in efficiently packing highly macroporous sorbent bodies in an efficient manner. The overall voidage in the gas storage vessel is the combination of the bulk void fraction and the macroporosity of the MOF monolithic bodies themselves. Both need to be addressed to minimise the bulk void fraction.

The issues addressed by the present composition are broadly applicable to most MOFs and binders and a wide range of processes.

The invention is defined in the appended claims.

According to an aspect of the present invention, there is provided a composition comprising:
at least two MOF monolithic bodies,
wherein the composition comprises at least about 50 wt% of the first MOF monolithic body based on the total weight of the solid composition (i.e. the composition excluding gas, liquid and/or fluid);
wherein the first MOF monolithic body comprises:
   an organic binder; and
   at least about 80 wt% of MOF based on the total weight of the solid first MOF monolithic body (i.e. the body excluding gas, liquid and/or fluid);
   wherein the first MOF monolithic body has a volume of macropores of about 15% or less of the envelope volume of the first MOF monolithic body, a particle aspect ratio of about 2 or greater and a particle width of greater than or equal to about 1 mm, and
   wherein the second MOF monolithic body comprises:
      a binder; and
      MOF;
      wherein the second MOF monolithic body has a particle aspect ratio of about 1,
      wherein the first MOF monolithic body has a higher particle aspect ratio than the second MOF monolithic body,
      wherein the second MOF monolithic body has a particle diameter about equal to or less than the particle width of the first MOF monolithic body,
      wherein the particle aspect ratio is defined as the ratio of the particle length to the particle width,
      wherein the particle width, particle length and particle aspect ratio of the first MOF monolithic body are measured by dynamic image analysis,
      wherein the particle diameter of the second MOF monolithic body is measured by laser diffraction,
      wherein the envelope volume is defined as the volume of mercury displaced by the first MOF monolithic body at atmospheric pressure (101.325 kPa), and
      wherein the volume of macropores is determined by mercury porosimetry.

### Production of the Composition

According to a further aspect of the present invention, there is provided a method for making the composition comprising at least two MOF monolithic bodies.

The method comprises the steps of:
a. providing a wet binder MOF mass comprising:
   i. MOF;
   ii. from about 50 wt% to about 95 wt% of a first solvent based on the total weight of the wet binder MOF mass; and
   iii. organic binder wherein the binder may be added as a solution, a dispersion, a powder, or a mixture thereof;
b. optionally reducing the proportion of the first solvent in the wet binder MOF mass to provide an undried binder MOF mass;
c. extruding and cutting the wet binder MOF mass or the undried binder MOF mass to provide a first undried MOF monolithic body having a particle aspect ratio of about 2 or greater;
d. removing at least some of the remaining first solvent from the first undried MOF monolithic body to provide a first dried MOF monolithic body;
e. optionally adding a second solvent to the first dried MOF monolithic body so as to remove at least part of any residual first solvent, at least part of any unreacted reactants and at least part of the organic binder from the first dried MOF monolithic body to provide an optional first reduced binder MOF monolithic body;
f. optionally removing at least some of the second solvent from the optional first reduced binder MOF monolithic body to provide an optional first unactivated MOF monolithic body;
g. activating the first dried MOF monolithic body or optional first unactivated MOF monolithic body by subjecting the first dried MOF monolithic body or optional first unactivated MOF monolithic body to a temperature of about 100 °C or greater to provide a first MOF monolithic body; and
h. combining the first MOF monolithic body with a second MOF monolithic body to provide a composition, wherein the second MOF monolithic body is as described herein and has a particle diameter about less than or equal to the particle width of the first MOF monolithic body.

An alternative method is described later in the specification.

The methods of the invention may further comprise one of more steps to provide a second MOF monolithic body for use in step (h), wherein the steps comprise:
grinding some of the first dried MOF monolithic body to provide a second dried MOF monolithic body, wherein the second dried MOF monolithic body has a largest particle diameter about equal to or less than the smallest particle diameter of the dried first MOF monolithic body; and/or
grinding some of the optional first reduced binder MOF monolithic body to provide an optional second reduced binder MOF monolithic body, wherein the optional second reduced binder MOF monolithic body has a largest particle diameter about less than or equal to the smallest particle diameter of the optional first reduced binder MOF monolithic body.

The second MOF monolithic body can be made by other processes provided that the size and composition requirements are met. For example, if the first MOF monolithic body comprises activated extrudates having a particle width of about 2 mm, then the second MOF monolithic body could comprise agglomerates or granules having a particle size of equal to or less than about 2 mm.

A preferred way to make the second MOF monolithic body is to mill and sieve part of the first MOF monolithic body to the appropriate size. The second MOF monolithic body can then be blended with the first MOF monolithic body.

According to a further aspect of the present invention, there is provided a gas storage vessel comprising the composition.

According to a further aspect of the present invention, there is provided a use of the gas storage vessel comprising the composition for the uptake, storage and/or release of a gas.

According to a further aspect of the present invention, there is provided a use of the composition for the uptake, storage and/or release of a gas.

### MOF Monolithic Body and Composition

The inventors have unexpectedly found a composition that overcomes one or more of the disadvantages associated with compositions of the prior art.

In particular, the composition of the present disclosure has a high bulk density and may provide for rapid kinetics of adsorption and desorption, while also being suitable for industrial production and use in gas sorption applications.

The inventors have found that the production of reduced diameter or thinner extrudates at large scale is challenging, since thinner extrudates typically stick together and form clumps after extrusion. There is therefore a benefit in having MOF compositions that can be more easily manufactured at an industrial scale, and which still have suitable adsorption kinetics and capacity for many adsorption processes, in particular carbon capture and hydrogen storage.

Without wishing to be bound by theory, the clumping of thin extrudates is believed to be due to the reduced weight of the reduced diameter extrudates. According to agglomeration theory, the tendency of two bodies to join together after an impact is strongly affected by the size and mass of the bodies. The larger the bodies, the more momentum and kinetic energy needs to be dissipated for the bodies to stay together. In practice, this means that larger bodies will tend to rebound apart after an impact whereas smaller bodies, such as reduced diameter extrudates, will stay stuck together. A large number of extrudate-extrudate interactions is inevitable in any large-scale process and will typically result in a large proportion of the reduced diameter extrudates sticking together in clumps and being hard to separate. Limiting the number of holes in a die-plate such that the extrudates are sufficiently far apart to avoid contact reduces production rates to non-viable levels. Making the extrusion mix sufficiently "dry" and non-sticky such that the reduced diameter extrudates will not adhere to each other will typically result in very high extrusion pressures (which can lead to damage of MOFs or bodies) and die-plate blockages.

The inventors have surprisingly found that the MOF extrudates should have a minimum particle width/diameter to be practically manufactured at a large scale.

Furthermore, the inventors have found that the presence of a second MOF monolithic body can simultaneously increase the kinetics of gas sorption/desorption whilst increasing the gas sorption capacity of the MOF composition, in particular as a result of the efficient packing arrangement of the first and second MOF monolithic bodies.

Limiting the proportion of the second MOF monolithic body in the composition will also avoid excessive pressure drop when using the composition in gas sorption processes.

In addition, the production of the second, smaller MOF monolithic body can be more difficult than the production of the first MOF monolithic body. Production of the second MOF monolithic body having a reduced particle size, such as by a granulation or extrusion processing, will typically be carried out by a process involving milling and/or sieving. Such production processes often result in high levels of fine particles (which need to be recycled back into the process) and poor yields. Therefore, it is advantageous to avoid high levels of the second MOF monolithic body in the composition.

As a result, there is a balance between the ease of production that is suitable for large scale production and the kinetic and volumetric performance of the MOF monolithic bodies.

In addition, the MOF monolithic bodies of the present disclosure contain sufficient organic binder to ensure suitable robustness, in contrast to other MOF bodies comprising inorganic binder, or no binder at all. For instance, extruded MOF bodies that do not contain binder are typically much too fragile to be useful in industrial scale applications.

The inclusion of the second MOF monolithic body in the composition will also facilitate heat transfer through the composition as a result of the increased number of contact points between the MOF monolithic body particles, in addition to providing for favourable sorption profiles of gases, in particular during desorption. For instance, gas in the second MOF monolithic body will release more quickly than gas in the first MOF monolithic body, which will provide for a more consistent gas flow.

The term "MOF monolithic body" refers to shaped bodies having a solid, uniform and continuous external and internal structure which comprise a high proportion of MOF material and which have a high envelope density. These materials are distinguished from MOF bodies where the MOF material has been deposited on the surface of a substrate or has been incorporated into a thin membrane of another material. MOF monolithic bodies do not include individual MOF particles or MOF crystallites.

The MOF monolithic bodies of the compositions of the present invention comprise a MOF and a binder. These MOF monolithic bodies are combined so as to provide MOF monolithic body compositions that pack more efficiently in a gas storage vessel. The MOF monolithic bodies are typically of a form which is easier to produce on large scale.

The first MOF monolithic body comprises organic binder and at least 80 wt% MOF, based on the total weight of the solid first MOF monolithic body (i.e. the body excluding gas, liquid and/or fluid).

The first MOF monolithic body may comprise at least about 80 wt% of MOF and up to about 20 wt% of organic binder, for example from about 80 to about 98 wt% of MOF and from about 2 to about 20 wt% of organic binder, for example from about 80 to about 96 wt% of MOF and from about 4 to about 20 wt% of organic binder, such as from about 90 to about 95 wt% of MOF and from about 5 to about 10 wt% of organic binder, for example from about 94 to about 95 wt% of MOF and from about 5 to about 6 wt% of organic binder, based on the total weight of the solid first MOF monolithic body (i.e. the body excluding gas, liquid and/or fluid).

The second MOF monolithic body comprises binder and MOF.

The second MOF monolithic body may comprise binder and at least about 50 wt% MOF, for example binder and at least about 70 wt% MOF, for example binder and at least about 80 wt% MOF, such as at least about 80 wt% of MOF and up to about 20 wt% of binder, for example from about 80 to about 98 wt% of MOF and from about 2 to about 20 wt% of binder, for example from about 85 to about 96 wt% of MOF and from about 4 to about 15 wt% of binder, such as from about 90 to about 95 wt% of MOF and from about 5 to about 10 wt% of binder, for example from about 94 to about 95 wt% of MOF and from about 5 to about 6 wt% of binder, based on the total weight of the solid second MOF monolithic body (i.e. the body excluding gas, liquid and/or fluid).

The first MOF monolithic body may consist essentially of (or consist of) MOF and organic binder and/or the second MOF monolithic body may consist essentially of (or consist of) MOF and binder.

The first MOF monolithic body may consist essentially of (or consist of) from about 80 to about 98 wt% of MOF and from about 2 to about 20 wt% of organic binder, based on the total weight of the first MOF monolithic body and/or the second MOF monolithic body may consist essentially of (or consist of) from about 80 to about 98 wt% of MOF and from about 2 to about 20 wt% of binder, based on the total weight of the solid second MOF monolithic body (i.e. the body excluding gas, liquid and/or fluid).

The first MOF monolithic body and second MOF monolithic body may comprise the same binder and/or the same MOF, or they may comprise different binders and/or different MOFs.

Preferably, the MOF of the first and second MOF monolithic bodies is the same. Preferably, the binder of the first and second MOF monolithic bodies is the same. More preferably, the MOF of the first and second MOF monolithic bodies is the same and present in the same amount and the binder of the first and second MOF monolithic bodies is the same and present in the same amount.

The composition comprises at least two MOF monolithic bodies. The composition may comprise more than two MOF monolithic bodies.

The composition may consist essentially of the first and second MOF monolithic bodies. The composition may consist essentially of the first and second MOF monolithic bodies and optionally a gas.

The composition may consist of the first and second MOF monolithic bodies. The composition may consist of the first and second MOF monolithic bodies and optionally a gas.

The composition comprises at least about 50 wt% of the first MOF monolithic body, based on the total weight of the solid composition (i.e. the composition excluding gas, liquid and/or fluid). The composition may comprise up to about 50 wt% of the second MOF monolithic body, based on the total weight of the solid composition (i.e. the composition excluding gas, liquid and/or fluid).

The composition may comprise at least about 55 wt% of the first MOF monolithic body, for example at least about 60 wt%, such as at least about 70 wt%, or from about 50 to about 99.9 wt%, such as from about 55 to about 99.9 wt%, for example from about 60 to about 99.9 wt%, such as from about 80 to about 99.9 wt%, for example from about 82 to about 99.5 wt%, such as from about 85 to about 99 wt%, for example from about 88 to about 98 wt%, such as from about 92 to about 97 wt%, for example from about 94 to about 96 wt%, based on the total weight of the solid composition (i.e. the composition excluding gas, liquid and/or fluid).

The composition may comprise up to about 45 wt% of the second MOF monolithic body, such as up to about 40 wt%, for example up to about 30 wt%, or from about 0.1 to about 50 wt%, such as from about 0.1 to about 45 wt%, for example from about 0.1 to about 40 wt%, for example from about 0.1 to about 20 wt%, such as from about 0.5 to about 18 wt%, for example from about 1 to about 15 wt%, such as from about 2 to about 12 wt%, for example from about 3 to about 8 wt%, such as from about 4 to about 6 wt%, based on the total weight of the solid composition (i.e. the composition excluding gas, liquid and/or fluid).

For example, the composition may comprise at least about 55 wt% of the first MOF monolithic body and up to about 45 wt% of the second MOF monolithic body, such as at least about 60 wt% of the first MOF monolithic body and up to about 40 wt% of the second MOF monolithic body, for example at least about 70 wt% of the first MOF monolithic body and up to about 30 wt% of the second MOF monolithic body, or from about 50 to about 99.9 wt% of the first MOF monolithic body and from about 0.1 to about 50 wt% of the second MOF monolithic body, for example from about 55 to about 99.9 wt% of the first MOF monolithic body and from about 0.1 to about 45 wt% of the second MOF monolithic body, such as from about 60 to about 99.9 wt% of the first MOF monolithic body and from about 0.1 to about 40 wt% of the second MOF monolithic body, such as from about 80 to about 99.9 wt% of the first MOF monolithic body and from about 0.1 to about 20 wt% of the second MOF monolithic body, for example from about 82 to about 99.5 wt% of the first MOF monolithic body and from about 0.5 to about 18 wt% of the second MOF monolithic body, such as from about 85 to about 99 wt% of the first MOF monolithic body and from about 1 to about 15 wt% of the second MOF monolithic body, for example from about 88 to about 98 wt% of the first MOF monolithic body and from about 2 to about 12 wt% of the second MOF monolithic body, such as from about 92 to about 97 wt% of the first MOF monolithic body and from about 3 to about 8 wt% of the second MOF monolithic body, for example from about 94 to about 96 wt% of the first MOF monolithic body and from about 4 to about 6 wt% of the second MOF monolithic body, based on the total weight of the solid composition (i.e. the composition excluding gas, liquid and/or fluid).

Preferably, the composition comprises from about 50 to about 99 wt% of the first MOF monolithic body and from about 1 to about 50 wt% of the second MOF monolithic body, based on the total weight of the solid composition (i.e. the composition excluding gas, liquid and/or fluid), for example from about 55 to about 98 wt% of the first MOF monolithic body and from about 2 to about 45 wt% of the second MOF monolithic body, or from about 70 to about 97 wt% of the first MOF monolithic body and from about 3 to about 30 wt% of the second MOF monolithic body.

The composition may comprise a low content of the second MOF monolithic body. For example, the composition may comprise from about 80 to about 99 wt% of the first MOF monolithic body and from about 1 to about 20 wt% of the second MOF monolithic body, based on the total weight of the solid composition (i.e. the composition excluding gas, liquid and/or fluid), such as from about 90 to about 98 wt% of the first MOF monolithic body and from about 2 to about 10 wt% of the second MOF monolithic body, for example from about 94 to about 97 wt% of the first MOF monolithic body and from about 3 to about 6 wt% of the second MOF monolithic body.

The first and second MOF monolithic bodies may have the same, similar, or different properties to one another. For example, the following properties of the two MOF monolithic bodies may have some of the same features and properties (e.g., type of sorbent, surface area, porosity such as microporosity and/or mesoporosity, envelope density, relative density, etc.).

The first and second MOF monolithic bodies may have different features and/or properties (e.g., amounts of MOF and/or binder, type of MOF and/or binder, surface area, porosity, microporosity, mesoporosity, macroporosity, envelope density, relative density, etc.).

In some embodiments, the first MOF monolithic body and the second MOF monolithic body may comprise different MOFs. The second MOF monolithic body may have a complementary functionality to the first MOF monolithic body that is beneficial for gas storage and separation applications. For example, the second MOF monolithic body may function as a scavenger to mop up gases and/or compounds when the composition is used for gas uptake, storage and/or release.

In particular, the second MOF monolithic body may comprise a MOF that can act as a water scavenger (e.g. wherein the MOF has a preference to adsorb water over other gases, such as CO₂) or a sulphur scavenger (e.g. wherein the MOF has a preference to adsorb sulphur compounds over other gases, such as methane). The second MOF monolithic body may therefore improve the volumetric capacity and remove certain gases or compounds from the gas stream.

In such aspects, it is preferred that the composition comprises a low content of the second MOF monolithic body. For example, the composition may comprise from about 90 to about 99.9 wt% of the first MOF monolithic body and from about 0.1 to about 10 wt% of the second MOF monolithic body, based on the total weight of the solid composition (i.e. the composition excluding gas, liquid and/or fluid), such as from about 95 to about 99 wt% of the first MOF monolithic body and from about 1 to about 5 wt% of the second MOF monolithic body, for example from about 97 to about 98.5 wt% of the first MOF monolithic body and from about 3 to about 1.5 wt% of the second MOF monolithic body.

The composition may comprise more than two MOF monolithic bodies with either the same or different features and properties as the first and/or second MOF monolithic bodies.

### Optimised Monolithic Bodies and Issues Associated with the Use of Binders

Without wishing to be bound by theory, it is proposed that the binder is necessary to provide the MOF monolithic bodies with robustness and resistance to mechanical abrasion. In addition, binder applied partially or completely as a solution or paste can facilitate extrusion. The binder results in MOF monolithic bodies such as extrudates having high strength and resistance to abrasion. Advantageously, the binder allows the MOF monolithic bodies to be appropriately shaped into bodies with specific particle shape and size distributions and particle aspect ratios.

The inventors have found that the combination of process choices and binder and MOF in the present disclosure can result in MOF monolithic bodies with optimal properties, such as porosity, in particular macroporosity, surface area, pore accessibility as well as mechanical robustness. Preferably such MOF monolithic bodies can be used in the composition of the invention. Surprisingly, relatively low levels of binder can give the MOF monolithic bodies good mechanical robustness if processed by the preferred process.

The use of binders and extrusion processing to obtain the MOF monolithic bodies may provide a composition having a tailored and tuned multi-modal particle size distribution, for example a multi-modal shape and/or size distribution, and high packing efficiency, while also being robust enough to avoid breakdown of the MOF monolithic bodies. Therefore, the multi-modal distribution is achieved in a controlled manner, for example by controlled preparation and/or processing. This may provide for a controlled multi-modal shape and/or size distribution that is not due to the result of the fragility of the bodies.

The first and/or second MOF monolithic bodies may have an elastic modulus (e.g. Young's modulus, E) of from about 0.5 to about 100 GPa, such as from about 1 to about 50 GPa, for example from about 2 to about 20 GPa.

The first and/or second MOF monolithic bodies may have a hardness, H of from about 100 to about 5000 MPa, for example from about 200 to about 2500 MPa, such as from about 400 to about 1500 MPa.

Young's moduli and hardness values may be determined using standard characterisation methods, for example by nanoindentation.

Low levels of binder may be achieved by the use of an organic polymeric binder in the MOF body and contacting the dried MOF bodies before activation with a second solvent so as to remove part of the organic polymeric binder originally added. The amount of organic polymeric binder removed may be less than 20% or more than or equal to 20% based on the total amount of organic polymeric binder added.

Without wishing to be bound by theory, it is believed that the partial removal of organic polymeric binder from the dried MOF monolithic bodies removes at least part of the organic polymeric binder that is most accessible to the solvent. This is believed to be the organic polymeric binder that is coated onto the surface of the MOF crystallites, which is organic polymeric binder that may be blocking pores but least involved in binding the MOF crystallites together. The inventors believe that the organic binder that is in closest contact with the MOF crystallites will be the slowest to dissolve because it is the least accessible to the solvent. Hence the remaining organic polymeric binder is believed to be the most effective at binding MOF particles together.

Furthermore, this process allows the macroporosity of the MOF monolithic bodies to be limited by controlling the amount of organic polymeric binder that is removed from the dried MOF monolithic body.

Without wishing to be bound by theory, the partial removal of organic polymeric binder from the dried MOF monolithic bodies is believed to result in MOF monolithic bodies with a preferred porosity profile with high levels of micro- and mesopores without high levels of macroporosity, thus, making them particularly suitable for gas storage due to a combination of high density and high, useful porosity and BET surface area. Other processes typically result in higher levels of macropores being formed along with high levels of micro and mesopores and consequently lower monolithic body densities.

Throughout this application, the standard IUPAC definitions of pore size are used to define three pore size regimes. Micropores refer to pores having a size of less than about 2 nm. Mesopores refer to pores having a size of from about 2 nm to about 50 nm. Macropores refer to pores having a size of greater than about 50 nm. The macropores have very little adsorbent capacity and do not contribute to the sorbent capacity of a material. The pore size is an important factor because this may dictate the accessibility of species into the pores. The pores are also beneficial for transfer of species throughout the MOF monolithic bodies.

The MOF monolithic bodies may be microporous, or in other words the MOF monolithic bodies have micropores. The micropores of the MOF monolithic bodies may be provided by the MOF, i.e., the MOF may have micropores. It is advantageous for the MOF monolithic bodies to have micropores since this may result in favourable properties for gas sorption, storage, separation and purification.

In some embodiments, the MOF monolithic bodies have mesopores (i.e. pores larger than micropores but smaller than macropores). The mesopores may be beneficial for transfer of species and/or fluids throughout the MOF monolithic bodies. In particular, the mesopores may provide for fast gas kinetic transport throughout the MOF monolithic bodies. Preferably, the MOF monolithic bodies contain mesopores.

The first and/or second MOF monolithic bodies may have a high level of microporosity based on the total pore volume as measured by N₂ adsorption. The first and/or second MOF monolithic bodies may have a microporosity of about 40% or greater based on the total pore volume as measured by N₂ adsorption, for example from about 40% to about 75%.

The macroporosity of a body may be defined as the volume of macropores of the body in relation to the envelope volume of the body.

The macroporosity is measured by mercury porosimetry. Mercury porosimetry does not measure micro- and mesoporosity. The pressures required to force the mercury into the very small micro- and mesopores is beyond the capability of available equipment. Conversely, nitrogen adsorption does not detect large pores.

The first MOF monolithic body has a volume of macropores of about 15% or less of the envelope volume of the first MOF monolithic body, the volume of macropores may be about 13% or less, for example about 12% or less, such as about 10% or less, for example about 7% or less, such as about 5% or less, or from about 0.1 to about 15%, such as from about 0.2 to about 13%, for example from about 0.5 to about 10%, of the envelope volume of the first MOF monolithic body.

The second MOF monolithic body may have a volume of macropores of about 15% or less, such as a volume of about 13% or less, for example about 12% or less, such as about 10% or less, for example about 7% or less, such as about 5% or less, or from about 0.1 to about 15%, such as from about 0.2 to about 13%, for example from about 0.5 to about 10%, of the envelope volume of the second MOF monolithic body.

The volume of macropores of the second MOF monolithic body may be low in relation to the envelope volume of the second MOF monolithic body.

The second MOF monolithic body may have a volume of macropores of about 15% or less of the envelope volume of the second MOF monolithic body, the volume of macropores may be about 12% or less, such as about 10% or less, for example about 7% or less, such as about 5% or less, of the envelope volume of the second MOF monolithic body.

The macroporosity of the first and second MOF monolithic bodies may be different or may be the same. Preferably, the first and second MOF monolithic bodies have the same macroporosity (i.e. the volume of macropores in relation to the envelope volume of the first and second MOF monolithic bodies).

The available surface area/unit mass for gas sorption is the BET surface area, as described below, which is measured by nitrogen adsorption at 77 K. Ideally, the MOF monolithic bodies have a high surface area and porosity. The surface area of the MOF monolithic bodies contributes to the volumetric capacity of the MOF monolithic bodies, and therefore it is preferable that the MOF monolithic bodies have a high surface area so that the MOF monolithic bodies, when packed in a gas storage vessel, have a high surface area/unit volume inside the gas storage vessel.

The first and/or second MOF monolithic bodies may have a BET surface area as measured by N₂ sorption of about 0 m²/g or greater, such as about 10 m²/g or greater, such as about 100 m²/g or greater, for example about 200 m²/g or greater, such as about 300 m²/g or greater, for example about 400 m²/g or greater, such as about 700 m²/g or greater, for example about 1000 m²/g or greater, such as about 1500 m²/g or greater, or from about 0 to about 4,000 m²/g, such as from about 0 to about 2,500 m²/g, such as from about 100 to about 2,000 m²/g.

Certain MOF materials may have a low BET surface area -and yet still display a high uptake of other gases, such as hydrogen, methane, carbon dioxide, krypton, and/or water, for example hydrogen, methane, carbon dioxide and/or krypton.

There is a specific benefit in providing MOF monolithic bodies having a high microporosity, low macroporosity, high BET surface area, and comprising a high percentage (wt%) of MOF, since these features may provide the MOF monolithic bodies with favourable performance for gas separation, purification and storage applications. MOF monolithic body extrudates may have these features and may therefore be particularly suited for use in these applications.

The use of MOF monolithic bodies prepared using extrusion are advantageous due to the industrial viability of this process. There is a further benefit in using MOF monolithic body extrudates having the properties defined above in combination with the bulk properties of the entire extrudate population have been further optimised so as to further increase the performance of MOF-containing gas storage vessels.

The need to store as much gas as possible in a gas storage vessel of a given volume means that the bulk density of the MOF monolithic bodies is very important, as are the properties, such as composition and surface area, of the individual MOF bodies.

There is a further benefit in using MOF monolithic bodies having the properties defined above wherein the bulk properties of the composition has been further optimised so as to further increase the performance of MOF monolithic bodies when provided as a composition in a gas storage vessel.

When the MOF monolithic bodies are packed in a gas storage vessel, their bulk density is an important parameter. It is beneficial for the volumetric capacity and performance of the gas storage vessel if the bulk density of the MOF composition in the gas storage vessel is high. This will result in a higher level of gas being adsorbed and/or stored within a certain volume. Maximising the packing efficiency of the MOF monolithic bodies so as to increase the bulk density can improve the volumetric performance of the gas storage vessel for use in gas separation, purification and storage applications. As stated earlier, the packing efficiency of extrudates is typically poor.

The present disclosure further defines shape and size distributions of MOF monolithic bodies having the properties described herein that are particularly suitable for use in gas storage vessels. The MOF monolithic bodies may be multi-modal in terms of shape and/or size distribution. By multi-modal it is meant that the composition comprises at least two MOF monolithic bodies wherein the at least two MOF monolithic bodies may have different shape and size characteristics.

The non-uniform shape of some MOF monolithic bodies such as extrudates can make them hard to define by simple measures such as particle diameter and/or particle shape. Instead, parameters such as particle aspect ratio, elongation and/or particle roundness ratio may be used to define the particles of the MOF monolithic bodies.

The inventors have determined that a higher packing density and bulk density may be best achieved by using a combination of at least two MOF monolithic bodies with different size and shape distributions.

The first MOF monolith body has a particle aspect ratio of about 2 or greater, for example the particle aspect ratio may be about 3 or greater, such as from about 2 to about 7, for example from about 3 to about 7. Further particle aspect ratios of the first MOF monolithic body include about 2.4 or greater, about 2.5 or greater, about 2.6 or greater, or from about 2 to about 6, such as from about 2 to about 5, for example from about 2 to about 4, and from about 2.4 to about 5.1, or even from about 3 to about 5. For process reasons stated earlier, making monolithic bodies by extrusion at scale with an aspect ratio of less than 2 is not preferred. Furthermore, greater aspect ratios will pack very poorly and are not preferred. For example, particle aspect ratios of more than 20, more than 10, or more than 7, or sometimes more than 5, may have a poor packing density.

The first MOF monolithic body may not be in the form of a sphere, flake and/or ellipsoid. For example, in some embodiments, the first MOF monolithic body may not have a particle aspect ratio of less than 3, such as less than 2.5. In particular, when the first MOF monolithic body is an extrudate, then it may not have a spherical, flakelike or ellipsoidal shape.

The first MOF monolithic body has a poor packing efficiency and hence lower bulk density. The second MOF monolith body particles may fit in the voids between the first MOF monolith body particles. What is important for the second MOF monolith body is that its particle diameter is less than or equal to the width of the extrudates of the first MOF monolith body. The aspect ratio of the second MOF monolith body is about 1 (typical of most granules or particles) but this is not the important parameter for efficient packing; rather, it is the particle size required to fit into the available voids. The improved bulk density of the resulting composition leads to a higher volumetric performance of the composition when filled inside a gas storage vessel. The packing arrangement may depend on the particle diameter, particle shape, particle aspect ratio and/or relative amount of the first and/or second MOF monolithic bodies.

Monolithic bodies having a high particle aspect ratio, i.e., extrudates, are typically easier to produce at scale and it is therefore typically advantageous to have high levels of such monoliths in a composition. Therefore, the composition preferably comprises a greater amount of the first MOF monolithic body having a higher particle aspect ratio compared to the second MOF monolithic body.

The first MOF monolithic body has a higher particle aspect ratio than the second MOF monolithic body. The first MOF monolithic body may have a larger particle diameter than the second MOF monolithic body.

In particular, the second MOF monolithic body has a largest particle diameter about less than or equal to the smallest particle diameter of the first MOF monolithic body.

In some embodiments, the ratio of the largest particle diameter of the second MOF monolithic body to the smallest particle diameter of the first MOF monolithic body may be about 1 or less, such as from about 0.05 to about 0.95, for example from about 0.1 to about 0.75, such as from about 0.15 to about 0.5.

The largest and/or smallest particle diameter of the first and/or second MOF monolithic bodies may refer to the particle diameter, particle length and/or particle width.

When the first MOF monolithic body has a form with a high aspect ratio, for example with a particle aspect ratio of about 2 or greater, in particular the particle aspect ratios disclosed herein for the first MOF monolithic body (e.g. a typical extrudate), such as in the form of a rod, the smallest particle diameter of the first MOF monolithic body may refer to the particle width.

When the first MOF monolithic body is prepared using an extrusion method, the smallest particle diameter, herein the width/thickness, of the first MOF monolithic body may be based on measurement of the extrudate. Extrudates can shrink on drying and hence orifice diameter is not always a reliable indicator of extrudate thickness. For instance, the particle dimensions may shrink by about 10% on drying so that the particle dimensions of the dried extrudate may be about 10% less than the particle dimensions of the as-made extrudate. For the sake of clarity, references to the particle dimensions of the MOF monolithic bodies will refer to the particle dimensions of the final, dried body. Nevertheless, extrudates made using a specific orifice will be consistent in their thickness.

Using said extrusion method, the particle width of the first MOF monolithic body may be greater than or equal to about 500 µm, for example greater than or equal to about 750 µm, such as greater than or equal to about 900 µm, such as greater than or equal to about 1 mm, for example from about 1 to about 5 mm, such as from about 1 to about 3 mm, or any values as disclosed herein in relation to the smallest particle diameter of the first MOF monolithic body.

The first MOF monolithic body has a particle width of greater than or equal to about 1 mm. The first MOF monolithic body may have a particle width of greater than or equal to about 1.5 mm or about 2 mm, or from about 0.5 mm to about 10 mm, for example from about 0.75 mm to about 5 mm, such as from about 1 to about 5 mm, for example from about 1 to about 3 mm, or from about 1.5 to about 5 mm, such as from about 2 to about 5 mm, for example from about 2 to about 4 mm.

The first MOF monolithic body has a particle width of greater than or equal to about 1 mm.

More preferably, the first MOF monolithic body may have a smallest particle diameter of from about 2 to about 5 mm.

The first MOF monolithic body may have a largest particle diameter, for example a particle length, of greater than or equal to about 2 mm, for example from about 2 mm to about 100 mm, such as from about 2 mm to about 50 mm, for example from about 2 mm to about 35 mm, such as from about 2 mm to about 30 mm, for example from about 2.25 mm to about 25 mm, such as from about 2.5 mm to about 15 mm, for example from about 2.75 to about 10 mm, such as from about 3 to about 10 mm.

In particular, when the smallest particle diameter of the first MOF monolithic body is from about 1 to about 5 mm, the largest particle diameter may be from about 2 to about 35 mm, such as from about 3 to about 25 mm, preferably from about 3 to about 15 mm. When the smallest particle diameter of the first MOF monolithic body is from about 1.5 to about 5 mm, the largest particle diameter may be from about 3 to about 35 mm, such as from about 4 to about 25 mm, preferably from about 4.5 to about 20 mm. When the smallest particle diameter of the first MOF monolithic body is from about 2 to about 5 mm, the largest particle diameter may be from about 4 to about 35 mm, such as from about 6 to about 25 mm.

The second MOF monolithic body has a particle aspect ratio close to 1. When the second MOF monolithic body has an aspect ratio close to 1 (for example from about 1 to about 2, such as from about 1 to about 1.5, for example from about 1 to about 1.2, such as from about 1 to about 1.1), the largest particle diameter and/or smallest particle diameter of the second MOF monolithic body may be essentially the same or close in value. When the second MOF monolithic body has an aspect ratio close to 1, the largest particle diameter and/or smallest particle diameter of the second MOF monolithic body may refer to the particle diameter.

The second MOF monolithic body may have a largest particle diameter less than the smallest particle diameter of the first MOF monolithic body.

The largest particle diameter of the second MOF monolithic body may be less than or equal to about 5 mm, such as less than or equal to about 3 mm, for example less than or equal to about 1 mm, such as from about 20 µm to about 1 mm, 3 mm or 5 mm, or from about 50 µm to about 5 mm, such as from about 50 µm to about 3 mm, for example from about 100 µm to about 2 mm, such as from about 50 µm to about 1 mm, for example from about 150 µm to about 1 mm.

The smallest particle diameter of the second MOF monolithic body may be greater than or equal to 20 µm, such as greater than or equal to 50 µm, such as from about 20 µm to about 5 mm, for example from about 50 µm to about 5 mm, such as from about 50 µm to about 3 mm, such as from about 100 µm to about 2 mm, for example from about 50 µm to about 1 mm, such as from about 150 µm to about 1 mm.

In the context of the disclosure, the particle diameter may refer to the mean particle diameter. Similarly, the particle aspect ratio may refer to the mean particle aspect ratio.

In the context of the disclosure, the largest particle diameter may refer to the mean largest particle diameter, that is the mean of the largest diameter of the first and/or second MOF monolithic body particles.

In the context of the disclosure, the smallest diameter may refer to the mean smallest particle diameter, that is the mean of the smallest diameter of the first and/or second MOF monolithic body particles.

The mean particle diameter(s) and mean particle aspect ratio may be determined using methodology and instrumentation well-known to the person of ordinary skill within the field. Further details are described in the methods section below.

The bulk density is not the only parameter that is important for the gas storage and purification performance of the gas storage vessel. The gas needs to be able to flow through the packed bed without an excessive pressure drop, so that fast gas kinetics during gas sorption and separation are achieved. It is therefore important to leave some gaps between the MOF monolithic bodies. This means it is important that the composition does not contain too many small particles that may plug all the gaps between the first MOF monolithic bodies. Therefore, limiting the proportion of the second MOF monolithic body in the composition helps avoid the issues of high pressure drop.

Since the first monolithic sorbent bodies have a form, and particle aspect ratio, which is easier to produce on industrial scale, for example by producing them using extrusion, it is preferable that the composition comprises a higher proportion of the first MOF monolithic bodies compared to the second MOF monolithic bodies.

Furthermore, it is preferable that the composition does not comprise MOF monolithic bodies and/or MOF material with particle sizes that are too small, since very small particles, known as fine particles or fines, may plug all the gaps between the MOF monolithic bodies. If the composition comprises too many MOF monolithic bodies and/or MOF particles that are excessively small, it can result in an excessive pressure drop and slow gas kinetics during use of the MOF monolithic body when packed in a gas storage vessel. Furthermore, too many fine particles may result in excessive dustiness when handling the MOF monolithic bodies.

In the context of the disclosure, MOF material will be understood as MOF monolithic bodies or MOF particles (i.e. individual, loose particles of MOF, or mostly MOF, that do not form part of the MOF monolithic body) having a particle diameter of less than about 20 µm. For example, the MOF particle may consist essentially of MOF (wherein only low amounts of other substances, e.g. binder, are present).

The composition may comprise about 10 wt% or less of MOF material having a particle diameter of less than about 20 µm, such as about 5 wt% or less, for example about 2 wt% or less, such as about 1 wt% or less, for example about 0.1 wt% or less, or from about 0.01 to about 10 wt%, such as from about 0.05 to about 5 wt%, such as from about 0.1 to about 2 wt%, based on the total weight of the solid composition (i.e. the composition excluding gas, liquid and/or fluid).

The need to store as much gas as possible in a gas storage vessel of a given volume means that the bulk density of the composition is very important. The higher the bulk density, the more material that can be packed into the available working volume. The bulk density of a population of bodies is a function of the density of the individual bodies (commonly defined as the envelope density) and how the bodies pack together in the bulk. There is little point in having MOF monolithic bodies with a high individual envelope density if they are of such a shape that they pack together inefficiently. Therefore, a composition with a high bulk density may provide for a gas storage vessel with a high volumetric performance for use in gas storage applications. This may also be related to the surface area of the MOF monolithic bodies, so that a composition with a high surface area and a high bulk density may have a high surface area/unit volume, thereby resulting in a composition with a preferable volumetric performance when used in a gas storage vessel.

The bulk density may be defined as the mass of the MOF monolithic bodies divided by the total volume occupied by those MOF monolithic bodies, or in other words the mass of the composition divided by the total volume occupied by the composition.

The composition may have a bulk density of about 0.3 g/cm³ or greater, for example about 0.5 g/cm³ or greater, such as about 0.6 g/cm³ or greater, for example about 0.7 g/cm³ or greater, such as about 0.8 g/cm³ or greater, for example about 0.9 g/cm³ or greater, such as from about 0.3 to about 3 g/cm³, for example from about 0.3 to about 1.5 g/cm³.

For the avoidance of doubt, the 'bulk density' may refer to the 'untapped density' (i.e. the density of the material or powder as freely settled) or the 'tapped density' (i.e. the maximum density achieved when the material is tapped under specific conditions). Preferably, the bulk density is the tapped density.

The untapped density and the tapped density may be similar. For example, extrudates typically have high aspect ratios and poor packing, and therefore tapping may have little effect on the bulk density.

It is preferable that the MOF monolithic bodies have a high envelope density so as to minimise the volume of the MOF monolithic bodies required for a given gas sorption process.

The envelope density may depend on the sorbent and the crystal structure of the MOF, which may differ depending on the gas storage and separation application, and therefore the envelope density of the MOF monolithic bodies may depend on the application.

The first and/or second MOF monolithic bodies may have an envelope density of about 0.3 g/cm³ or greater, such as about 0.4 g/cm³ or greater, for example about 0.6 g/cm³ or greater, such as about 0.7 g/cm³ or greater, for example about 0.8 g/cm³ or greater, such as about 1 g/cm³ or greater, such as from about 0.3 to about 3 g/cm³, for example from about 0.4 to about 2 g/cm³.

Furthermore, the relative density of the MOF monolithic bodies is an important parameter for defining the porosity of the MOF monolithic bodies and the accessibility of the pores of the MOF bodies in relation to the porosity of the MOF. The relative density may be defined as the ratio of the envelope density of the MOF monolithic body compared to the crystal density of the MOF. The crystal density of the MOF is the theoretical density of a single MOF crystal. Many crystal densities of MOFs have been calculated and are available in the Cambridge Structural Database (CSD).

Whether or not the internal pores of a MOF in a MOF monolithic body have collapsed during processing is typically indicated by the relative density of the resultant MOF monolithic body. Different MOFs can have different crystal densities depending on their structure. If the envelope density of MOF monolithic bodies is greater than the crystal density (i.e. the relative density is > 1), then this is likely due to the collapse of internal pores. The greater the relative density is above 1, the more the internal pores will have collapsed and the lower the sorption capacity. Relative densities greater than 1 imply a wasteful loss of porosity as such high values can only be achieved by destroying some of the useful pores. Therefore, it is preferable that the relative density of the MOF monolithic bodies is not too high to avoid inefficient internal pore collapse in the MOF.

However, the relative density of a MOF monolithic bodies should typically not be much less than 1 as this would be volumetrically inefficient. Very low relative densities typically indicate excessive levels of undesirable larger macropores. Relative densities of much less than 1, such as less than 0.3, mean that there is excess porosity, mostly in the form of larger (hence less useful) pores in the body (i.e. macropores).

The first and/or second MOF monolithic bodies may have a relative density of about 0.3 or greater, for example from about 0.3 to about 1.7, such as from about 0.5 to about 1.5, or from about 0.3 to about 1.3, preferably from about 0.7 to about 1.2.

### MOF and Binder

The MOF of the second MOF monolithic body may be the same or different to the MOF of the first MOF monolithic body. Preferably, the MOF of the second MOF monolithic body is the same as the MOF of the first MOF monolithic body.

The MOF of the first MOF monolithic body and/or the MOF of the second MOF monolithic body may independently be selected from a MOF, wherein the metal ion of the MOF is selected from an element in groups la, IIa, IIIa, IVa to VIIIa, Ib to VIIIb, of the Periodic Table of Elements, and mixtures thereof. The metal ion may be selected from Mg, Ca, Sr, Ba, Sc, Y, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, B, Al, Ga, In, Ti, Si, Ge, Sn, Pb, As, Sb, Bi, and mixtures thereof. The metal ion may be selected from a transition metal, Si, Mg, Al, and mixtures thereof. Preferably, the metal ion is selected Zr, Zn, Al, Fe, Ti, Nb, Ni, Cu, Mg, Co, Cr, Mn, Si, and mixtures thereof. More preferably, the metal ion is selected Zr, Zn, Nb, Ni, Cu, Nb, Si, Ti, and mixtures thereof. For example, the metal ions may be selected from the group consisting of: Zn²⁺, Zr²⁺, Cu²⁺, Al³⁺, Mn²⁺, Mg²⁺, Nb²⁺, Fe²⁺, Fe³⁺, Ti²⁺, Ti³⁺, Ti⁴⁺, Co²⁺, Cr²⁺, Nb²⁺, Ni²⁺, Ca²⁺ and mixtures and combinations thereof. The metal ions may be provided by the salt of the metal ion, such as ZrCl₄.

Transition metal here may be understood as a chemical element in the d-block of the Periodic Table of Elements (i.e. groups 3 to 12, i.e. including Zn, Pd and Pt, and also Sc and Y).

The MOF of the first MOF monolithic body and/or the MOF of the second MOF monolithic body may independently be selected from a zeolitic imidazolate framework (i.e. ZIF), a mixed metal MOF, such as an Si, Ni, Fe, Ti and/or Zn mixed metal MOF, and mixtures thereof.

The organic linker of the MOF may be at least a monodentate organic linker, or a derivative thereof. Preferably, the organic linker of the MOF is a monodentate and/or a bidentate organic linker, for example wherein the organic linker is present in a partially deprotonated or completely deprotonated form in the MOF. Alternatively, the organic ligand may be a multidentate organic ligand capable of donating two or more pairs of electrons in a complexation reaction to form two or more coordinate bonds. The one or more, or plurality of, organic ligands may comprise two or more oxygen and/or nitrogen atoms suitable for donating a pair of electrons to form the two or more coordinate bonds. Preferably, the oxygen atoms may be present as carboxylate or nitro groups. Preferably, the nitrogen atoms may be present as amine groups. Typically, the plurality of organic ligands may be an aromatic carboxylate, an aromatic amine and/or an aromatic nitro.

The MOF of the first MOF monolithic body and/or the MOF of the second MOF monolithic body may independently be selected from a MOF comprising an organic linker comprising a carboxylic acid, such as a dicarboxylic acid, a tricarboxylic acid and/or a tetracarboxylic acid, an azine, such as a diazine, an azole, such as an imidazole and/or a triazole, and mixtures thereof.

The MOF of the first MOF monolithic body and/or the MOF of the second MOF monolithic body may independently be selected from a MOF comprising an organic linker selected from fumaric acid, oxalic acid, citric acid, succinic acid, benzenedicarboxylic acids (e.g. terephthalic acid, 1,3-benzenedicarboxylic acid), naphthalenedicarboxylic acids, biphenyldicarboxylic acids (e.g. 4,4'-biphenyldicarboxylic acid (BPDC)), terphenyldicarboxylic acids (e.g. p-terphenyl-4,4"-dicarboxylic acid), azines (e.g. pyrazine), bipyridinedicarboxylic acids (e.g. 2,2'-bipyridine-5,5'-dicarboxylic acid), benzenetricarboxylic acids (e.g. 1,2,3-, 1,2,4- and 1,3,5-benzenetricarboxylic acid (BTC)), benzenetetracarboxylic acid, dihydroxyterephthalic acid (e.g. 2,5-dihydroxyterephthalic acid (DHBDC)), azoles (e.g. imidazole, such as 2-methylimidazole, 4,5-dichloroimidazole, 2-imidazolecarboxaldehyde, triazole, such as 1,2,4-triazole), pyrenes (e.g. tetrakis(p-benzoic acid)pyrene), porphyrins (e.g. tetrakis(4-carboxyphenyl)porphyrin), and mixtures thereof.

Preferably, the organic linker of the MOF of the first MOF monolithic body and/or the MOF of the second MOF monolithic body is independently selected from terephthalic acid, aminoterephthalic acid, 1,3,5-benzenetricarboxylic acid, 2-methylimidazole, oxalic acid, citric acid, 1,2,4-triazole, pyrazine, 2,5-dihydroxyterephthalic acid, and mixtures thereof.

The MOF of the first MOF monolithic body and/or the MOF of the second MOF monolithic body may independently be selected from UiO-66, UiO-66-NH₂, UiO-67, UiO-68, NU-1000, PCN-222, MOF-808, ZU-301, Zr-fumarate, ZIF-8, ZIF-67, ZIF-71 and ZIF-90, Al-fumarate, MIL-53, CAU-10, MIL-160(Al) and soc-MOF-1, MIL-101 and MIL-100, SIFSIX-3-Ni, TIFSIX-3-Ni, NbOFFIVE-1-Ni, SIFSIX, SIFSIX-2-Cu-i, HKUST-1, ROS-17, UTSA-16, CALF-16, MOF-74/CPO-27, and mixtures thereof.

The MOF of the first MOF monolithic body and/or the MOF of the second MOF monolithic body may, for example, be independently selected from HKUST-1, ZIF-8, MOF-808, ZU-301, UiO-66, UiO-66-NH₂, UTSA-16, CALF-20, TIFSIX-3-Ni, NbOFFIVE-1, NbOFFIVE-1-Ni, MOF-74/CPO-27, SIFSIX, and mixtures thereof.

The MOF may be different depending on the gas storage or purification application and the type of gas or adsorbing species that are involved. For example, for a carbon capture application, it may be preferable to select a MOF with a high uptake and selectivity towards carbon dioxide.

The MOF of the first MOF monolithic body and/or the MOF of the second MOF monolithic body may independently be selected from a MOF which is suitable for the type of gas or adsorbing species that is involved.

The choice of MOF may also be selected based on the environment and conditions in which the MOF monolithic body is subjected, and the stability of the MOF, such as the thermal, chemical and/or mechanical stability of the MOF. For example, in gas purification and/or storage applications involving high temperatures and/or the presence of some species, such as water or steam, it may be preferable that a MOF with high thermal and chemical stability is selected. For example, for carbon capture from flue gas, the gas stream may contain water, and therefore it may be preferable to select a MOF with a high stability towards water.

It is important that the MOF retains its porosity during processing. MOFs are often not very robust due to the nature of the ligand-metal ion bonds forming the pore structures. These bonds depend on metal co-ordination chemistry rather than being stronger covalent or ionic bonds. It is possible to deform and crush the MOF pores by application of external pressure and hence reduce the surface area of the MOF that is available for gas sorption. Different MOFs have different stabilities and strengths, depending on properties such as the MOF composition and crystal structure.

For the purpose of clarity, references to a MOF include derivatives of that MOF including derivatives of the organic linkers and changes to the metal ions and/or metal clusters used as well as combinations and mixtures thereof. For example, references to CPO-27 may include CPO-27-Ni, CPO-27-Mg, CPO-27-Co or other variants (i.e. wherein the metal ion in the MOF is different), and references to UiO-66 may include UiO-66-NH₂, UiO-66-Br, UiO-66-OH, or other variants (i.e. wherein the organic linker in the MOF is different).

Furthermore, references to a MOF may include MOFs that are part of the same isoreticular series with the same secondary building unit (SBU) and topology but wherein the organic linker, functionality and/or pore size is varied. For example, references to IRMOF-1 may include IRMOF-8, IRMOF-11, IRMOF-18 (i.e. wherein the length, functionalisation and/or catenation of the organic linker in the MOF is different).

The binder may be any binding agent that can provide cohesiveness for the MOF monolithic bodies, for example to provide mechanical and chemical stability and robustness.

The binder of the second MOF monolithic body may be an organic binder, an inorganic binder, or a combination thereof. Preferably, the binder is an organic binder. More preferably, the binder is an organic polymeric binder.

The binder of the first MOF monolithic body is an organic binder. Preferably, the organic binder of the first MOF monolithic body is an organic polymeric binder.

Preferably, the binder of the first and/or second MOF monolithic body is an organic polymeric binder.

More preferably, the binder of the second MOF monolithic body is the same as the organic binder of the first MOF monolithic body (preferably an organic polymeric binder).

The binder may not be highly soluble in water and may even be insoluble in water. For example, a hydrophobic binder may advantageously provide the first and/or second MOF monolithic bodies with hydrophobic properties. In this way, when the first and/or second MOF monolithic bodies are used in a gas separation and storage application wherein the gas stream comprises water, the first and/or second MOF monolithic bodies, e.g., the first and/or second MOF monolithic bodies, may preferentially adsorb other gases in the gas stream (e.g., carbon dioxide) over water.

The binder may be soluble in water and aqueous mixtures of solvents or may be soluble in a non-aqueous solvent.

The first and/or second MOF monolithic bodies may be modified after synthesis, for example by modification of the binder, to provide the first and/or second MOF monolithic bodies with hydrophobic properties.

Preferably, when the first and/or second MOF monolithic bodies are prepared with organic binder using the method of the present disclosure, the solubility of the organic binder in the first solvent is the same or higher than the solubility of the organic binder in the second solvent. When using this method, the second solvent is added to the first and/or second dried MOF monolithic body so as to remove some of the organic binder from the first and/or second dried MOF monolithic body and provide a first and/or second reduced binder MOF monolithic body. Typically, the dissolved organic binder material may diffuse out from the first and/or second dried MOF monolithic body into the second solvent. Therefore, it is preferable if the solubility of the organic binder is lower in the second solvent than in the first solvent.

Without wishing to be bound by theory, it is believed that the removal of the organic binder from the first and/or second dried MOF monolithic body removes the organic binder that is most accessible, which is the organic binder that is least involved in binding the sorbent particles together and instead is most likely to block the pores of the sorbent in the first and/or second dried MOF monolithic body. In this way, a first and/or second reduced binder MOF monolithic body may be prepared which has a more accessible pore system, for example a higher BET surface area and higher porosity. Consequently, a MOF monolithic body prepared using this process may have better volumetric performance and in particular more accessible pore system which allows for faster gas flow and kinetics throughout the MOF monolithic body.

Preferably, the polymeric organic binder is selected from polyvinyl alcohol (PVA), polyethyleneimine, polyvinyl pyrrolidone (PVP), polyimide (PI), polyvinyl formal, polyacrylates including polyacrylic acid, polycarboxylates, polylactic acid, polyethylene glycol, polypropylene glycol, poly(1,4-phenylene- ether-ether-sulfone) (PFEES), poly(dimethylsiloxane) (PDMS), poly(tetrahydrofuran) (PTHF), polyolefin, polyamide, biopolymer-based material such as polysaccharide gums including xanthan gum, guar gum, alginates, chitosan, cellulose-based polymers such as cellulose, cellulose acetate, hydroxypropyl methyl cellulose (HPMC), methyl cellulose, ethyl cellulose, hydroxyethyl cellulose, carboxymethyl cellulose, hydroxypropyl methylcellulose phthalate (HPMCP), and mixtures thereof. Preferably, the binder is selected from PVA and a cellulose-based polymer (in particular methyl cellulose), and mixtures thereof.
The polymeric organic binder may be a hydrophobic polymeric organic binder.

### MOF Monolithic Body and Composition Preparation

The composition may be prepared using any suitable preparation process.

Furthermore, the MOFs in the composition of the present disclosure may be manufactured using any process and/or may be purchased from any commercial source.

The inventors have developed methods for preparing the composition of the disclosure involving extrusion. The composition, when prepared, for example, by these methods and loaded in a gas storage vessel, shows excellent volumetric and kinetic performance, high volumetric capacity, high gas uptake and/or high selectivity.

The use of this extrusion method to form the MOF monolithic bodies is especially beneficial since this method has excellent scalability and can be carried out on an industrial scale.

The methods may provide MOF monolithic bodies having a high content of MOF, a high microporosity and a low macroporosity, thereby providing excellent volumetric performance for gas storage. There is a specific benefit in using MOF monolithic bodies having a high microporosity, low macroporosity, high BET surface area and comprising a high level of MOF in the gas storage vessel.

However, extrudates produced on an industrial scale typically have low bulk densities due to inefficient extrudate packing as a result of the high aspect ratio of the extrudates. The methods of the present invention are particularly useful since it is challenging to make extrudates at industrial rates that have high packing efficiencies.

Using these methods to prepare the MOF monolithic bodies may avoid the generation of fine particles. A major limitation of preparing milled MOF monolithic bodies can be the generation of a high level of unwanted fine particles. This may be a significant issue when carried out on an industrial scale.

The first and/or second MOF monolithic bodies may be extrudates (i.e. in the form of an extrudate), or produced from extrudates. Preferably, the first and/or second MOF monolithic bodies are prepared by extrusion. More preferably, the first MOF monolithic body is an extrudate.

The term extrudate may be understood as a particle that is produced by extrusion.

The first and/or second MOF monolithic bodies may be prepared by a process that does not include a milling process.

While it may be possible to form the composition by combining the ingredients in any order and/or carrying out the steps in any order, best results to prepare the MOF monolithic bodies are obtained when following the methods of the disclosure as described below.

There is provided a method for making the composition comprising at least two MOF monolithic bodies comprising the steps of:
a. providing a wet binder MOF mass comprising:
   i. MOF;
   ii. from about 50 wt% to about 95 wt% of a first solvent based on the total weight of the wet binder MOF mass; and
   iii. organic binder wherein the binder may be added as a solution, a dispersion, a powder, or a mixture thereof;
b. optionally reducing the proportion of the first solvent in the wet binder MOF mass to provide an undried binder MOF mass;
c. extruding and cutting the wet binder MOF mass or the undried binder MOF mass to provide a first undried MOF monolithic body having a particle aspect ratio of about 2 or greater;
d. removing at least some of the remaining first solvent from the first undried MOF monolithic body to provide a first dried MOF monolithic body;
e. optionally adding a second solvent to the first dried MOF monolithic body so as to remove at least part of the residual first solvent, at least part of any unreacted reactants and at least part of the organic binder from the first dried MOF monolithic body to provide an optional first reduced binder MOF monolithic body;
f. optionally removing at least some of the second solvent from the optional first reduced binder MOF monolithic body to provide an optional first unactivated MOF monolithic body;
g. activating the first dried MOF monolithic body or optional first unactivated MOF monolithic body by subjecting the first dried MOF monolithic body or optional first unactivated MOF monolithic body to a temperature of about 100 °C or greater to provide a first MOF monolithic body; and
h. combining the first MOF monolithic body with a second MOF monolithic body to provide a composition, wherein the second MOF monolithic body has a particle diameter about less than or equal to the particle width of the first MOF monolithic body.

The first solvent may comprise one or more substances, such as one or more solvents. For example, the first solvent may be a single substance (e.g. water or methanol) or a mixture of substances (e.g. water and methanol). Similarly, the second solvent may include one or more substances. For example, the second solvent may be a single substance (e.g. methanol) or a mixture of substances (e.g. methanol and another substance).

Step b may be carried out to reduce the proportion of the first solvent in the wet binder MOF mass to provide an undried binder MOF mass if the wet binder MOF mass is too soft, or wet, to form (i.e. extrude and cut) a first undried MOF monolithic body.

Steps e and f are optional steps. For example, the composition may be prepared without the addition or removal of a second solvent, wherein at least part of the organic binder (and at least part of the residual first solvent and at least part of any unreacted reactants) is not removed. In particular, when the first and/or second MOF monolithic body is prepared from certain MOFs, such as UTSA-16, MOF-808 and/or ZU-301, it may be possible to omit optional steps e and f of the method. This can simplify processing, thereby resulting in a faster and/or cheaper preparation method. Preferably, steps e and f are included in the method.

The first MOF monolithic body prepared in this method may be combined with a second MOF monolithic body in step h. to provide the composition.

The second MOF monolithic body may be added at any step after step c in the method and does not necessarily need to be added in step h. Preferably, the second MOF monolithic body component is added after step f in the form of a second unactivated MOF monolithic body, and the first and second unactivated MOF monolithic bodies are activated together.

It should be understood that the terms "first and/or second MOF monolithic body component" and "relevant first and/or second MOF monolithic body component" are used here to refer to the form of the first and/or second MOF monolithic body that it would be in a given method step.

There is also provided a method for making a composition of the invention, comprising the steps of:
i. forming a wet metal-organic framework (MOF) reaction mass, wherein the wet metal-organic framework reaction mass comprises MOF, unreacted MOF precursors, and reaction solvent;
ii. contacting the wet MOF reaction mass with a binder to form a wet binder mass;
iii. partially drying the wet binder mass to form an undried binder MOF mass;
iv. forming the undried binder mass into an undried MOF monolithic body;
v. removing at least some of the remaining solvent from the undried MOF monolithic body to form a dried MOF monolithic body;
vi. activating the dried adsorbent body by subjecting the dried adsorbent body to a temperature of greater than about 100 °C to form an adsorbent body.
This method comprises:
I. forming a wet MOF reaction mass, wherein the wet MOF reaction mass comprises:
   i. from about 20% to about 70%, or from about 30 wt% to about 60 wt%, or from about 40% to about 50% of a MOF, based on the total weight of the wet MOF reaction mass;
   ii. from about 3% to about 50%, from about 8% to about 40%, or from about 10% to about 30% unreacted MOF precursors by weight of the MOF in the wet MOF reaction mass; and
   iii. from about 10 wt% to about 70 wt%, preferably from about 10% to about 60%, preferably from about 10% to less than about 50%, reaction solvent by weight of the wet MOF reaction mass;
II. contacting the wet MOF reaction mass with an organic binder to provide a wet binder MOF mass;
III. optionally reducing the proportion of the reaction solvent in the wet binder MOF mass to provide an undried binder MOF mass;
IV. extruding and cutting the wet binder MOF mass or the undried binder MOF mass to provide a first undried MOF monolithic body having a particle aspect ratio of about 2 or greater;
V. removing at least some of the remaining solvent from the first undried MOF monolithic body to provide a first dried MOF monolithic body;
VI. optionally contacting the first dried MOF monolithic body with a washing solvent so as to remove at least part of the residual reaction solvent, at least part of any unreacted reactants and/or at least part of the organic binder from the first dried MOF monolithic body to provide an optional first reduced binder MOF monolithic body;
VII. optionally removing at least some of the second solvent from the optional first reduced binder MOF monolithic body to provide an optional first unactivated MOF monolithic body;
VIII. activating the first dried MOF monolithic body or optional first unactivated MOF monolithic body by subjecting the first dried MOF monolithic body or optional first unactivated MOF monolithic body to a temperature of about 100 °C or greater to provide a first MOF monolithic body; and
IX. combining the first MOF monolithic body with a second MOF monolithic body to provide a composition, wherein the second MOF monolithic body has a particle diameter about less than or equal to the particle width of the first MOF monolithic body.

The terms "unreacted precursor material" and "reaction-by-products" of step I, ii refer to unreacted material and by-products that are used to prepare the MOF and/or that are present in the MOF reaction mixture after preparation of the MOF, and are not themselves MOF.

An advantage of this method is that it can allow for a MOF reaction mixture to be used to prepare the composition and/or first and/or second MOF monolithic bodies without having to wash and/or process the MOF reaction mixture.

This approach (i.e. providing a wet MOF mass and/or contacting the wet MOF mass with an organic binder to provide a wet binder MOF mass) may be used in any of the methods of the invention.

The second MOF monolithic body of the compositions of the present disclosure may be prepared using a similar method as described herein, or it may be provided by another source. For example, the second MOF monolithic body may be obtained from a commercial source.

In this way, a second MOF monolithic body with a different composition and/or properties may be combined with the first MOF monolithic body. This may result in the composition having superior volumetric performance, kinetic performance and stability.

Preferably, step (I) is carried out by contacting together metal-organic framework precursor materials, preferably two or more metal-organic framework precursor materials, and reaction solvent, to form the wet MOF reaction mass. Preferably at least some of the precursor materials are in solid form. Preferably, no further reaction steps are carried out following the contacting together. Preferably, the wet MOF reaction mass is not subject to any washing or concentrating steps. Preferably, the wet MOF reaction mass is not subject to any solvent exchange processes. Preferably, the wet MOF reaction mass is used directly following preparation.

Suitable conditions for this contacting reaction are well within the ambit of the skilled person. For example, this contacting reaction may be carried out at temperatures of less than about 100 °C, for example from about 20 °C to about 100 °C, or from about 50 °C to about 90 °C, for periods of time greater than about 30 mins, or greater than about 1 hour, or greater than about 2 hours, or greater than about 4 hours, or less than about 2 days, or less than about 1 day, or less than about 18 hours, with optional shearing during the reaction period so as to form a wet metal-organic framework reaction mass.

Suitable equipment includes a Sigma or Z-blade type high torque mixer or a helical-screw type mixer. Intense shearing can help the homogeneity of the mix and reduce the resulting particle size. Alternatively, equipment such as the Cyclomixer from Hosokawa Micron could be used.

The conditions of the reaction mixture to form the wet MOF reaction mass, such as type and concentration of solvent, temperature, reaction time etc can be varied such that a very wide range of different MOFs can be formed at high yield. Equipment such as twin-screw extruders are not preferred due to the short residence time which limits the flexibility of the process and range of MOFs that can be made. It is preferred if steps (I) and (II) and preferably (III) can all be carried out in the same reaction vessel.

One option is to mix the different precursors with part of the reaction solvent before adding the separate precursors together with stirring. For example, ZU-301 can be prepared by (i) preparing a dispersion/slurry of zinc carbonate basic in water with heating and agitation and (ii) dissolving oxalic acid and 3-methyl-1,2,4-triazole in a water/ethanol mix and (iii) adding the ligand solution to the zinc carbonate dispersion/slurry with lots of stirring and at elevated temperature for several hours.

The wet MOF reaction mass may have a solids content of from about 20 wt% to about 75 wt%, or from about 25 wt% to about 60 wt%, or from about 30 wt% to about 50 wt%. Conventional adsorbent body synthesis via a dilute sol-gel may only achieve a solids content of 8 wt% or less, whereas the process of the present invention can achieve high solids content without the need for centrifugation. The reaction mass is kept under reaction conditions for long enough to ensure that the majority of the precursors have reacted.

Step (II) contacts the wet MOF reaction mass with a binder, preferably a polymeric organic binder, to form a wet binder MOF mass.

The binder can be in solution (if soluble in a suitable solvent) or it can be added as a solid (preferably as a fine powder) or as a slurry/dispersion in a suitable solvent. A preferred method is to add the binder as a partially solvated powder. Alternatively, the binder may be in the form of a finely dispersed dry powder. The partial presolvation of the binder increases the interaction and efficacy of the binder with the wet MOF reaction mass compared to addition as a pure powder whilst limiting the amount of extra solvent required. Adding a soluble organic polymeric binder as a solution can be very effective for the dispersion and subsequent performance of the binder (thus limiting the amount needed) but significantly increases the amount of solvent that subsequently need to be removed. The binder is typically mixed with the wet MOF reaction mass with extended mixing to ensure homogeneity.

The binder, preferably polymeric organic binder, may be partially solvated, preferably by pre-mixing with one or more solvents selected from the group consisting of: water, DMSO, short-chain length alcohols (C1 to C4) including methanol, ethanol and propanol, short-chain (C1 to C4) organic acids including formic acid and acetic acid, glycols and mixtures thereof.

The binder may be added to the wet MOF reaction mass in an amount of from about 0.5% to about 30%, or about 1% to about 25%, or about 5% to about 20% or about 10% to about 15%, by weight of the MOF in the wet MOF reaction mass.

When the binder may be provided as an about 67 wt% binder solution or dispersion, for example 20 g binder added to 30 g solvent. Optionally, the binder may be provided as from about 4wt% to 70wt% binder solution or dispersion, or from about 10wt% to about 50wt% binder solution or dispersion, or from about 30wt% to about 40wt% binder solution or dispersion.

The binder is contacted with the wet MOF reaction mass at a binder to MOF ratio of about 1:19, or about 1:15, or about 1:12, or about 1:7, or about 1:5, or about 1:4, or about 1:3.

Preferably, step (II) immediately follows step (I).

Step (III) partially dries the wet binder mass to form an undried binder mass. Step (III) removes at least some (but not all) of the reaction solvent from the wet binder mass to form an undried binder mass.

Step (III) can be achieved in several different ways. The wet binder mass can be further dried before cutting. This could be done in, e.g., a wiped film evaporator or heated high-torque mixer and the resulting undried binder mass is then cut and formed into smaller bodies. The wet binder mass could be allowed to dry on flat surfaces to form an undried binder mass followed by being cut in a cutting mill or flaker or other suitable cutting equipment. Such methods are examples of removing (e.g. evaporating) at least some but not all of the reaction solvent from the wet binder mass to form an undried binder mass.

For example, step (III) may be carried out by (i) evaporation of solvent; and/or (ii) addition of an adsorbent material having a lower solvent level than the wet binder mass, to the wet binder mass, wherein the adsorbent material is selected from one or more of silica, zeolite, activated carbon, graphene, metal-organic frameworks or combinations thereof.

Preferably, step (III) is carried out at from about 20 °C to about 80 °C, or from about 40 °C to about 60 °C for at least about one day, or at least about two days, or at least about three days.

Typically, the undried binder mass formed by the reduction in reaction solvent level in step (III) has a viscosity at 10s⁻¹ and 25 °C of from about 3.0 x 10⁵ mPa.s to about 3.0 x 10⁶ mPa.s. For example, the undried binder mass may have a viscosity of > about 4.0 x 10⁵ mPa.s at 10 s⁻¹ and 25 °C before any cutting step. The undried binder mass retains enough solvent as to be deformable under pressure and impact so it can be rounded, eg in a spheroniser. Typically, the viscosity of the undried binder mass is less than about 1.25 x 10⁶ mPa.s at 10 s⁻¹ and 25 °C.

Optionally, steps (II) and (III) may be carried out simultaneously or sequentially.

Step (IV) forms an undried MOF monolithic body. Step (IV) is carried out by an extrusion and cutting. The undried MOF monolithic body typically has the same composition as the undried binder MOF mass.

Step (V) removes at least some of the remaining solvent from the undried MOF monolithic body (optionally washed adsorbent body) to form a dried MOF monolithic body. Step (e) may be carried out by gradual drying at temperatures of less than about 100 °C or less than about 60 °C, less than about 40 °C or even at ambient temperatures.

Optionally, the dried MOF monolithic body may be contacted with washing solvent so as to remove unreacted materials and/or reaction byproducts and to form a washed MOF monolithic body. This washing step may be carried out once or more than once. The washing solvent may be the same as the reaction solvent or it may be different to the reaction solvent.

Step (VIII) activates the dried MOF monolithic body by subjecting the unactivated MOF monolithic body to a temperature of greater than about 100 °C, preferably under vacuum, to form an adsorbent body. Preferably, step (VIII) immediately follows step (V or VII). Step (V or VII) can optionally be integrated as an initial part of step (VIII).

The wet MOF rection mass is formed in step (I) and is a mixture of MOF material, residual unreacted MOF precursors and reaction solvent, plus any reaction by-products. The term "unreacted MOF precursors" is used herein to describe all the solid material in the wet MOF reaction mass that is not MOF. The wet MOF reaction mass comprises: (i) from about 20% to about 70% of a metal-organic framework by weight of the wet metal-organic framework reaction mass; (ii) from about 3% to about 50% unreacted MOF precursors by weight of the MOF in the wet metal-organic framework reaction mass; and (iii) from about 10 % to about 70 % of reaction solvent by weight of the wet metal-organic framework reaction mass.

Preferably, the wet framework mass comprises from about 20% to about 70%, or from about 40% to about 60%, of a metal-organic framework by weight of the wet metal-organic framework reaction mass. Preferably, the wet MOF reaction mass comprises from about 3% to about 50%, from about 10% to about 25%, unreacted MOF precursors by weight of the MOF in the wet MOF reaction mass. Preferably, the wet MOF mass comprises from about 10 % to about 70 %, or from about 20% to about 66%, or from about 30% to about 60%, of reaction solvent by weight of the wet metal-organic framework reaction mass. Preferably, the wet framework mass comprises from about 10 % to about 50 %, or from about 20% to less than about 50%, of reaction solvent by weight of the wet metal-organic framework reaction mass.

Preferably, the wet framework mass is not subjected to one or more washing and re-concentration steps subsequent to initial formation.

In the case of preparing the composition comprising at least two MOF monolithic bodies wherein the second MOF monolithic body is prepared from the first MOF monolithic body (e.g. by grinding of the first MOF monolithic body), the composition may be obtained using a method of the invention which comprises the additional step of grinding some of the first dried MOF monolithic body to provide a second dried MOF monolithic body, wherein the second dried MOF monolithic body has a particle diameter about equal to or less than the particle width of the first dried MOF monolithic body.

Typically, the grinding step will be carried out after the extruding step and before the activation step. For example, the grinding step can be carried out at any suitable point between extrusion and activation. As an example, grinding can be carried out before or after removing at least some of the remaining first or reaction solvent. As another example, grinding can be carried out before or after the optional use of the second or washing solvent.

The process comprises:
1. providing a wet binder MOF mass comprising:
   i. MOF;
   ii. from about 50 wt% to about 95 wt% of a first solvent based on the total weight of the wet binder MOF mass; and
   iii. organic binder wherein the binder may be added as a solution, a dispersion, a powder, or a mixture thereof;
2. optionally reducing the proportion of the first solvent in the wet binder MOF mass to provide an undried binder MOF mass;
3. extruding and cutting the wet binder MOF mass or the undried binder MOF mass to provide a first undried MOF monolithic body having a particle aspect ratio of about 2 or greater;
4. removing at least some of the remaining first solvent from the first undried MOF monolithic body to provide a first dried MOF monolithic body;
5. grinding some of the first dried MOF monolithic body to provide a second dried MOF monolithic body, wherein the second dried MOF monolithic body has a particle diameter about equal to or less than the particle width of the first dried MOF monolithic body;
6. optionally adding a second solvent to the first and second dried MOF monolithic bodies so as to remove at least part of any residual first solvent, at least part of any unreacted reactants and at least part of the organic binder from the first and second dried MOF monolithic bodies to provide optional first and second reduced binder MOF monolithic bodies;
7. optionally removing at least some of the second solvent from the optional first and second reduced binder MOF monolithic bodies to provide optional first and second unactivated MOF monolithic bodies;
8. activating the first and second dried MOF monolithic bodies or optional first and second unactivated MOF monolithic bodies by subjecting the first and second dried MOF monolithic bodies or optional first and second unactivated MOF monolithic bodies to a temperature of greater than about 100 °C to provide a composition comprising a first MOF monolithic body and a second MOF monolithic body, wherein the second MOF monolithic body has a particle diameter about equal to or less than the particle width of the first MOF monolithic body.

Steps 6 to 8 may be carried out on the first and second MOF monolithic body components either together (i.e. on a mixture of the first and second MOF monolithic body components) or the steps may be carried out on the first and second monolithic body components separately (i.e. individually on the first and MOF monolithic body components). The first and second MOF monolithic body components may be combined in any of steps 6 and 7, and may be combined in step 8 before the activation process or after the activation process.

As described earlier, the addition and removal of the second solvent is optional, so that steps 6 and 7 are optional steps and may be included or may be omitted.

In the case of preparing the composition comprising at least two MOF monolithic bodies wherein the second MOF monolithic body is prepared from the first MOF monolithic body, the composition may alternatively be obtained when following the method of the present disclosure which comprises the steps of:
i. providing a wet binder MOF mass comprising:
   a. MOF;
   b. from about 50 wt% to about 95 wt% of a first solvent based on the total weight of the wet binder MOF mass; and
   c. organic binder wherein the binder may be added as a solution, a dispersion, a powder, or a mixture thereof;
ii. optionally reducing the proportion of the first solvent in the wet binder MOF mass to provide an undried binder MOF mass;
iii. extruding and cutting the wet binder MOF mass or the undried binder MOF mass to provide a first undried MOF monolithic body having a particle aspect ratio of about 2 or greater;
iv. removing at least some of the remaining first solvent from the first undried MOF monolithic body to provide a first dried MOF monolithic body;
v. adding a second solvent to the first dried MOF monolithic body so as to remove at least part of any residual first solvent, at least part of any unreacted reactants and at least part of the organic binder from the first dried MOF monolithic body to provide a first reduced binder MOF monolithic body;
vi. grinding some of the first reduced binder MOF monolithic body to provide a second reduced binder MOF monolithic body, wherein the second reduced binder MOF monolithic body has a largest particle diameter about equal to or less than the smallest particle diameter of the first reduced binder MOF monolithic body;
vii. removing at least some of the second solvent from the first and second reduced binder MOF monolithic bodies to provide first and second unactivated MOF monolithic bodies;
viii.activating the first and second unactivated MOF monolithic bodies by subjecting the first and second unactivated MOF monolithic bodies to a temperature of about 100 °C or greater to provide a composition comprising a first MOF monolithic body and a second MOF monolithic body, wherein the second MOF monolithic body has a largest particle diameter about less than or equal to the smallest particle diameter of the first MOF monolithic body.

Steps vii and viii may be carried out on the first and second MOF monolithic body components either together (i.e. on a mixture of the first and second MOF monolithic body components) or the steps may be carried out on the first and second MOF monolithic body components separately (i.e. on the individual first and second MOF monolithic body components). The first and second MOF body components may be combined step vii and/or viii, and may be combined in step viii before the activation process or after the activation process.

Other methods of the present disclosure may be adapted to include a grinding step in an analogous manner. The grinding step may be performed at any stage after the extrusion step, preferably after the drying step (i.e. after the removal of first or reaction solvent and/or optional removal of the second or washing solvent) in the disclosed methods, for example the grinding may be carried out on the undried first MOF monolithic body, the first dried MOF monolithic body, the first reduced binder MOF monolithic body, the first unactivated MOF monolithic body and/or the first activated MOF monolithic body. Preferably, the grinding step is performed on the first dried MOF monolithic body and/or the first reduced binder MOF monolithic body.

The grinding step may be carried out at multiple stages in the disclosed methods, for example both on the first dried MOF monolithic body and on the first reduced binder MOF monolithic body.

The second MOF monolithic body may be prepared by milling and/or sieving a portion of the first MOF monolithic bodies. Subsequently, the composition may be prepared by combining the first MOF monolithic body and the second MOF monolithic body, wherein the second MOF monolithic body was formed by milling and/or sieving a portion of the first MOF monolithic bodies.

A preferred process for making the second MOF monolithic body is to grind or mill some of the first dried MOF monolithic body and/or the first reduced binder MOF monolithic body to produce a second dried MOF monolithic body and/or second reduced binder MOF monolithic body. The same steps that are done on the first dried MOF monolithic body and/or first reduced binder MOF monolithic body to produce the first MOF monolithic body component may also be carried out on the second dried MOF monolithic body and/or the first reduced binder MOF monolithic body. Said steps, or some of the said steps, may be carried out on the first and second MOF monolithic body components separately, or the steps may be carried out on a mixture of the first and second MOF monolithic body components.

Typically grinding or milling such extrudates is done after the extrudates have been dried but before they have been activated.

Suitable equipment for grinding or milling of extrudates includes the Retsch SM300 Cutting Mill. Milled material can be blended directly with the first extrudate population or sieved prior to addition. Following a separation technique such as sieving, material that is too large to be recycled back into the mill.

The milled material can also be sieved to remove very small particles, (i.e. fines) having a particle diameter of about 50 µm or less, or about 150 µm or less, before being blended into the first MOF monolithic body component. Removing such fines can avoid dustiness when handling the MOF monolithic bodies and/or the composition. The fines can optionally be recycled back into the MOF and/or MOF monolithic body synthesis process.

The MOF monolithic bodies can be separated from the composition by sieving using a sieve having a mesh size about equal to or slightly less than the measured particle diameter of the MOF monolithic bodies. The closest Tyler or US mesh size can be used. If any particles to pass through the sieve, e.g. by passing end-on through the mesh, the limited number of particles can optionally easily removed from the second MOF monolithic body by hand and visual inspection.

The proportion of the second MOF monolithic body in the composition may be determined by use of a sieve having a mesh size about equal to or less than the smallest particle diameter of the first MOF monolithic body.

Typically, in the extrusion step of the methods the wet binder MOF mass or the undried binder MOF mass is extruded through an extruder with an orifice diameter of from about 1 to about 5 mm.

In the steps of the methods comprising adding a second solvent to the first dried MOF monolithic body (i.e. steps e. and v.) or adding a second solvent to the first and second dried MOF monolithic bodies (i.e. step 6.), at least part of any residual first solvent and at least part of any unreacted reactants are removed. Preferably all residual first solvent and unreacted reactants are removed, although part of any residual first solvent and part of any unreacted reactants may remain, in particular in the pores of the MOF monolithic body components.

In the steps of the methods comprising adding a second solvent to the first dried MOF monolithic body (i.e. steps e. and v.) or adding a second solvent to the first and second dried MOF monolithic bodies (i.e. step 6.), the amount of the organic binder that is removed from the first dried MOF monolithic body or the first and/or second dried MOF monolithic bodies may vary.

For example, the second solvent may remove less than about 20 wt% of the organic binder from the first dried MOF monolithic body and the first and/or second dried MOF monolithic bodies, based on the total weight of the organic binder in the respective bodies.

For example, the second solvent may remove more than about 20 wt% of the organic binder from the first dried MOF monolithic body and the first and/or second dried MOF monolithic bodies, based on the total weight of the organic binder in the respective bodies.

The second solvent may remove residual first solvent, unreacted reactants and about 15 wt% or less, such as about 10 wt% or less, for example about 5 wt% or less of the organic binder, based on the total weight of the organic binder in the respective bodies.

The partial removal of organic binder from the dried MOF monolithic body is believed to result in first and/or second MOF monolithic bodies with a preferred porosity profile, for example with enhanced levels of micro- and mesopores and lower levels of macroporosity.

Furthermore, the above method is particularly advantageous since it does not require that the MOF needs to be pre-dried before using it to prepare the MOF monolithic body and/or the composition. For example, the wet binder MOF mass may be provided directly following the synthesis of the MOF, wherein the MOF and the first solvent are part of the synthesis process of the MOF. In this case, only the binder needs to be added. In this way, the MOF may not need to be pre-dried before being used in the above method, thereby making the process more efficient and cost-effective.

### Use of the Composition

The compositions of the present disclosure may be used for purposes such as gas extraction or gas capture. They may also be used for gas storage and/or gas delivery. For example, the compositions of the present disclosure may be used to extract, capture, store and/or deliver gases, such as waste gases, from industrial processes. The compositions may be used to extract, capture, store and/or deliver gases such as carbon dioxide from flue gases.

The compositions of the present disclosure may also be used to extract, capture, store and/or deliver other gases or fluids, such as hydrogen, krypton, methane or water, for example hydrogen, krypton or methane.

Following use of the compositions of the present disclosure for gas capture, storage and/or delivery, they may be regenerated and recycled for further and/or repeated use. For example, the compositions may be regenerated by activation to remove any remaining gases and/or sorbates, and then recycled or re-used either in the same application or a different application.

### Composition comprising a gas

The composition of the invention may further comprise a gas, such as a gas selected from carbon dioxide, hydrogen, krypton, methane, water, and mixtures thereof, preferably carbon dioxide, hydrogen, krypton, methane, and mixtures thereof.

The skilled person will understand that any suitable MOF may be selected for use in the composition (i.e. wherein the MOF is suitable for the type of gas, adsorbing species and/or application).

The composition may further comprise hydrogen. When the composition further comprises hydrogen, the first and/or second MOF monolithic bodies may comprise any suitable MOF. Preferably, the first and/or second MOF monolithic bodies comprise a MOF independently selected from HKUST-1, ZIF-8, MOF-808, ZU-301, UiO-66, and mixtures thereof.

The composition may further comprise carbon dioxide. When the composition further comprises carbon dioxide, the first and/or second MOF monolithic bodies may comprise any suitable MOF. Preferably, the first and/or second MOF monolithic bodies comprise a MOF independently selected from UTSA-16, CALF-20, ZU-301, TIFSIX-3-Ni, NbOFFIVE-1-Ni, UiO-66-NH₂, and mixtures thereof.

The composition may further comprise krypton. When the composition further comprises krypton, the first and/or second MOF monolithic bodies may comprise any suitable MOF. Preferably, the first and/or second MOF monolithic bodies comprise a MOF independently selected from MOF-74, MOF-74-Mg, CALF-20, TIFSIX-3-Ni, NbOFFIVE-1, and mixtures thereof, such as MOF-74, more preferably MOF-74-Mg.

The composition may further comprise methane. When the composition further comprises methane, the first and/or second MOF monolithic bodies may comprise any suitable MOF. Preferably, the first and/or second MOF monolithic bodies independently comprise HKUST-1.

The composition may further comprise water. When the composition further comprises water, the first and/or second MOF monolithic bodies may comprise any suitable MOF. Preferably, the first and/or second MOF monolithic bodies comprise a MOF independently selected from HKUST-1, ZIF-8, MOF-808, ZU-301, UiO-66, UTSA-16, CALF-20, TIFSIX-3-Ni, NbOFFIVE-1-Ni, UiO-66-NH₂, MOF-74/CPO-27, MOF-74-Mg/CPO-27-Mg, SIFSIX, Al fumarate, and mixtures thereof.

In some embodiments, the solid components of the first and/or second MOF monolithic bodies may consist essentially of or, more particularly, consist of MOF and binder.

In further embodiments, the solid components of the composition may consist essentially of or, more particularly, consist of the first and/or second MOF monolithic bodies.

By the term "solid components", this may refer to solid material other than liquids and/or gases (i.e. material that is not adsorbed in and/or on the MOF, MOF monolithic bodies and/or composition).

In other embodiments, the composition, and/or first and/or second MOF monolithic bodies, may be substantially free of solid components other than MOF and binder.

By the term "substantially free", this means that the composition, and/or first and/or second MOF monolithic bodies, comprises less than 5 wt%, 4 wt%, 3 wt%, 2 wt% or 1 wt% of solid components other than MOF and binder, such as less than 0.5 wt% or 0.1 wt%.

### Use of the Composition in a Gas Storage Vessel

According to a further aspect of the invention, there is provided a gas storage vessel comprising the composition.
The gas storage vessel may have a shape that is non-spherical.
The gas storage vessel may further comprise one or more of the following:
a. insulation of the external walls;
b. means of heating and cooling the composition;
c. internal baffles;
d. means of restraining the composition in place;
e. a shape such that the composition is more than or equal to about 10 cm from an external wall (this can reduce temperature losses);
f. means of monitoring pressure and/or temperature; and/or
g. valves to control gas input and output flows.

### Use of the Composition and/or Gas Storage Vessel

According to a further aspect of the invention, there is provided a use of the gas storage vessel comprising the composition for the uptake, storage and/or release of a gas.

According to a further aspect of the invention, there is provided a use of the composition for the uptake, storage and/or release of a gas.

These uses are described below with reference to the use of a gas storage vessel comprising the composition for the uptake, storage and/or release of gas. The skilled person will understand that this discussion is also applicable to and illustrative of the use of the composition for the uptake, storage and/or release of gas (whether or not in a gas storage vessel).

For example, the gas storage vessel may be used in a method comprising the steps of:
a. filling the gas storage vessel with a gas;
b. storing the gas in the gas storage vessel; and/or
c. releasing the gas from the gas storage vessel.

The steps of this method may be carried out in any order, and the method may comprise any one or more of these steps.

The composition, for example in a gas storage vessel may be used as part of gas purification, storage and capture processes using any suitable technique as part of pressure-swing (PSA) or temperature-swing (TSA) adsorption processes and variations thereof, such as VPSA (vacuum pressure-swing adsorption).

Such processes operate by varying the pressures and/or temperatures inside the gas storage vessel such that the target gas (e.g. hydrogen, carbon dioxide, methane, water and/or krypton) is either adsorbed by the monolithic bodies or is desorbed from the monolithic bodies.

For example, in order to load and store hydrogen into the monolithic body particles, hydrogen gas is introduced into the vessel at high pressures (typically > 5 bar) and low temperatures (such as below 100 K). This reduces the temperature of the MOF material and the MOF monolithic body and assists in the adsorption of the hydrogen into the MOF or monolithic body. The cooled and pressurised hydrogen is typically fed into the storage vessel until the pressure in the vessel is at, or close to, the pressure and temperature of the incoming gas. The monolithic bodies are then loaded with hydrogen so it can be stored until needed. To remove the hydrogen from the storage vessel, one or more valves are opened to allow the release of the pressurised gas. As the pressure drops, hydrogen desorbs from the MOF surfaces and can be removed through the valve. To assist in the gas removal, heat can be applied to increase the temperature of the monolithic bodies and the pressure can be reduced. A similar approach is used for other gases, such as methane, though the optimum pressures and temperatures for sorption and desorption will vary between gases.

The vessels can also be used as part of a purification or capture process. The gas stream to be separated, such as a flue gas containing carbon dioxide as part of a carbon capture process, or a gas stream containing krypton, is passed through the gas storage vessel at high pressures and lower temperatures - for example at > 5 bar and at about 20 °C, e.g. ambient temperatures. The target gas, e.g., carbon dioxide or krypton, is then adsorbed by the MOF monolithic body which has been selected for a high selectivity for that gas compared to the other constituents of the gas stream. The gas coming out of the gas storage vessel is now depleted in the target gas and can be sent for further processing or vented to atmosphere. The gas stream is stopped when the MOF is saturated with the target gas and stops adsorbing. The adsorbed target gas, such as carbon dioxide or krypton, may then be desorbed from the MOF by any suitable method, such as increasing the temperature of the MOF composition, for example by the use of heaters, for TSA processes or lowering the pressure in the storage vessel for PSA processes by opening valves and/or the use of pressure pumps, or both. The target gas may be drawn off through an opened valve and sent on for further processing, such as underground capture.

Such processes may also be applicable to the harvesting and/or storage of water, for instance water harvesting from air. For example, moisture or water in air (e.g. humid air or water vapour) may be captured or trapped, stored and/or released by a gas storage vessel comprising the composition. References to gases as disclosed herein may therefore also include water, water moisture and/or water vapour.

The composition is particularly suited for the sorption and storage of gases for various gas separation and purification applications. Due to the porous nature of the MOF monolithic bodies in the composition, as well as other properties such as high bulk density, they are particularly suited for demonstrating a high volumetric capacity of gas, which is important for gas storage and separation applications.

The skilled person will understand that any suitable MOF may be selected for use in the composition, wherein the composition (whether or not in a gas storage vessel) is used for the uptake, storage and/or release of a gas.

The MOF may be selected based on the use of the composition and/or gas storage vessel. For example, the MOF may have a chemical composition, porosity, pore size etc. that is particularly suited for a certain gas storage and separation application.

The gas may comprise hydrogen, carbon dioxide, methane, krypton, water, or mixtures thereof, such as hydrogen, carbon dioxide, methane, krypton, or mixtures thereof. The gas may be (or may consist essentially of or consist of) hydrogen, carbon dioxide, methane, krypton, water, or a mixture thereof, such as hydrogen, carbon dioxide, methane, krypton or a mixture thereof.

The uptake and/or release of the gas may be achieved by:
a. a pressure-swing process; and/or
b. a temperature-swing process.

The gas storage vessel may be used as part of a gas purification process.

### Use for Hydrogen Storage

When the gas comprises hydrogen, for example when the gas is hydrogen, the first and/or second MOF monolithic bodies may comprise any suitable MOF, preferably the first and/or second MOF monolithic bodies comprise a MOF independently selected from HKUST-1, ZIF-8, MOF-808, UiO-66, and mixtures thereof.

These MOFs are suitable for the uptake, storage and release of hydrogen, and when used in the composition of the invention, demonstrate excellent performance such as volumetric performance and cycle life.

When the gas comprises hydrogen, for example when the gas is hydrogen, and the first and/or second MOF monolithic bodies comprise any suitable MOF, preferably a MOF independently selected from HKUST-1, ZIF-8, MOF-808, ZU-301, UiO-66, and mixtures thereof, the temperature of the composition may be varied from about -200 to about -100 °C during the uptake and/or release the gas. When the temperature is at about -200 °C, the pressure inside the gas storage vessel may be greater than or equal to about 10 bar. When the temperature is at about -100 °C, the pressure inside the gas storage vessel may be less than or equal to about 1 bar.

When the gas comprises hydrogen, for example when the gas is hydrogen, and the first and/or second MOF monolithic bodies comprise any suitable MOF, preferably a MOF independently selected from HKUST-1, ZIF-8, MOF-808, ZU-301, UiO-66 and mixtures thereof, the composition may comprise a bulk volumetric composition of MOF of from about 0.4 to about 1.1 g/cm³, such as from about 0.5 to about 0.9 g/cm³, for example from about 0.6 to about 0.8 g/cm³ and hydrogen of from about 0.025 to about 0.09 g/cm³, such as from about 0.033 to about 0.075 g/cm³, for example from about 0.04 to about 0.065 g/cm³ at 77 K and 10 atm.

### Use for Carbon Dioxide Storage

When the gas comprises carbon dioxide, for example the gas is carbon dioxide, the first and/or second MOF monolithic bodies may comprise any suitable MOF, preferably a MOF independently selected from UTSA-16, CALF-20, ZU-301, TIFSIX-3-Ni, NbOFFIVE-1, NbOFFIVE-1-Ni, UiO-66-NH₂ and mixtures thereof. More preferably, the MOF is ZU-301 and/or UTSA-16. ZU-301 and UTSA-16 demonstrate properties such as high volumetric performance, fast gas kinetics and good stability that are particularly suited for carbon dioxide capture in flue gas purification applications.

When the gas comprises carbon dioxide, for example the gas is carbon dioxide, and the first and/or second MOF monolithic body comprises any suitable MOF, preferably a MOF independently selected from UTSA-16, CALF-20, ZU-301, TIFSIX-3-Ni, NbOFFIVE-1-Ni, UiO-66-NH₂ and mixtures thereof, the temperature of the composition may be varied from about 0 to about 100 °C during the uptake and/or release of the gas. When the temperature is at about 20 °C, the pressure inside the gas storage vessel may be from about 5 bar to about 10 bar. When the temperature is at about 70 °C, the pressure inside the gas storage vessel may be less than or equal to about 1 bar.

When the gas comprises carbon dioxide, for example the gas is carbon dioxide, and the first and/or second MOF monolithic body comprises any suitable MOF, preferably a MOF independently selected UTSA-16, CALF-20, ZU-301, TIFSIX-3-Ni, NbOFFIVE-1-Ni, UiO-66-NH₂ and mixtures thereof, the composition may comprise a bulk volumetric composition of MOF of from about 0.4 to about 1.1 g/cm³, such as from about 0.5 to about 0.9 g/cm³, for example from about 0.6 to about 0.8 g/cm³ and carbon dioxide of from about 0.03 g/cm³ to about 0.14 g/cm³, such as from about 0.04 g/cm³ to about 0.12 g/cm³, for example from about 0.05 to about 0.1 g/cm³ at 293 K and 5 atm.

When the gas entering the gas storage vessel comprises carbon dioxide, the carbon dioxide content of the gas may be from about 0.1 to about 10 wt%, based on the total weight of the gas.

When the gas entering the gas storage vessel comprises carbon dioxide, the carbon dioxide content of the gas may be from about 10 to about 70 wt%, based on the total weight of the gas.

### Use for Krypton Storage

When the gas comprises krypton, for example the gas is krypton, the first and/or second MOF monolithic bodies may comprise any suitable MOF, preferably a MOF independently selected from MOF-74, MOF-74-Mg, CALF-20, TIFSIX-3-Ni, NbOFFIVE-1, and mixtures thereof, such as MOF-74, more preferably MOF-74-Mg.

When the gas comprises krypton, for example the gas is krypton, and the first and/or second MOF monolithic body comprises any suitable MOF, preferably a MOF independently selected from MOF-74, MOF-74-Mg, CALF-20, TIFSIX-3-Ni, NbOFFIVE-1, and mixtures thereof, such as MOF-74, preferably MOF-74-Mg, the temperature of the composition may be varied from about 0 to about 100 °C during the uptake and/or release of the gas. When the temperature is about 20 °C, the pressure inside the gas storage vessel may be greater than or equal to about 5 bar. When the temperature is about 100 °C, the pressure inside the gas storage vessel may be less than or equal to about 1 bar.

When the gas entering the gas storage vessel comprises krypton, the krypton content of the gas may be from about 90 to about 99 wt%, based on the total weight of the gas.

When the gas comprises krypton, for example the gas is krypton, and the first and/or second MOF monolithic bodies comprise any suitable MOF, preferably a MOF independently selected from MOF-74, CALF-20, TIFSIX-3-Ni, NbOFFIVE-1, and mixtures thereof, such as MOF-74, preferably MOF-74-Mg, the composition may comprise a bulk volumetric composition of MOF of from about 0.4 to about 1.1 g/cm³, such as from about 0.5 to about 0.9 g/cm³, for example from about 0.6 to about 0.8 g/cm³ and krypton of from about 0.03 g/cm³ to about 0.14 g/cm³, such as from about 0.04 g/cm³ to about 0.12 g/cm³, for example from about 0.05 to about 0.1 g/cm³ at 293 K and 5 atm.

### Use for Methane Storage

When the gas comprises methane, for example the gas is methane, the first and/or second MOF monolithic bodies may comprise any suitable MOF, preferably a MOF which is independently selected from HKUST-1.

When the gas comprises methane, for example the gas is methane, and the first and/or second MOF monolithic bodies comprise any suitable MOF, preferably a MOF which is independently selected from HKUST-1, the temperature of the composition may be varied from about 0 to about 100 °C during the uptake and/or release of the gas. When the temperature is about 20 °C, the pressure inside the gas storage vessel may be greater than or equal to about 5 bar. When the temperature is greater than or equal to about 95 °C, the pressure inside the gas storage vessel may be less than or equal to about 1 bar.

When the gas comprises methane, for example the gas is methane, and the first and/or second MOF monolithic bodies comprise any suitable MOF, preferably which a MOF which is independently selected from HKUST-1, the composition may comprise a bulk volumetric composition of MOF of from about 0.4 to about 1.1 g/cm³, such as from about 0.5 to about 0.9 g/cm³, for example from about 0.6 to about 0.8 g/cm³ and methane of from about 0.03 g/cm³ to about 0.14 g/cm³, such as from about 0.04 g/cm³ to about 0.12 g/cm³, for example from about 0.05 to about 0.1 g/cm³ at 293 K and 5 atm.

### Use for Water Harvesting

When the gas comprises water (e.g. humid air), for example the gas is water (e.g. water vapour), the first and/or second MOF monolithic bodies may comprise any suitable MOF, preferably a MOF independently selected from HKUST-1, ZIF-8, MOF-808, ZU-301, UiO-66, UTSA-16, CALF-20, TIFSIX-3-Ni, NbOFFIVE-1-Ni, UiO-66-NH₂, MOF-74/CPO-27, MOF-74-Mg/CPO-27-Mg, SIFSIX, Al fumarate, and mixtures thereof, preferably MOF-808.

Water harvesting may be carried out by direct capture of water from air. For example, the uptake step may comprise water being adsorbed into the composition at a high humidity (e.g. at high relative humidity, RH, such as from about 60 to about 100% RH) and/or low temperature (e.g. from about -40 to about 30 °C). The release step may comprise water being desorbed from the composition at a low humidity (e.g. at low RH, such as from about 0 to about 40% RH) and/or high temperature (e.g. from about 40 to about 80 °C).

When the gas comprises water, for example the gas is water, and the first and/or second MOF monolithic bodies comprise any suitable MOF, preferably a MOF independently selected from HKUST-1, ZIF-8, MOF-808, ZU-301, UiO-66, UTSA-16, CALF-20, TIFSIX-3-Ni, NbOFFIVE-1-Ni, UiO-66-NH₂, MOF-74/CPO-27, MOF-74-Mg/CPO-27-Mg, SIFSIX, Al fumarate, and mixtures thereof, preferably MOF-808, the temperature of the composition may be varied from about 0 to about 100 °C during the uptake and/or release of the gas. When the temperature is about 20 °C, the pressure inside the gas storage vessel may be greater than or equal to about 5 bar. When the temperature is greater than or equal to about 95 °C, the pressure inside the gas storage vessel may be less than or equal to about 1 bar.

When the gas comprises water, for example the gas is water, and the first and/or second MOF monolithic bodies comprise any suitable MOF, preferably a MOF independently selected from HKUST-1, ZIF-8, MOF-808, ZU-301, UiO-66, UTSA-16, CALF-20, TIFSIX-3-Ni, NbOFFIVE-1-Ni, UiO-66-NH₂, MOF-74/CPO-27, MOF-74-Mg/CPO-27-Mg, SIFSIX, Al fumarate, and mixtures thereof, preferably MOF-808, the composition may comprise a bulk volumetric composition of MOF of from about 0.4 to about 1.1 g/cm³, such as from about 0.5 to about 0.9 g/cm³, for example from about 0.6 to about 0.8 g/cm³ and water of from about 0.03 g/cm³ to about 0.14 g/cm³, such as from about 0.04 g/cm³ to about 0.12 g/cm³, for example from about 0.05 to about 0.1 g/cm³ at 293 K and 5 atm.

### Brief Description of the Figures:

Figure 1 shows CO₂ and N₂ isotherms for ZU-301 measured at 20 °C.
Figure 2 shows CO₂ and N₂ isotherms for TIFSIX measured at 20 °C.
Figure 3 shows CO₂ and N₂ isotherms for UTSA-16 measured at 20 °C.
Figure 4 shows CO₂ and N₂ isotherms for CALF-20 measured at 20 °C.
Figure 5 shows CO₂ and N₂ isotherms for NbOFFIVE measured at 20 °C.
Figure 6 shows CO₂ and N₂ isotherms for CPO-27 measured at 20 °C.
Figure 7 shows a DVS testing (at 20 °C) for the CO₂ adsorption isotherm using CO₂ levels of 5%, 10%, 20%, 30% and 40% on long and short extrudates corresponding to Example 6.

### Test Methods

### Micro and meso-porosity

The level of microporosity and/or mesoporosity, or the microporosity and/or mesoporosity profile of the MOF monolithic bodies may be determined by test method ASTM D4641-17. Suitable equipment for carrying out ASTM D4641-17 include the ASAP 2020 Plus, from Micromeritics Corporation.

The test sample (0.5 g) is typically heated to 300 °C under vacuum to remove adsorbed gases and vapours from the surface. The nitrogen adsorption branch of the isotherm is then determined by placing the sample under vacuum, cooling the sample to the boiling point of liquid nitrogen (about 77.3 K), and then adding, in a stepwise manner, known amounts of nitrogen gas at increasing pressure P to the sample in such amounts that the form of the adsorption isotherm is adequately defined, and the saturation pressure of nitrogen is reached.

Each additional dose of nitrogen is introduced to the sample only after the preceding dose of nitrogen has reached adsorption equilibrium with the sample.

Typically, equilibrium is reached if the change in gas pressure is no greater than about 0.1 torr/5 min interval. This is continued until P0 (the gas saturation pressure) is reached.

Data is typically plotted as the amount of gas adsorbed/desorbed (and derived porosity profiles) as a function of P/P0. The desorption isotherm is determined by desorbing nitrogen from the saturated sample in a stepwise manner with the same precautions taken to ensure desorption equilibration as those applied under adsorption conditions. Microporosity is associated with the volume of gas adsorbed at P/P0 values of < 0.1 whereas mesoporosity is associated with the volume of gas adsorbed at P/P0 values between 0.1 and 0.98.

### Macroporosity Measurement

In order to have a MOF monolithic body with a high volumetric performance for gas storage and separation applications, it is preferable that the first and/or second MOF monolithic bodies have a low level of macropores. In other words, the first and/or second MOF monolithic bodies may have a low level of macroporosity or a low volume of macropores in proportion to the volume (i.e. envelope volume) of the first and/or second MOF monolithic bodies.

The macroporosity of the MOF monolithic bodies is determined by mercury porosimetry. Methods based on N₂ adsorption methods are suitable for micro- and mesoporosity but are unsuitable for larger macropores. Mercury porosimetry can measure macropores but cannot measure micropores or the smaller mesopores.

The mercury porosity values can be measured according to ASTM D4284-12. Suitable equipment for carrying out ASTM D4284-12 include the Micromeritics AutoPore VI 9510 from Micromeritics Corp, USA. Other suitable equipment includes the PoreMaster series from Quantachrome. Unless otherwise specified by the equipment manufacturer, the default surface tension and contact angle of mercury are taken as being 485 mN/m and 130°, respectively. In ASTM D4284-12, mercury is forced into pores under pressure. A sample size of ~ 0.2 g is preferably used. The MOF monolithic bodies are preferably fragmented and sieved between 710 microns and 250 microns, and the sieved material used.

The pressure required to force mercury into the pores of the sample is inversely proportional to the size of the pores according to the Washburn equation. It is assumed that all pores are cylindrical for the purpose of characterisation. The porosimeter increases the pressure on the mercury inside the sample holder to cause mercury to intrude into increasingly small sample pores. The AutoPore VI or other suitable equipment will automatically translate the applied pressures into equivalent pore diameters using the Washburn equation and the values of contact angle and surface tension given above.

The envelope volume may be measured using techniques based on the Archimedes principle of volume displacement. The envelope volume of the sample is determined by the volume of mercury displaced at atmospheric pressure. At atmospheric (101.325 KPa) pressure, mercury does not intrude into internal pores, just external pores. Therefore, the volume of mercury displaced by a body at 101 KPa pressure may be used as the envelope volume.

As the applied pressure is increased, mercury is forced into smaller internal pores. A pressure of 292 atmospheres (2.96 x10⁴ KPa) is sufficient to force mercury into pores of 50nm and larger. Therefore, the % level of macroporosity of a sample is the % Hg Intrusion Porosity at 2.96 x 10⁴ KPa minus the % Hg Intrusion Porosity at 101 KPa.

The volume of the MOF monolithic bodies may also be measured by hand.

### Determination of Binder Level

The level of the organic binder in a MOF monolithic body can be determined by thermo-gravimetric methods based on weight loss at elevated temperatures.

The high temperatures used (600°C) will burn off all the organic species from a sample leaving only metal oxide species behind. The difference in % weight loss between a sample of the MOF and a sample of the MOF monolithic body (MOF plus binder) can be used to determine the level of binder in that sample.

The MOF monolithic body being tested is first dried by heating to 150 °C for 1 hour to remove solvent. The body is then crushed and a sample (typically 1g) of the monolithic body material is heated up to 600 °C and the weight loss when at steady state (usually after 1 hr) is measured and normalised as a % loss and % residue. A sample of the MOF material forming the monolithic body is dried and then heated under identical conditions and the weight loss normalised as a % loss and hence giving a % residue. The % of MOF in the monolithic body is the % residue of the monolithic body divided by the % residue of the MOF material. The difference from 100% is the % level of binder.

To measure the % weight loss of binder by contact with a second solvent, samples before and after the binder removal step are tested as above. This will generate two % levels of binder - IABB% (Initial Adsorbent Body Binder %) and RBABB% (Reduced Binder Adsorbent Body Binder %).

The % loss of binder is therefore ((IABB%-RBABB%)/(IABB%))*100.

### BET Area Measurement

The BET surface area of the MOF monolithic body may be measured by use of ASTM method D3663-03 "Standard test method for surface area of catalysts and catalyst carriers". The BET surface area is determined by measuring the volume of nitrogen gas adsorbed at various low-pressure levels by the MOF monolithic body sample. Pressure differentials caused by introducing the MOF monolithic body surface area to a fixed volume of nitrogen in the test apparatus are measured and used to calculate the BET surface area. Suitable equipment for measuring the BET surface area include the 3Flex from Micromeritics Corporation, used according to the manufacturer's guidelines.

### Envelope Density

The envelope density of a body can be measured by dividing the weight of a body (in grams) by its envelope volume (in cm³). The envelope density is defined in ASTM D3766 as "the ratio of the mass of a particle to the sum of the volumes of the solid in each piece and the voids within each piece, that is, within close-fitting imaginary envelopes completely surrounding each piece". The envelope density of a body can be measured using different techniques and results are comparable. In the event of significant conflict, powder pycnometer results are preferred.

The envelope density can be measured by mercury porosimetry. At atmospheric pressure, mercury does not intrude into internal pores. Therefore, the volume of mercury displaced by a body at atmospheric pressure is the envelope volume. Dividing the weight of the sample by the envelope volume gives the envelope density. The use of mercury porosimetry is described above.

Preferably, powder pycnometers, such as the GeoPyc Model 1360 from Micrometrics Instrument Corp, can also be used to measure the envelope volumes and densities of bodies. If need be, the envelope volumes measured by these techniques can be used interchangeably with the envelope volume measured by mercury porosimetry. In case of discrepancy, powder pycnometer results are preferred.

The envelope volume may also be determined by hand for larger bodies. For example, the envelope density of an extrudate can be measured by micrometers to measure the thickness and length of the extrudate, this allowing the volume of the extrudate to be calculated. Dividing the weight of the extrudate (in grams) by the volume of the extrudate (in cm³) gives the envelope density. Manual measurement of envelope density is possible for more uniform bodies such as extrudates. Multiple measurements (> 10) should be taken and averaged to reduce experimental variability.

### Bulk Density

The bulk density (tapped density) of the composition may be determined by loading a cylinder with a weighted amount of sample and tapping at least 50 times. The resulting volume of the packed material is then determined and the bulk density is calculated by dividing the sample weight by the sample volume. The diameter of the cylinder needs to be several times (>3) greater than the average length of any extrudates to allow packing. Cylinders of containers having a diameter of about 3 cm or greater are suitable. The depth of the packed bed also needs to be greater than about 3 cm to allow packing.

Due to the size and nature of the composition, only a limited amount of tapping or movement is required to pack the bodies efficiently. Increased amounts of tapping and different intensities of tapping, such as in some standards, do not significantly change the packing density.

The tapped density may be defined by methods such as the MPIF-46, ASTM β-527 or ISO 3953 tap density methods.

### Measurement of Particle Diameter

In the context of the disclosure, the mean particle diameter will be understood by the skilled person to include the weight-based mean particle diameter or the volume-based mean particle diameter, that is an mean particle size characterised and defined from a particle size distribution by weight or volume, respectively.

As used herein, the term 'volume-based mean particle diameter' will be understood by the skilled person to include that the mean particle size is characterised and defined from a particle size distribution by volume, i.e. a distribution where the existing fraction (relative amount) in each size class is defined as the volume fraction, as measured by e.g. laser diffraction.

The mean particle diameter may refer to the "D50 particle size" volume-related cumulative distribution, wherein 50% of the particles have a diameter smaller than the D50 particle size.

The particle diameters of the second MOF monolithic bodies (i.e. bodies with a particle aspect ratio close to about 1) are measured by laser diffraction.

The D50 particles size may be measured by laser diffraction for instance using a Malvern Mastersizer 3000.

Suitable methodologies for measuring particle size and particle size distributions by laser diffraction are detailed in ISO 13320:2020.

The particle diameters of the first MOF monolithic bodies (i.e. bodies with a particle aspect ratio of about 2 or greater) are measured by dynamic image analysis, for example as described below.

### Measurement of Aspect Ratio (and Particle Diameter)

The particle aspect ratio is the ratio of the length of a particle (e.g. extrudate) to the width of the particle (e.g. extrudate).

Two methods may be used to determine the particle aspect ratio of extrudates. The particle aspect ratio of individual extrudates can be determined by manual measurement of a large number of individual extrudates using calipers. At least about 25, and preferably greater than about 50 randomly selected extrudates need to be measured to provide any statistically reliable data on a collection of bodies. However, this is very slow and laborious.

More conveniently, the (largest and smallest) particle diameters and particle aspect ratio of the extrudates (first MOF monolithic bodies) may be measured by dynamic image analysis. Suitable equipment is the Camsizer P4 from Microtrac MRB operated according to manufacturer's instructions. Such equipment has been shown to be comparable to a caliper measurement of a sample.

A sample, preferably >50 mL, is conveyed by a vibratory chute into the measurement zone where they pass in front of a planar light source in free fall. The resulting shadow projections are captured by a camera system and evaluated in real time. This allows the simultaneous measurement of the lengths and widths of the extrudates as well as their shape. The conveying along the vibratory chute helps align the extrudates for analysis.

The width of an extrudate is most conveniently defined as the smallest area bisector (*X_{Ma min}* - the smallest Martin diameter). This is viable even if the extrudate is bent or partially rounded. Extrudate length or *X_{stretch}* is conveniently defined as the square root of the product of the maximum Feret diameter (*X_{Fe max}*) squared minus the minimum Martin diameter (*X_{Ma min}*) squared. The maximum Feret diameter (*X_{Fe max}*) is the longest distance between two parallel lines touching the body projection.

The particle aspect ratio is therefore X*_{stretch}*/X*_{Ma min}.*

Equipment such as the Camsizer P4 will give a distribution of extrudate lengths (X*_{stretch}*) and widths (X*_{Ma min}*)*.* The extrudate widths will be very monodispersed. The proportion of the composition comprising the first MOF monolithic body can be determined by the proportion of the composition having an extrudate length (X*_{stretch}*) that is greater than the mean width of the extrudates multiplied by the claimed aspect ratios.

Suitable methodologies for measuring particle size and particle size distributions by dynamic image analysis are described in ISO 13322-1/2.

In the context of the disclosure, the mean particle aspect ratio will be understood by the skilled person to include the weight-based mean particle aspect ratio or the volume-based mean particle aspect ratio, that is a mean particle aspect ratio characterised and defined from a particle aspect ratio distribution by weight or volume, respectively. For example, the particle aspect ratio distribution may be a cumulative particle aspect ratio distribution, wherein the cumulative particle aspect ratio distribution is a fraction of particles (based on weight or volume) with aspect ratios less than a certain value. Preferably, the mean particle aspect ratio is a volume-based mean-particle aspect ratio.

The mean particle aspect ratio may be the "A50 aspect ratio" based on the volume-related cumulative distribution wherein 50% of the particles have an aspect ratio less than the A50 particle aspect ratio.

### Measurement of Young's Modulus and Hardness

Young's modulus and hardness may be determined by nanoindentation, for instance using an MTS Nanoindenter XP, located in an isolation cabinet to shield against thermal fluctuations and acoustic interference.

Before indentation, monolithic surfaces may be cold-mounted using an epoxy resin and polished using increasingly fine diamond suspensions. Indentations may be conducted under a dynamic displacement-controlled "continuous stiffness measurement" mode. *E* (elastic modulus) and H (hardness) mechanical properties may be determined as a function of the surface penetration depth, for example by using a 2 nm sinusoidal displacement at 45 Hz superimposed onto the system's primary loading signal, and loading and unloading strain rates set at 5x10⁻² s⁻¹. Tests may be performed to a maximum indentation depth of 1000 nm using a Berkovich (i.e. three-sided pyramidal) diamond tip of radius about 100 nm. The raw data (load-displacement curves) obtained may be analysed using the Oliver and Pharr (2004) method, and Poisson's ratio set at 0.2, in accordance with prior work on zeolitic imidazolate frameworks [Tan et al (2010)]. Data resulting from surface penetrations of less than 100 nm may be discarded due to imperfect tip-surface contacts.

### Determination of the Proportion of First and Second MOF monolithic bodies in a Composition

This can be most easily determined by sieving a composition using a mesh size equal to the width of the first MOF monolithic bodies or the next smallest Tyler or US mesh.

Certain embodiments of the disclosure will be further described in the following non-limiting examples:

### Example 1

A composition comprising UiO-66-NH₂ was prepared from the first and second MOF monolithic bodies as described herein, wherein the metal ion of the MOF was Zr and the organic linker of the MOF was 2-aminoterephthalate. 1 litre of a reaction mix comprising MOF (UiO-66-NH₂) crystallites having a mean particle size of less than 900 nm dispersed in a reaction solvent comprising water and a having a solids content of 10% was prepared by methods described in the literature.

The sample was divided into four equal aliquots and each aliquot was centrifuged in a Jeol JR15 for 15 minutes at 5250 g.

The supernatant liquid was poured off from each sample flask leaving a wet layer of solid at the bottom of the flask. 250g of methanol was then added to each flask and the sample was agitated to redisperse and wash the crystallites.

The flasks were then re-centrifuged for 40 minutes at 5250 g to form a thick solid layer (the wet framework mass) comprising MOF, methanol and any residual reactants/solvents from the reaction mix. The solid layer was analysed to have a solids content of 27.5%.

280g of the solid layer was then mixed with 280g of a 2.6 wt% aqueous solution of methylcellulose to form a wet binder mass.

The level of the solvent was reduced by stirring the wet binder mass in a Kenwood kitchen stand. 5 g of pre-dried and milled UiO-66-NH₂ powder was also added to thicken the mix. The material was a very thick paste.

The undried binder mass was then extruded through a hand spaghetti maker having orifices of 2 mm diameter. The extrudates could be extruded without sticking to each other and were slowly dried at ambient conditions to give extrudates with an average width (thickness) of 1.8 mm. Samples of the extrudates were manually cut into separate fractions having lengths of ~ 4 - 5mm and ~7 - 8mm.

The extrudates were then allowed to dry further at ambient conditions (21 °C) for 24 hours and formed hard, robust extrudates. A total of 71 g of cut extrudates were collected with approximately equal quantities of each length.

20 g of each fraction were then placed in 1000 ml of methanol (second solvent) for 48 hours to remove part of the binder. This was repeated with fresh methanol. The washed extrudates were removed from the methanol and allowed to dry under ambient conditions to give two size fractions of reduced binder MOF monolithic bodies. These extrudate fractions were later combined in equal proportions by weight to form the first MOF monolithic bodies.

Approx 8 g of each fraction were then removed and combined together. The combined mix was then ground in a pestle and mortar and sieved between a 500 micron and 250 micron screen sieve. These were the second MOF monolithic bodies.

The first and second MOF monolithic bodies were then activated by being heated to 105 °C in a vacuum oven for 12 hours to give the final adsorbent bodies.

The first MOF monolithic bodies were measured to have a macroporosity of 9.0% by mercury porosimetry, a MOF content of 95.1%, an envelope density of 0.55 g/cm³ (hence a relative density of 0.43) and a BET area of 928 m²/g. This would have been the same for the second MOF monolithic body. Vigorous shaking the first MOF monolithic body did not create any visible dust.

The first and second MOF monolithic bodies were then combined to form the composition comprising 78 wt% of the first MOF monolithic body and 22 wt % of the second MOF monolithic body. This was prepared as a packed bed.

The composition comprised first MOF monolithic bodies and second MOF monolithic bodies, wherein the largest particle diameter (particle length) of the first MOF monolithic body was from about 4 mm to about 8 mm and the largest particle diameter of the second MOF monolithic body was 0.5 mm or less.

A comparative sample was also prepared comprising only a first MOF monolithic body, wherein the largest particle diameter (particle length) of the first MOF monolithic body was from about 4 mm to about 8 mm. The comparative sample was prepared as a packed bed.

The bulk density of the composition comprising at least the first and second MOF monolithic bodies was compared to the comparative sample comprising only the first MOF monolithic body by measuring the bulk density of the samples.

The composition comprising the first and second MOF monolithic bodies displayed about a 29% higher bulk density compared to the comparative sample comprising only the first MOF monolithic body (Table 1).

**Table 1. Packing density of compositions prepared with either first and second MOF monolithic bodies or only with a first MOF monolithic body.**

| **Packing efficiency of compositions (UiO-66-NH₂)** | |
|---|---|
| **Composition** | **Bulk density** |
| With the first and second MOF monolithic bodies | 0.36 g/cm³ |
| With only the first MOF monolithic body | 0.28 g/cm³ |

### Example 2

A HKUST-1 composition comprising first and second MOF monolithic bodies as described herein was prepared. The MOF of the first and second MOF monolithic bodies was HKUST-1, wherein the metal ion of the MOF was Cu and the organic linker of the MOF was benzene-1,3,5-tricarboxylate.

The first MOF monolithic body was prepared via extrusion using HKUST-1 as the MOF and methyl cellulose as a binder. HKUST-1 was synthesised by the protocols described in the literature and supplied as a 25% aqueous slurry. Methyl cellulose binder was then added as a solution and the mixture partially dried. The partially dried material was then extruded through a Caleva extruder with a die-plate with 3 mm holes to form extrudate strands. The extrudates were cut to different lengths, further dried and then washed in solvent to remove excess binder. The extrudates were then further dried. On testing the extrudates were found to have a macroporosity of 11.1%, a composition of 94% MOF and an average particle width of 2.9 mm.

The aspect ratio of the extrudates comprising the first MOF monolithic body was from about 3.5 to about 5 (as measured by using hand calipers). The extrudates were packed into a cylinder of known volume with tapping. After 1 min of tapping, the bulk density of the first MOF monolithic body was measured at 0.58 g/cm³.

The second MOF monolithic body was prepared as follows. The partially dried HKUST-1 binder paste from above was spread on a tray and dried at ambient conditions for 2 days. The solid material was then milled in a Retsch cutting mill and sieved to give a fraction between 0.85 mm and 0.45 mm. This was used as the second MOF monolithic body.

The second MOF monolithic body particles had a particle diameter of less than about 0.9 mm and a particle aspect ratio of about 1.

A blend of the first and second MOF monolithic bodies was prepared to provide the HKUST-1 composition comprising about 71.5 wt% of first MOF monolithic body and about 28.5 wt% of second MOF monolithic body. The particles were packed into a cylinder of known volume with tapping. After 1 min of tapping, the bulk density of the HKUST-1 composition comprising the first and second MOF monolithic bodies was measured at 0.73 g/cm³.

The composition comprising the first and second MOF monolithic bodies displayed a 25.8% increase in bulk density compared to the comparative sample comprising only the first MOF monolithic body (Table 2). This may be attributed to the increase in available external surface area of the composition due to the increase in bulk density and increase in external area per unit mass.

**Table 2. Packing density of compositions prepared with either first and second MOF monolithic bodies or only with a first MOF monolithic body, wherein the MOF was HKUST-1.**

| **Packing efficiency of compositions (HKUST-1)** | |
|---|---|
| **Composition** | **Bulk density** |
| With the first and second MOF monolithic bodies | 0.73 g/cm³ |
| With only the first MOF monolithic body | 0.58 g/cm³ |

### Comparative Example 1

A comparative HKUST-1 composition was prepared from the first MOF monolithic body comprising HKUST-1 as described above in Example 2, and a conventional MOF monolithic body comprising HKUST-1.

The conventional MOF monolithic body had the same composition as the first MOF monolithic body comprising HKUST-1, but the particle aspect ratio of the conventional MOF monolithic body had a range of from about 1.5 to about 3.5 (as measured by using hand calipers). The particles were packed into a cylinder of known volume with tapping. After 1 min of tapping, the bulk density of the conventional MOF monolithic body was measured at 0.63 g/cm³, indicating only a minor increase in bulk density compared to the first MOF monolithic body comprising HKUST-1 having a particle aspect ratio of 3.5 to 5.

The comparative composition was prepared by combining a 50:50 mixture of the first MOF monolithic body comprising HKUST-1 and the conventional MOF monolithic body comprising HKUST-1. The bulk density of the comparative HKUST-1 composition was about 0.62 g/cm³.

This indicates that this combination of monolithic bodies does not lead to a significant improvement in the packing efficiency. Since the conventional MOF monolithic bodies have a particle aspect ratio of from about 1.5 to 3.5, they are not able to pack efficiently around the extrudates having a larger aspect ratio (3.5 to 5).

### Comparative Example 2

A comparative HKUST-1 composition was prepared from the first MOF monolithic body comprising HKUST-1 as described above in Example 2 (i.e. with a diameter of about 2.9 mm), and a narrow MOF monolithic body comprising HKUST-1, but wherein the particle width of the narrow MOF monolithic body was about 0.9 mm and the particle length of the narrow MOF monolithic body was up to about 10 mm.

The narrow MOF monolithic body comprising HKUST-1 had the same composition as the first MOF monolithic body comprising HKUST-1. The narrow MOF monolithic bodies were much thinner than the extrudates of the first MOF monolithic body. In particular, the particle length of the narrow MOF monolithic bodies were considerably longer than the particle width of the first MOF monolithic bodies.

The comparative composition was prepared by combining a 2.5:1 mixture of the first MOF monolithic body and the narrow MOF monolithic body. The particles were packed into a cylinder of known volume with tapping. After 1 min of tapping, the bulk density of the comparative composition was measured at 0.59 g/cm³.

This indicates that this combination of monolithic bodies does not lead to a significant improvement in the packing efficiency or an increase in bulk density. Despite the narrow MOF monolithic bodies having a smaller particle width compared to the first MOF monolithic body, they are not able to pack efficiently around the extrudates having a larger aspect ratio (3.5 to 5).

### Example 3

A UTSA-16 composition comprising first and second MOF monolithic bodies as described herein was prepared. The MOF of the first and second MOF monolithic bodies was UTSA-16, wherein the metal ion of the MOF was Co and the organic linker of the MOF was citrate.

The first MOF monolithic body was prepared via extrusion using ZU-301 as the MOF and methyl cellulose as a binder. UTSA-16 was synthesised by the protocols described in the literature and supplied as a 27% aqueous slurry. Methyl cellulose binder was then added as a solution and the mixture partially dried at ambient conditions to form a deformable solid. The partially dried material was then extruded through a Caleva extruder with a die-plate with 3 mm holes to form extrudate strands. The extrudates were cut to different lengths and further dried. The extrudates were then further dried. On testing the extrudates were found to have a macroporosity of 9.1%, a composition of 95% MOF and an average particle width of 2.85 mm.

The aspect ratio of the extrudates comprising the first MOF monolithic body was from about 2 to about 3.6 (as measured by using hand calipers). The extrudates were packed into a cylinder of known volume with tapping. After 1 min of tapping, the bulk density of the first MOF monolithic body was measured at 0.88 g/cm³.

The second MOF monolithic body was prepared as follows. The partially dried UTSA-16 and binder material was further dried at ambient conditions until there was no further weight loss. The hard, solid material was then milled in a Retsch cutting mill and sieved to give a fraction between 0.85 mm and 0.45 mm. This was used as the second MOF monolithic body.

A blend of the first and second MOF monolithic bodies was prepared to provide a first UTSA-16 composition comprising 2.5:1 ratio of first to second MOF monolithic body (i.e. 71.5 wt% of first MOF monolithic body and 28.5 wt% of second MOF monolithic body). The particles were packed into a cylinder of known volume with tapping. After 1 min of tapping, the bulk density of the first UTSA-16 composition comprising the first and second MOF monolithic bodies was measured at 1.03 g/cm³.

A blend of the first and second MOF monolithic bodies was prepared to provide a second UTSA-16 composition comprising 1.64:1 ratio of first to second MOF monolithic body (i.e. 62 wt% of first MOF monolithic body and 38 wt% of second MOF monolithic body). The particles were packed into a cylinder of known volume with tapping. After 1 min of tapping, the bulk density of the second UTSA-16 composition comprising the first and second MOF monolithic bodies was measured at 1.10 g/cm³.

A blend of the first and second MOF monolithic bodies was prepared to provide a third UTSA-16 composition comprising 1.23:1 ratio of first to second MOF monolithic body (i.e. 55 wt% of first MOF monolithic body and 45 wt% of second MOF monolithic body). The particles were packed into a cylinder of known volume with tapping. After 1 min of tapping, the bulk density of the third UTSA-16 composition comprising the first and second MOF monolithic bodies was measured at 1.08 g/cm³.

This indicates that improvements in bulk density are obtained for a range of different first and second MOF monolithic body ratios (Table 3).

**Table 3. Packing density of compositions prepared with first and second MOF monolithic bodies having different ratios of the first and second bodies, or only with a first MOF monolithic body, wherein the MOF was UTSA-16.**

| **Packing efficiency of compositions (UTSA-16)** | |
|---|---|
| **Composition** | **Bulk density** |
| First and second MOF monolithic bodies (2.5:1) | 1.03 g/cm³ |
| First and second MOF monolithic bodies (1.64:1) | 1.10 g/cm³ |
| First and second MOF monolithic bodies (1.23:1) | 1.08 g/cm³ |
| With only the first MOF monolithic body | 0.88 g/cm³ |

### Example 4

A ZU-301 composition comprising first and second MOF monolithic bodies as described herein was prepared. The MOF of the first and second MOF monolithic bodies was ZU-301, wherein the metal of the MOF was Zn and the organic linkers of the MOF were oxalate and 3-methyl-1H-1,2,4-triazole.

The first MOF monolithic body was prepared via extrusion using ZU-301 as the MOF and PVA as a binder. ZU-301 was synthesised by the protocols described in the literature and supplied as a 25% aqueous slurry after washing and concentration steps. A 50:50 mixture of PVA and methyl cellulose binder was then added as a powder mix and blended with agitation. The resulting mixture was partially dried at ambient conditions to form a deformable solid in a similar manner to other samples. The partially dried material was then extruded through a Caleva extruder with a die-plate having 3 mm holes to form extrudate strands. The extrudates were cut to different lengths and further dried and solvent washed in methanol, followed by further drying. On testing the extrudates were found to have a macroporosity of 12.9%, a composition of 92% MOF and an average particle width of 2.88 mm.

The aspect ratio of the extrudates comprising the first MOF monolithic body was from about 2.5 to about 4.8 (as measured by using hand calipers). The extrudates were packed into a cylinder of known volume with tapping. After 1 min of tapping, the bulk density of the first MOF monolithic body was measured at 0.76 g/cm³.

The second MOF monolithic body was prepared as follows. The ZU-301 extrudates as prepared above were milled in a Retsch cutting mill and sieved to give a fraction between 0.85 mm and 0.45 mm. This was used as the second MOF monolithic body.

A blend of the first and second MOF monolithic bodies was prepared to provide a ZU-301 composition comprising 3.5:1 ratio of first to second MOF monolithic body (i.e. 77.5 wt% of first MOF monolithic body and 22.5 wt% of second MOF monolithic body). The particles were packed into a cylinder of known volume with tapping. After 1 min of tapping, the bulk density of the ZU-301 composition comprising the first and second MOF monolithic bodies was measured at 0.89 g/cm³.

The composition comprising the first and second MOF monolithic bodies displayed an increase in bulk density compared to the comparative sample comprising only the first MOF monolithic body (Table 4).

**Table 2. Packing density of compositions prepared with either first and second MOF monolithic bodies or only with a first MOF monolithic body, wherein the MOF was ZU-301.**

| **Packing efficiency of compositions (ZU-301)** | |
|---|---|
| **Composition** | **Bulk density** |
| With the first and second MOF monolithic bodies | 0.89 g/cm³ |
| With only the first MOF monolithic body | 0.76 g/cm³ |

### Example 5

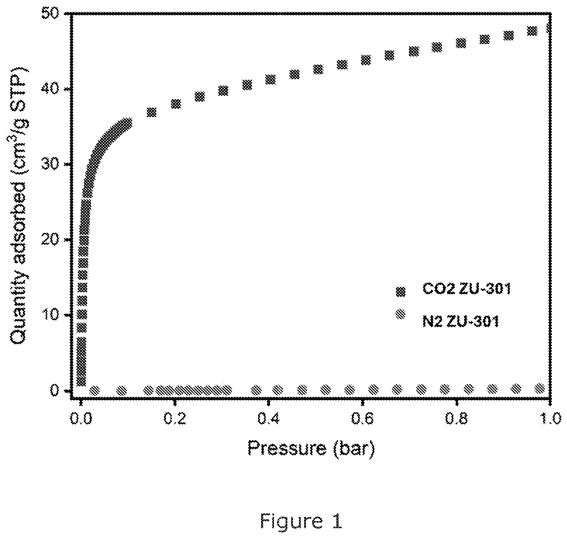

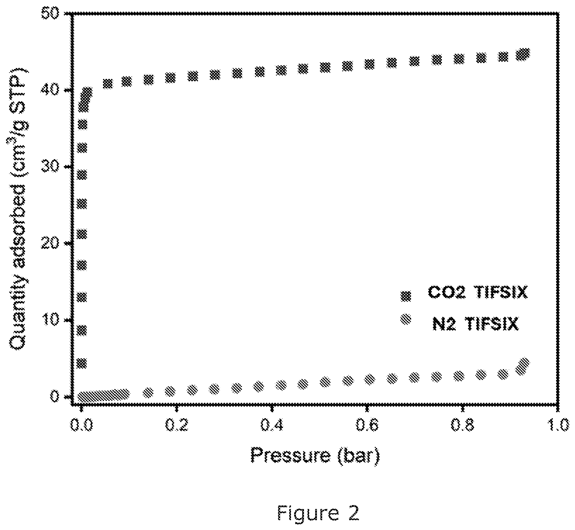

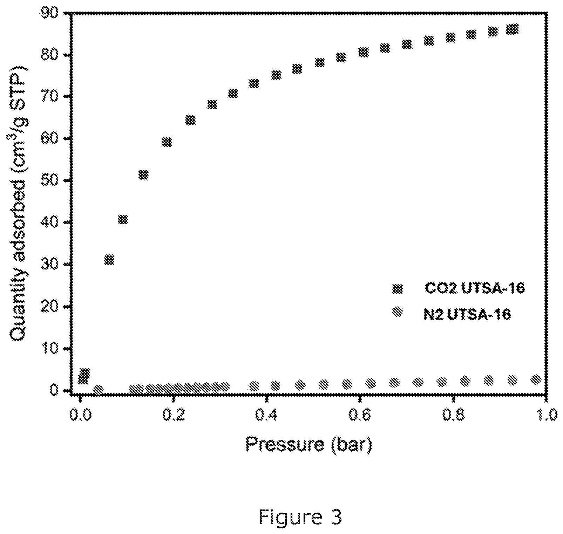

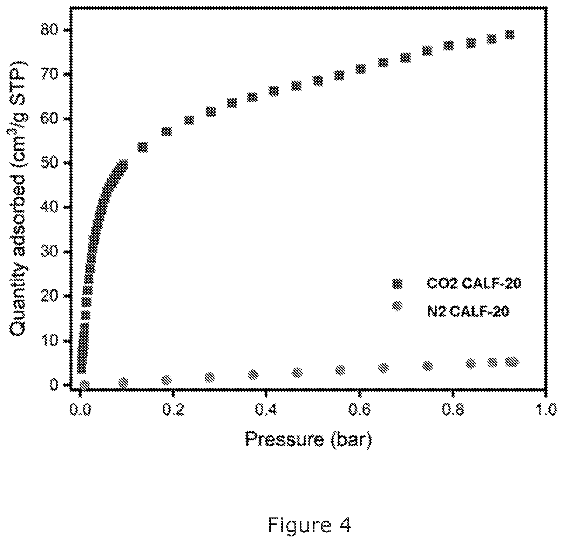

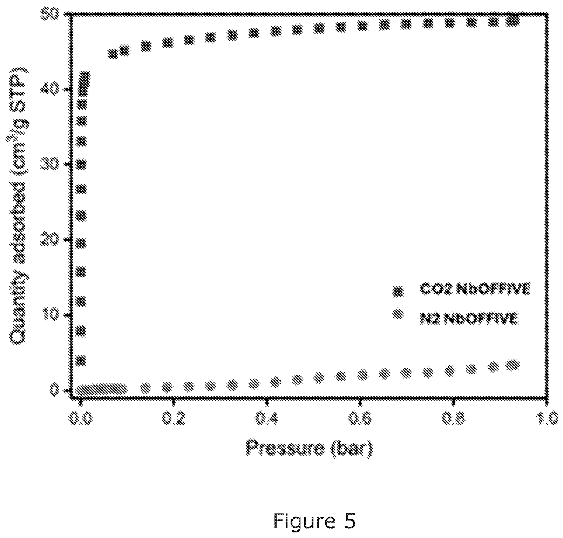

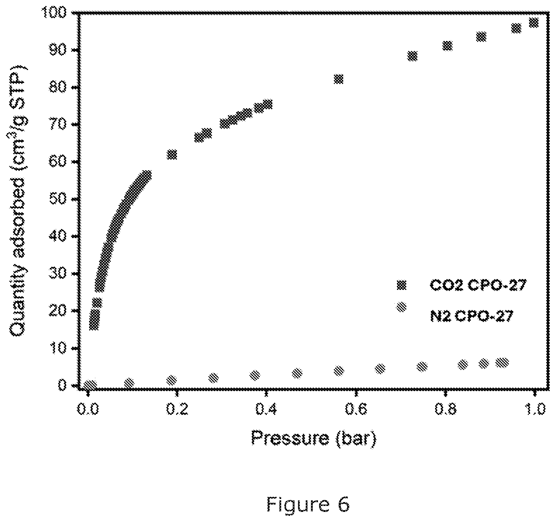

CO₂ and N₂ adsorption isotherms were performed at 20 °C on selected MOFs, and the results are shown in Figures 1 to 6. This demonstrates the excellent performance for these MOFs as CO₂ capture materials.

### Example 6

The kinetics of gas adsorption into MOF monolithic bodies and compositions was studied. The kinetics of gas adsorption will be a function of the external surface area of the MOF monolithic body and the diffusion coefficient of the gas through the MOF monolithic body.

The use of larger MOF extrudates, whilst being practical to make at scale, can have reduced kinetics of adsorption compared to smaller MOF extrudates. However, small MOF extrudates are impractical to produce on an industrial scale as described herein.

The rate of initial gas adsorption is of particular importance for a practical adsorption system, since practical industrial systems typically do not operate under equilibrium conditions due to the long times that would be required.

Therefore, in order to characterise the kinetics of adsorption for MOF monolithic bodies with different dimensions, DVS testing (at 20 °C) was carried out by performing a CO₂ adsorption isotherm using CO₂ levels of 5% (i.e. 50,000 ppm CO₂), 10%, 20%, 30% and 40%, and the time taken for the sample to reach a CO₂ uptake of 5% was measured.

A first MOF monolithic body comprising ZU-301 (referred to as a long extrudate), similar to that of Example 4 (with a particle width of 2.9 mm, a particle length of 7.2 mm and a particle aspect ratio of 2.5), was prepared.

A comparative monolithic body comprising ZU-301 (referred to as a short extrudate) was prepared similar to the long extrudate but having a particle width of 2.9 mm, a particle length of 2.4 mm and a particle aspect ratio of 0.83. Such monolithic body would not be practical to produce due to the short particle length and low aspect ratio.

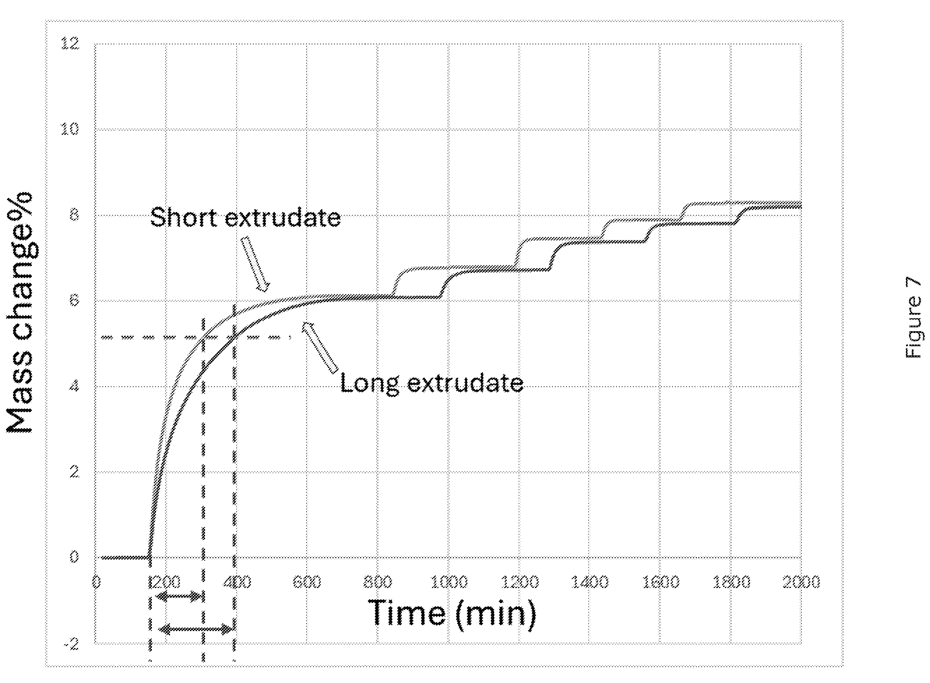

Figure 7 shows the kinetics of adsorption for CO₂ uptake for the long extrudates and short extrudates. This shows that the short extrudates took 150 minutes to reach a CO₂ uptake of 5%, in contrast to the long extrudates which took 237 minutes.

A second MOF monolithic body comprising ZU-301 was prepared by grinding and sieving the first MOF monolithic body extrudates to give a fraction between 1 mm and 1.5 mm.

These second MOF monolithic bodies only took 28 minutes to reach a CO₂ loading of 5%. Furthermore, the smaller, second MOF monolithic bodies of Example 4 were tested (i.e. those sieved to give a fraction between 0.85 mm and 0.45 mm), which only took 7 minutes to reach an uptake of 5% CO₂ and rapidly reached 6.1% loading during the first cycle. Despite the favourable gas uptake properties, a composition comprising only these second MOF monolithic bodies would be impractical and expensive to produce on a large scale due to the high levels of grinding and sieving required, and the amount of fine particles that would be produced and require recycling.

This indicates that the composition of Example 4 (i.e. having 77.5 wt% of the first MOF monolithic body and 22.5 wt% of the second MOF monolithic body) would have an increased volumetric capacity, not only due to the higher bulk density but also a further and complementary increase in the initial rate of adsorption.

For instance, based on the data above, the composition of Example 4 would be estimated to reach a 5 wt% loading of CO₂ in about 188 minutes, which is significantly faster than the time required for the first MOF monolithic body alone (i.e. 237 minutes). This is approximately a 20% reduction in cycle time, in combination with a capacity increase of between 10 to 20% per cycle due to the increased bulk density. Since these capacity improvements are additive, such compositions of the invention could reasonably be expected to give an increase in overall capacity of about 30% per day compared to comparative samples.

Unless otherwise indicated, all technical and scientific terms used herein have the same meaning as commonly understood by one of ordinary skill in the art to which this invention pertains.

As used herein, the term "comprises" will take its usual meaning in the art, namely indicating that the component includes but is not limited to the relevant features (i.e. including, among other things). As such, the term "comprises" will include references to the component consisting essentially of the relevant substance(s).

As used herein, unless otherwise specified the terms "consists essentially of" and "consisting essentially of" will refer to the relevant component being formed of at least 80% (e.g. at least 85%, at least 90%, or at least 95%, such as at least 99%) of the specified substance(s), according to the relevant measure (e.g. by weight thereof). The terms "consists essentially of" and "consisting essentially of" may be replaced with "consists of" and "consisting of", respectively.

For the avoidance of doubt, the term "comprises" will also include references to the component "consisting essentially of" (and in particular "consisting of") the relevant substance(s).

Wherever the word 'about' is employed herein in the context of amounts, for example absolute amounts, weights, volumes, sizes, diameters etc., or relative amounts (e.g. percentages) of individual constituents in a composition or a component of a composition (including concentrations and ratios), timeframes, and parameters such as temperatures etc., it will be appreciated that such variables are approximate and as such may vary by ±10%, for example ±5% and preferably ±2% (e.g. ±1%) from the actual numbers specified herein. This is the case even if such numbers are presented as percentages in the first place (for example 'about 10%' may mean ±10% about the number 10, which is anything between 9% and 11%).'

## Claims

1. A composition comprising at least two MOF monolithic bodies, wherein the composition comprises at least about 50 wt% of a first MOF monolithic body based on the total weight of the solid composition; wherein the first MOF monolithic body comprises:
an organic binder; and
at least about 80 wt% MOF based on the total weight of the solid first MOF monolithic body;
wherein the first MOF monolithic body has a volume of macropores of about 15% or less of the envelope volume of the first MOF monolithic body, a particle aspect ratio of about 2 or greater and a particle width of greater than or equal to about 1 mm, and
wherein a second MOF monolithic body comprises:
a binder; and
MOF;
wherein the second MOF monolithic body has a particle aspect ratio of about 1,
wherein the first MOF monolithic body has a higher particle aspect ratio than the second MOF monolithic body,
wherein the second MOF monolithic body has a particle diameter about equal to or less than the particle width of the first MOF monolithic body,
wherein the particle aspect ratio is defined as the ratio of the particle length to the particle width,
wherein the particle width, particle length and particle aspect ratio of the first MOF monolithic body are measured by dynamic image analysis,
wherein the particle diameter of the second MOF monolithic body is measured by laser diffraction,
wherein the envelope volume is defined as the volume of mercury displaced by the first MOF monolithic body at atmospheric pressure (101.325 kPa), and
wherein the volume of macropores is determined by mercury porosimetry.

2. The composition according to Claim 1, wherein the binder of the second MOF monolithic body is an organic binder, optionally wherein the organic binder of the first and/or second MOF monolithic body is an organic polymeric binder.

3. The composition according to Claim 1 or Claim 2, wherein:
(a) the second MOF monolithic body comprises at least about 50 wt% MOF, based on the total weight of the solid second MOF monolithic body, optionally wherein the second MOF monolithic body comprises at least about 80 wt% of MOF and up to about 20 wt% of binder; and/or
(b) the composition comprises from about 50 to about 99.9 wt% of the first MOF monolithic body and/or from about 0.1 to about 50 wt% of the second MOF monolithic body, based on the total weight of the solid composition.

4. The composition according to any one of Claims 1 to 3, wherein:
(a) the first MOF monolithic body has a volume of macropores of about 13% or less, of the envelope volume of the first MOF monolithic body and/or wherein second MOF monolithic body has a volume of macropores of about 13% or less of the envelope volume of the second MOF monolithic body;
(b) the composition has a bulk density, as measured by ASTM B-527, of from about 0.3 to about 1.5 g/cm³, and/or wherein the first MOF monolithic body and/or the second MOF monolithic body has an envelope density of from about 0.4 to about 2 g/cm³ and/or wherein the first MOF monolithic body and/or the second MOF monolithic body has a relative density of from about 0.3 to about 1.3,
wherein the envelope density is measured by dividing the weight of the MOF monolithic body by its envelope volume, and
wherein the relative density is defined as the ratio of the envelope density of the MOF monolithic body compared to the crystal density of the MOF, wherein the crystal density of the MOF is the theoretical density of a single MOF crystal; and/or (c) the first MOF monolithic body and/or the second MOF monolithic body has a microporosity of from about 40% to about 75%, based on the total pore volume, as determined by ASTM D4641-17, and/or wherein the first MOF monolithic body and/or the second MOF monolithic body has a BET surface area of from about 0 to about 2,500 m²/g, as measured by N₂ sorption at 77 K.

5. The composition according to any one of Claims 1 to 4, wherein:
(a) the particle aspect ratio of the first MOF monolithic body is from about 2 to about 7; and/or
(b) the first MOF monolithic body has a particle length of from about 2 to about 35 mm, and/or wherein the first MOF monolithic body has a particle width of from about 1 to about 5 mm, and/or wherein the particle diameter of the second MOF monolithic body is from about 20 µm to about 3 mm.

6. The composition according to any one of Claims 1 to 5, wherein the composition further comprises a gas selected from hydrogen, carbon dioxide, methane, krypton, and mixtures thereof.

7. The composition according to any one of Claims 1 to 6, wherein:
(a) the first and second MOF monolithic bodies comprise the same MOF and/or the same binder;
(b) the MOF of the first and/or second MOF monolithic bodies is independently selected from a MOF comprising a metal ion selected from a transition metal, Si, Mg, Al, and mixtures thereof; and/or
(c) the MOF of the first and/or second MOF monolithic bodies is independently selected from a MOF comprising an organic linker comprising a carboxylic acid, such as a dicarboxylic acid, a tricarboxylic acid and/or a tetracarboxylic acid, an azine, such as a diazine, an azole, such as an imidazole and/or a triazole, and mixtures thereof.

8. The composition according to any one of Claims 1 to 7, wherein the MOF of the first and/or second MOF monolithic body is independently selected from HKUST-1, ZIF-8, MOF-808, ZU-301, UiO-66, UTSA-16, CALF-20, TIFSIX-3-Ni, NbOFFIVE-1-Ni, UiO-66-NH₂, MOF-74/CPO-27, MOF-74-Mg/CPO-27-Mg, SIFSIX, Al fumarate, and mixtures thereof.

9. The composition according to Claims 7 or 8, selected from compositions in which:
(a) the gas comprises hydrogen and the first and/or second MOF monolithic body comprises a MOF independently selected from HKUST-1, ZIF-8, MOF-808, ZU-301, UiO-66, and mixtures thereof;
(b) the gas comprises carbon dioxide and first and/or second MOF monolithic body comprises a MOF independently selected from UTSA-16, CALF-20, ZU-301, TIFSIX-3-Ni, NbOFFIVE-1-Ni, UiO-66-NH₂, and mixtures thereof; and
(c) the gas comprises methane and the first and/or second MOF monolithic body comprises HKUST-1.

10. A method of making the composition according to any one of Claims 1 to 9 comprising the steps of:
a. providing a wet binder MOF mass comprising:
i. MOF;
ii. from about 50 wt% to about 95 wt% of a first solvent based on the total weight of the wet binder MOF mass; and
iii. organic binder wherein the binder may be added as a solution, a dispersion, a powder, or a mixture thereof;
b. optionally reducing the proportion of the first solvent in the wet binder MOF mass to provide an undried binder MOF mass;
c. extruding and cutting the wet binder MOF mass or the undried binder MOF mass to provide a first undried MOF monolithic body having a particle aspect ratio of about 2 or greater;
d. removing at least some of the remaining first solvent from the first undried MOF monolithic body to provide a first dried MOF monolithic body;
e. optionally adding a second solvent to the first dried MOF monolithic body so as to remove at least part of any residual first solvent, at least part of any unreacted reactants and at least part of the organic binder from the first dried MOF monolithic body to provide an optional first reduced binder MOF monolithic body;
f. optionally removing at least some of the second solvent from the optional first reduced binder MOF monolithic body to provide an optional first unactivated MOF monolithic body;
g. activating the first dried MOF monolithic body or optional first unactivated MOF monolithic body by subjecting the first dried MOF monolithic body or optional first unactivated MOF monolithic body to a temperature of about 100 °C or greater to provide a first MOF monolithic body; and
h. combining the first MOF monolithic body with a second MOF monolithic body to provide a composition, wherein the second MOF monolithic body is as defined according to any one of Claims 1 to 9.

11. A method of making the composition according to any one of Claims 1 to 9 comprising the steps of:
I. forming a wet MOF reaction mass by contacting together MOF precursor materials and reaction solvent, wherein the wet MOF reaction mass comprises:
i. from about 20% to about 70%, or from about 30 wt% to about 60 wt%, or from about 40% to about 50% of a MOF, based on the total weight of the wet MOF reaction mass;
ii. from about 3% to about 50%, from about 8% to about 40%, or from about 10% to about 30% unreacted MOF precursors by weight of the MOF in the wet MOF reaction mass; and
iii. from about 10 wt% to about 70 wt%, preferably from about 10% to about 60%, preferably from about 10% to less than about 50%, reaction solvent by weight of the wet MOF reaction mass;
II. contacting the wet MOF reaction mass with an organic binder to provide a wet binder MOF mass;
III. optionally reducing the proportion of the reaction solvent in the wet binder MOF mass to provide an undried binder MOF mass;
IV. extruding and cutting the wet binder MOF mass or the undried binder MOF mass to provide a first undried MOF monolithic body having a particle aspect ratio of about 2 or greater;
V. removing at least some of the remaining solvent from the first undried MOF monolithic body to provide a first dried MOF monolithic body;
VI. optionally contacting the first dried MOF monolithic body with a washing solvent so as to remove at least part of the residual reaction solvent, at least part of any unreacted reactants and/or at least part of the organic binder from the first dried MOF monolithic body to provide an optional first reduced binder MOF monolithic body;
VII. optionally removing at least some of the washing solvent from the optional first reduced binder MOF monolithic body to provide an optional first unactivated MOF monolithic body;
VIII. activating the first dried MOF monolithic body or optional first unactivated MOF monolithic body by subjecting the first dried MOF monolithic body or optional first unactivated MOF monolithic body to a temperature of about 100 °C or greater to provide a first MOF monolithic body; and
IX. combining the first MOF monolithic body with a second MOF monolithic body to provide a composition, wherein the second MOF monolithic body is as defined according to any one of Claims 1 to 9,
wherein the unreacted MOF precursors refer to unreacted material that is used to prepare the MOF.

12. The method according to Claims 10 or 11, wherein the method further comprises one of more steps to provide a second MOF monolithic body for use in step (h) or step (IX), wherein the steps comprise:
grinding some of the first dried MOF monolithic body to provide a second dried MOF monolithic body, wherein the second dried MOF monolithic body has a particle diameter about equal to or less than the particle width of the dried first MOF monolithic body, and
activating the second dried MOF monolithic body by subjecting the second dried MOF monolithic body to a temperature of greater than about 100 °C to provide a second MOF monolithic body; and/or
grinding some of the optional first reduced binder MOF monolithic body to provide an optional second reduced binder MOF monolithic body, wherein the optional second reduced binder MOF monolithic body has a particle diameter about less than or equal to the particle width of the optional first reduced binder MOF monolithic body,
removing at least some of the second solvent or washing solvent from the optional second reduced binder MOF monolithic body to provide an optional second unactivated MOF monolithic body, and
activating the optional second unactivated MOF monolithic body by subjecting the optional second unactivated MOF monolithic body to a temperature of greater than about 100 °C to form the second MOF monolithic body.

13. A method of making the composition according to any one of Claims 1 to 9 comprising the steps of:
1. providing a wet binder MOF mass comprising:
i. MOF;
ii. from about 50 wt% to about 95 wt% of a first solvent based on the total weight of the wet binder MOF mass; and
iii. organic binder wherein the binder may be added as a solution, a dispersion, a powder, or a mixture thereof;
2. optionally reducing the proportion of the first solvent in the wet binder MOF mass to provide an undried binder MOF mass;
3. extruding and cutting the wet binder MOF mass or the undried binder MOF mass to provide a first undried MOF monolithic body having a particle aspect ratio of about 2 or greater;
4. removing at least some of the remaining first solvent from the first undried MOF monolithic body to provide a first dried MOF monolithic body;
5. grinding some of the first dried MOF monolithic body to provide a second dried MOF monolithic body, wherein the second dried MOF monolithic body has a particle diameter about equal to or less than the particle width of the first dried MOF monolithic body;
6. optionally adding a second solvent to the first and second dried MOF monolithic bodies so as to remove at least part of any residual first solvent, at least part of any unreacted reactants and at least part of the organic binder from the first and second dried MOF monolithic bodies to provide optional first and second reduced binder MOF monolithic bodies;
7. optionally removing at least some of the second solvent from the optional first and second reduced binder MOF monolithic bodies to provide optional first and second unactivated MOF monolithic bodies; and
8. activating the first and second dried MOF monolithic bodies or optional first and second unactivated MOF monolithic bodies by subjecting the first and second dried MOF monolithic bodies or optional first and second unactivated MOF monolithic bodies to a temperature of greater than about 100 °C to provide a composition comprising a first MOF monolithic body and a second MOF monolithic body, wherein the second MOF monolithic body is as defined according to any one of Claims 1 to 9; or
1. providing a wet MOF reaction mass according to Claim 11 and contacting the wet MOF reaction mass with an organic binder to provide a wet binder MOF mass;
2. optionally reducing the proportion of the reaction solvent in the wet binder MOF mass to provide an undried binder MOF mass;
3. extruding and cutting the wet binder MOF mass or the undried binder MOF mass to provide a first undried MOF monolithic body having a particle aspect ratio of about 2 or greater;
4. removing at least some of the remaining solvent from the first undried MOF monolithic body to provide a first dried MOF monolithic body;
5. grinding some of the first dried MOF monolithic body to provide a second dried MOF monolithic body, wherein the second dried MOF monolithic body has a particle diameter about equal to or less than the particle width of the first dried MOF monolithic body;
6. optionally adding a second solvent to the first and second dried MOF monolithic bodies so as to remove at least part of any residual reaction solvent, at least part of any unreacted reactants and at least part of the organic binder from the first and second dried MOF monolithic bodies to provide optional first and second reduced binder MOF monolithic bodies;
7. optionally removing at least some of the second solvent from the optional first and second reduced binder MOF monolithic bodies to provide optional first and second unactivated MOF monolithic bodies; and
8. activating the first and second dried MOF monolithic bodies or optional first and second unactivated MOF monolithic bodies by subjecting the first and second dried MOF monolithic bodies or optional first and second unactivated MOF monolithic bodies to a temperature of greater than about 100 °C to provide a composition comprising a first MOF monolithic body and a second MOF monolithic body, wherein the second MOF monolithic body is as defined according to any one of Claims 1 to 9.

14. A gas storage vessel comprising a composition according to any one of Claims 1 to 9.

15. Use of a gas storage vessel according to Claim 14, or a composition according to any one of Claims 1 to 9, for the uptake, storage and/or release of a gas, optionally wherein the gas comprises hydrogen, carbon dioxide, methane or krypton or a mixture thereof.

16. The use according to Claim 15, wherein:
(a) the gas comprises hydrogen and the first and/or second MOF monolithic body comprises a MOF selected from HKUST-1, ZIF-8, MOF-808, ZU-301, UiO-66, and mixtures thereof; and/or
(b) the gas comprises carbon dioxide and first and/or second MOF monolithic body comprises a MOF selected from UTSA-16, CALF-20, ZU-301, TIFSIX-3-Ni, NbOFFIVE-1-Ni, UiO-66-NH₂, and mixtures thereof; and/or
(c) the gas comprises methane and the first and/or second MOF monolithic body is HKUST-1.

## Patentansprüche

1. Zusammensetzung, umfassend mindestens zwei monolithische MOF-Körper, wobei die Zusammensetzung mindestens etwa 50 Gew.-% eines ersten monolithischen MOF-Körpers, bezogen auf das Gesamtgewicht der festen Zusammensetzung, umfasst, wobei der erste monolithische MOF-Körper Folgendes umfasst:
ein organisches Bindemittel; und
mindestens etwa 80 Gew.-% MOF, bezogen auf das Gesamtgewicht des festen ersten monolithischen MOF-Körpers;
wobei der erste monolithische MOF-Körper ein Makroporenvolumen von etwa 15 % oder weniger des Hüllvolumens des ersten monolithischen MOF-Körpers, ein Partikelseitenverhältnis von etwa 2 oder mehr und eine Partikelbreite von mehr als oder gleich etwa 1 mm aufweist, und
wobei ein zweiter monolithischer MOF-Körper Folgendes umfasst:
ein Bindemittel; und
MOF;
wobei der zweite monolithische MOF-Körper ein Partikelseitenverhältnis von etwa 1 aufweist,
wobei der erste monolithische MOF-Körper ein höheres Partikelseitenverhältnis aufweist als der zweite monolithische MOF-Körper,
wobei der zweite monolithische MOF-Körper einen Partikeldurchmesser aufweist, der etwa gleich oder kleiner ist als die Partikelbreite des ersten monolithischen MOF-Körpers,
wobei das Partikelseitenverhältnis als das Verhältnis der Partikellänge zur Partikelbreite definiert ist,
wobei die Partikelbreite, die Partikellänge und das Partikelseitenverhältnis des ersten monolithischen MOF-Körpers durch dynamische Bildanalyse gemessen werden,
wobei der Partikeldurchmesser des zweiten monolithischen MOF-Körpers durch Laserbeugung gemessen wird,
wobei das Hüllvolumen definiert ist als das von dem ersten monolithischen MOF-Körper bei Atmosphärendruck (101,325 kPa) verdrängte Quecksilbervolumen, und
wobei das Volumen der Makroporen durch Quecksilberporosimetrie bestimmt wird.

2. Zusammensetzung nach Anspruch 1, wobei das Bindemittel des zweiten monolithischen MOF-Körpers ein organisches Bindemittel ist, optional wobei das organische Bindemittel des ersten und/oder zweiten monolithischen MOF-Körpers ein organisches polymeres Bindemittel ist.

3. Zusammensetzung nach Anspruch 1 oder 2, wobei:
(a) der zweite monolithische MOF-Körper mindestens etwa 50 Gew.-% MOF umfasst, bezogen auf das Gesamtgewicht des festen zweiten monolithischen MOF-Körpers, wobei der zweite monolithische MOF-Körper optional mindestens etwa 80 Gew.-% MOF und bis zu etwa 20 Gew.-% Bindemittel umfasst; und/oder
(b) die Zusammensetzung von etwa 50 bis etwa 99,9 Gew.-% des ersten monolithischen MOF-Körpers und/oder von etwa 0,1 bis etwa 50 Gew.-% des zweiten monolithischen MOF-Körpers, bezogen auf das Gesamtgewicht der festen Zusammensetzung, umfasst.

4. Zusammensetzung nach einem der Ansprüche 1 bis 3, wobei:
(a) der erste monolithische MOF-Körper ein Volumen an Makroporen von etwa 13 % oder weniger des Hüllvolumens des ersten monolithischen MOF-Körpers aufweist und/oder wobei der zweite monolithische MOF-Körper ein Volumen an Makroporen von etwa 13 % oder weniger des Hüllvolumens des zweiten monolithischen MOF-Körpers aufweist;
(b) die Zusammensetzung eine Schüttdichte, gemessen nach ASTM B-527, von etwa 0,3 bis etwa 1,5 g/cm³ aufweist, und/oder wobei der erste monolithische MOF-Körper und/oder der zweite monolithische MOF-Körper eine Hüllendichte von etwa 0,4 bis etwa 2 g/cm³ aufweist und/oder wobei der erste monolithische MOF-Körper und/oder der zweite monolithische MOF-Körper eine relative Dichte von etwa 0,3 bis etwa 1,3 aufweist,
wobei die Hüllendichte gemessen wird, indem das Gewicht des monolithischen MOF-Körpers durch sein Hüllvolumen dividiert wird, und
wobei die relative Dichte definiert ist als das Verhältnis der Hüllendichte des monolithischen MOF-Körpers im Vergleich zur Kristalldichte der MOF, wobei die Kristalldichte der MOF die theoretische Dichte eines einzelnen MOF-Kristalls ist; und/oder
(c) der erste monolithische MOF-Körper und/oder der zweite monolithische MOF-Körper eine Mikroporosität von etwa 40 % bis etwa 75 %, basierend auf dem Gesamtporenvolumen, aufweist, wie durch ASTM D4641-17 bestimmt, und/oder wobei der erste monolithische MOF-Körper und/oder der zweite monolithische MOF-Körper einen BET-Bereich von etwa 0 bis etwa 2.500 m²/g aufweist, wie durch N₂-Sorption bei 77 K gemessen.

5. Zusammensetzung nach einem der Ansprüche 1 bis 4, wobei:
(a) das Partikelseitenverhältnis des ersten monolithischen MOF-Körpers von etwa 2 bis etwa 7 beträgt; und/oder
(b) der erste monolithische MOF-Körper eine Partikellänge von etwa 2 bis etwa 35 mm aufweist, und/oder wobei der erste monolithische MOF-Körper eine Partikelbreite von etwa 1 bis etwa 5 mm aufweist, und/oder wobei der Partikeldurchmesser des zweiten monolithischen MOF-Körpers von etwa 20 µm bis etwa 3 mm beträgt.

6. Zusammensetzung nach einem der Ansprüche 1 bis 5, wobei die Zusammensetzung ferner ein Gas umfasst, das aus Wasserstoff, Kohlendioxid, Methan, Krypton und Mischungen davon ausgewählt ist.

7. Zusammensetzung nach einem der Ansprüche 1 bis 6, wobei:
(a) der erste und der zweite monolithische MOF-Körper die gleiche MOF und/oder das gleiche Bindemittel umfassen;
(b) die MOF des ersten und/oder zweiten monolithischen MOF-Körpers unabhängig voneinander ausgewählt ist aus einer MOF, die ein Metallion umfasst, das aus einem Übergangsmetall, Si, Mg, Al und Mischungen davon ausgewählt ist; und/oder
(c) die MOF des ersten und/oder zweiten monolithischen MOF-Körpers unabhängig voneinander ausgewählt ist aus einer MOF, die einen organischen Linker umfasst, der eine Carbonsäure, wie eine Dicarbonsäure, eine Tricarbonsäure und/oder eine Tetracarbonsäure, ein Azin, wie ein Diazin, ein Azol, wie ein Imidazol und/oder ein Triazol, und Mischungen davon umfasst.

8. Zusammensetzung nach einem der Ansprüche 1 bis 7, wobei die MOF des ersten und/oder zweiten monolithischen MOF-Körpers unabhängig voneinander ausgewählt ist aus HKUST-1, ZIF-8, MOF-808, ZU-301, UiO-66, UTSA-16, CALF-20, TIFSIX-3-Ni, NbOFFIVE-1-Ni, UiO-66-NH₂, MOF-74/CPO-27, MOF-74-Mg/CPO-27-Mg, SIFSIX, AI-Fumarat und Mischungen davon.

9. Zusammensetzung nach Anspruch 7 oder 8, ausgewählt aus Zusammensetzungen, in denen:
(a) das Gas Wasserstoff umfasst und der erste und/oder zweite monolithische MOF-Körper eine MOF umfasst, die unabhängig voneinander aus HKUST-1, ZIF-8, MOF-808, ZU-301, Ui0-66 und Mischungen davon ausgewählt ist;
(b) das Gas Kohlendioxid umfasst und der erste und/oder zweite monolithische MOF-Körper eine MOF umfasst, die unabhängig voneinander ausgewählt ist aus UTSA-16, CALF-20, ZU-301, TIFSIX-3-Ni, NbOFFIVE-1-Ni, UiO-66-NH₂ und Mischungen davon; und
(c) das Gas Methan umfasst und der erste und/oder zweite monolithische MOF-Körper HKUST-1 umfasst.

10. Verfahren zur Herstellung der Zusammensetzung nach einem der Ansprüche 1 bis 9, umfassend die folgenden Schritte:
a. Bereitstellen einer nassen MOF-Bindemittelmasse, umfassend:
i. MOF;
ii. von etwa 50 Gew.-% bis etwa 95 Gew.-% eines ersten Lösungsmittels, bezogen auf das Gesamtgewicht der nassen MOF-Bindemittelmasse; und
iii. organisches Bindemittel, wobei das Bindemittel in Form einer Lösung, einer Dispersion, eines Pulvers oder einer Mischung davon zugesetzt werden kann;
b. optionales Verringern des Anteils des ersten Lösungsmittels in der nassen MOF-Bindemittelmasse, um eine ungetrocknete MOF-Bindemittelmasse bereitzustellen;
c. Extrudieren und Schneiden der nassen MOF-Bindemittelmasse oder der ungetrockneten MOF-Bindemittelmasse, um einen ersten ungetrockneten monolithischen MOF-Körper bereitzustellen, der ein Teilchen-Seitenverhältnis von etwa 2 oder mehr aufweist;
d. Entfernen mindestens eines Teils des verbleibenden ersten Lösungsmittels aus dem ersten ungetrockneten monolithischen MOF-Körper, um einen ersten getrockneten monolithischen MOF-Körper bereitzustellen;
e. optionales Zugeben eines zweiten Lösungsmittels zu dem ersten getrockneten MOF-monolithischen Körper, um mindestens einen Teil des restlichen ersten Lösungsmittels, mindestens einen Teil der nicht umgesetzten Reaktanten und mindestens einen Teil des organischen Bindemittels aus dem ersten getrockneten MOF-monolithischen Körper zu entfernen, um einen optionalen ersten MOF-monolithischen Körper mit reduziertem Bindemittel bereitzustellen;
f. optionales Entfernen mindestens eines Teils des zweiten Lösungsmittels aus dem optionalen ersten reduzierten Bindemittel-MOF-monolithischen Körper, um einen optionalen ersten nicht aktivierten MOF-monolithischen Körper bereitzustellen;
g. Aktivieren des ersten getrockneten monolithischen MOF-Körpers oder optionalen ersten nicht aktivierten monolithischen MOF-Körpers durch Aussetzen des ersten getrockneten monolithischen MOF-Körpers oder optionalen ersten nicht aktivierten monolithischen MOF-Körpers einer Temperatur von etwa 100 °C oder mehr, um einen ersten monolithischen MOF-Körper bereitzustellen; und
h. Kombinieren des ersten MOF-monolithischen Körpers mit einem zweiten MOF-monolithischen Körper, um eine Zusammensetzung bereitzustellen, wobei der zweite MOF-monolithische Körper nach einem der Ansprüche 1 bis 9 definiert ist.

11. Verfahren zur Herstellung der Zusammensetzung nach einem der Ansprüche 1 bis 9, umfassend die folgenden Schritte:
I. Bilden einer nassen MOF-Reaktionsmasse durch Zusammenbringen von MOF-Vorläufermaterialien und Reaktionslösungsmittel, wobei die nasse MOF-Reaktionsmasse Folgendes umfasst:
i. von etwa 20 % bis etwa 70 % oder von etwa 30 Gew.-% bis etwa 60 Gew.-% oder von etwa 40 % bis etwa 50 % einer MOF, bezogen auf das Gesamtgewicht der feuchten MOF-Reaktionsmasse;
ii. von etwa 3 % bis etwa 50 %, von etwa 8 % bis etwa 40 % oder von etwa 10 % bis etwa 30 % nicht umgesetzte MOF-Vorläufer, bezogen auf das Gewicht der MOF in der nassen MOF-Reaktionsmasse; und
iii. von etwa 10 Gew.-% bis etwa 70 Gew.-%, vorzugsweise von etwa 10 % bis etwa 60 %, vorzugsweise von etwa 10 % bis weniger als etwa 50 %, Reaktionslösungsmittel, bezogen auf das Gewicht der feuchten MOF-Reaktionsmasse;
II. Kontaktieren der nassen MOF-Reaktionsmasse mit einem organischen Bindemittel, um eine nasse MOF-Bindemittelmasse bereitzustellen;
III. optionales Verringern des Anteils des Reaktionslösungsmittels in der nassen MOF-Bindemittelmasse, um eine ungetrocknete MOF-Bindemittelmasse bereitzustellen;
IV. Extrudieren und Schneiden der nassen MOF-Bindemittelmasse oder der ungetrockneten MOF-Bindemittelmasse, um einen ersten ungetrockneten monolithischen MOF-Körper bereitzustellen, der ein Teilchen-Seitenverhältnis von etwa 2 oder mehr aufweist;
V. Entfernen mindestens eines Teils des verbleibenden Lösungsmittels aus dem ersten ungetrockneten monolithischen MOF-Körper, um einen ersten getrockneten monolithischen MOF-Körper bereitzustellen;
VI. optionales Kontaktieren des ersten getrockneten monolithischen MOF-Körpers mit einem Waschlösungsmittel, um mindestens einen Teil des restlichen Reaktionslösungsmittels, mindestens einen Teil der nicht umgesetzten Reaktanten und/oder mindestens einen Teil des organischen Bindemittels von dem ersten getrockneten monolithischen MOF-Körper zu entfernen, um einen optionalen ersten monolithischen MOF-Körper mit reduziertem Bindemittel bereitzustellen;
VII. optionales Entfernen von mindestens einem Teil des Waschlösungsmittels aus dem optionalen ersten monolithischen MOF-Körper mit reduziertem Bindemittel, um einen optionalen ersten nicht aktivierten monolithischen MOF-Körper bereitzustellen;
VIII. Aktivieren des ersten getrockneten monolithischen MOF-Körpers oder optionalen ersten nicht aktivierten monolithischen MOF-Körpers durch Aussetzen des ersten getrockneten monolithischen MOF-Körpers oder optionalen ersten nicht aktivierten monolithischen MOF-Körpers einer Temperatur von etwa 100 °C oder mehr, um einen ersten monolithischen MOF-Körper bereitzustellen; und
IX. Kombinieren des ersten monolithischen MOF-Körpers mit einem zweiten monolithischen MOF-Körper, um eine Zusammensetzung bereitzustellen, wobei der zweite monolithische MOF-Körper nach einem der Ansprüche 1 bis 9 definiert ist, wobei sich die nicht umgesetzten MOF-Vorläufer auf nicht umgesetztes Material beziehen, das zur Herstellung der MOF verwendet wird.

12. Verfahren nach Anspruch 10 oder 11, wobei das Verfahren ferner einen oder mehrere Schritte umfasst, um einen zweiten MOF-monolithischen Körper zur Verwendung in Schritt (h) oder Schritt (IX) bereitzustellen, wobei die Schritte Folgendes umfassen:
Mahlen eines Teils des ersten getrockneten monolithischen MOF-Körpers, um einen zweiten getrockneten monolithischen MOF-Körper bereitzustellen, wobei der zweite getrocknete monolithische MOF-Körper einen Partikeldurchmesser aufweist, der etwa gleich oder kleiner ist als die Partikelbreite des getrockneten ersten monolithischen MOF-Körpers, und
Aktivieren des zweiten getrockneten monolithischen MOF-Körpers, indem der zweite getrocknete monolithische MOF-Körper einer Temperatur von mehr als etwa 100 °C ausgesetzt wird, um einen zweiten monolithischen MOF-Körper bereitzustellen; und/oder
Mahlen eines Teils des optionalen ersten monolithischen MOF-Körpers mit reduziertem Bindemittel, um einen optionalen zweiten monolithischen MOF-Körper mit reduziertem Bindemittel bereitzustellen, wobei der optionale zweite monolithische MOF-Körper mit reduziertem Bindemittel einen Teilchendurchmesser aufweist, der etwa kleiner oder gleich der Teilchenbreite des optionalen ersten monolithischen MOF-Körpers mit reduziertem Bindemittel ist,
Entfernen mindestens eines Teils des zweiten Lösungsmittels oder Waschlösungsmittels von dem optionalen zweiten MOF-Monolithkörper mit reduziertem Bindemittel, um einen optionalen zweiten nicht aktivierten MOF-Monolithkörper bereitzustellen, und
Aktivieren des optionalen zweiten nicht aktivierten monolithischen MOF-Körpers, indem der optionale zweite nicht aktivierte monolithische MOF-Körper einer Temperatur von mehr als etwa 100 °C ausgesetzt wird, um den zweiten monolithischen MOF-Körper zu bilden.

13. Verfahren zur Herstellung der Zusammensetzung nach einem der Ansprüche 1 bis 9, umfassend die folgenden Schritte:
1. Bereitstellen einer nassen MOF-Bindemittelmasse, umfassend:
i. MOF;
ii. von etwa 50 Gew.-% bis etwa 95 Gew.-% eines ersten Lösungsmittels, bezogen auf das Gesamtgewicht der nassen MOF-Bindemittelmasse; und
iii. organisches Bindemittel, wobei das Bindemittel in Form einer Lösung, einer Dispersion, eines Pulvers oder einer Mischung davon zugesetzt werden kann;
2. optionales Verringern des Anteils des ersten Lösungsmittels in der nassen MOF-Bindemittelmasse, um eine ungetrocknete MOF-Bindemittelmasse bereitzustellen;
3. Extrudieren und Schneiden der nassen MOF-Bindemittelmasse oder der ungetrockneten MOF-Bindemittelmasse, um einen ersten ungetrockneten monolithischen MOF-Körper bereitzustellen, der ein Teilchen-Seitenverhältnis von etwa 2 oder mehr aufweist;
4. Entfernen mindestens eines Teils des verbleibenden ersten Lösungsmittels aus dem ersten ungetrockneten monolithischen MOF-Körper, um einen ersten getrockneten monolithischen MOF-Körper bereitzustellen;
5. Mahlen eines Teils des ersten getrockneten monolithischen MOF-Körpers, um einen zweiten getrockneten monolithischen MOF-Körper bereitzustellen, wobei der zweite getrocknete monolithische MOF-Körper einen Partikeldurchmesser aufweist, der etwa gleich oder kleiner ist als die Partikelbreite des getrockneten ersten monolithischen MOF-Körpers;
6. optionales Zugeben eines zweiten Lösungsmittels zu den ersten und zweiten getrockneten MOF-monolithischen Körpern, um mindestens einen Teil des restlichen ersten Lösungsmittels, mindestens einen Teil der nicht umgesetzten Reaktanten und mindestens einen Teil des organischen Bindemittels aus den ersten und zweiten getrockneten MOF-monolithischen Körpern zu entfernen, um optional erste und zweite MOF-monolithische Körper mit reduziertem Bindemittel bereitzustellen;
7. optionales Entfernen mindestens eines Teils des zweiten Lösungsmittels aus den optionalen ersten und zweiten monolithischen MOF-Körpern mit reduziertem Bindemittel, um optionale erste und zweite nicht aktivierte MOF-Körper bereitzustellen; und
8. Aktivieren der ersten und zweiten getrockneten monolithischen MOF-Körper oder optional der ersten und zweiten nicht aktivierten monolithischen MOF-Körper, indem die ersten und zweiten getrockneten monolithischen MOF-Körper oder optional die ersten und zweiten nicht aktivierten monolithischen MOF-Körper einer Temperatur von mehr als etwa 100 °C ausgesetzt werden, um eine Zusammensetzung bereitzustellen, die einen ersten monolithischen MOF-Körper und einen zweiten monolithischen MOF-Körper umfasst, wobei der zweite monolithische MOF-Körper wie nach einem der Ansprüche 1 bis 9 definiert ist; oder
1. Bereitstellen einer nassen MOF-Reaktionsmasse nach Anspruch 11 und Kontaktieren der nassen MOF-Reaktionsmasse mit einem organischen Bindemittel, um eine nasse MOF-Bindemasse bereitzustellen;
2. optionales Verringern des Anteils des Reaktionslösungsmittels in der nassen MOF-Bindemittelmasse, um eine ungetrocknete MOF-Bindemittelmasse bereitzustellen;
3. Extrudieren und Schneiden der nassen MOF-Bindemittelmasse oder der ungetrockneten MOF-Bindemittelmasse, um einen ersten ungetrockneten monolithischen MOF-Körper bereitzustellen, der ein Teilchen-Seitenverhältnis von etwa 2 oder mehr aufweist;
4. Entfernen mindestens eines Teils des verbleibenden Lösungsmittels aus dem ersten ungetrockneten monolithischen MOF-Körper, um einen ersten getrockneten monolithischen MOF-Körper bereitzustellen;
5. Mahlen eines Teils des ersten getrockneten monolithischen MOF-Körpers, um einen zweiten getrockneten monolithischen MOF-Körper bereitzustellen, wobei der zweite getrocknete monolithische MOF-Körper einen Partikeldurchmesser aufweist, der etwa gleich oder kleiner ist als die Partikelbreite des getrockneten ersten monolithischen MOF-Körpers;
6. optionales Zugeben eines zweiten Lösungsmittels zu den ersten und zweiten getrockneten MOF-monolithischen Körpern, um mindestens einen Teil des restlichen Reaktionslösungsmittels, mindestens einen Teil der nicht umgesetzten Reaktanten und mindestens einen Teil des organischen Bindemittels aus den ersten und zweiten getrockneten MOF-monolithischen Körpern zu entfernen, um optional erste und zweite MOF-monolithische Körper mit reduziertem Bindemittel bereitzustellen;
7. optionales Entfernen mindestens eines Teils des zweiten Lösungsmittels aus den optionalen ersten und zweiten monolithischen MOF-Körpern mit reduziertem Bindemittel, um optionale erste und zweite nicht aktivierte MOF-Körper bereitzustellen; und
8. Aktivieren der ersten und zweiten getrockneten monolithischen MOF-Körper oder optional der ersten und zweiten nicht aktivierten monolithischen MOF-Körper, indem die ersten und zweiten getrockneten monolithischen MOF-Körper oder optional die ersten und zweiten nicht aktivierten monolithischen MOF-Körper einer Temperatur von mehr als etwa 100 °C ausgesetzt werden, um eine Zusammensetzung bereitzustellen, die einen ersten monolithischen MOF-Körper und einen zweiten monolithischen MOF-Körper umfasst, wobei der zweite monolithische MOF-Körper wie nach einem der Ansprüche 1 bis 9 definiert ist.

14. Gasspeicherbehälter, umfassend eine Zusammensetzung nach einem der Ansprüche 1 bis 9.

15. Verwendung eines Gasspeicherbehälters nach Anspruch 14 oder einer Zusammensetzung nach einem der Ansprüche 1 bis 9 für die Aufnahme, Speicherung und/oder Abgabe eines Gases, wobei das Gas optional Wasserstoff, Kohlendioxid, Methan oder Krypton oder eine Mischung davon umfasst.

16. Verwendung nach Anspruch 15, wobei:
(a) das Gas Wasserstoff umfasst und der erste und/oder zweite monolithische MOF-Körper ein MOF, ausgewählt aus HKUST-1, ZIF-8, MOF-808, ZU-301, UiO-66 und Mischungen davon, umfasst; und/oder
(b) das Gas Kohlendioxid umfasst und der erste und/oder zweite monolithische MOF-Körper eine MOF umfasst, die voneinander ausgewählt ist aus UTSA-16, CALF-20, ZU-301, TIFSIX-3-Ni, NbOFFIVE- 1-Ni, UiO-66-NH₂ und Mischungen davon; und/oder
(c) das Gas Methan umfasst und der erste und/oder zweite monolithische MOF-Körper HKUST-1 ist.

## Revendications

1. Composition comprenant au moins deux corps monolithiques RMO, dans laquelle la composition comprend au moins environ 50 % en poids d'un premier corps monolithique RMO sur la base du poids total de la composition solide ; dans laquelle le premier corps monolithique RMO comprend :
un liant organique ; et
au moins environ 80 % en poids de RMO sur la base du poids total du premier corps monolithique RMO solide ;
dans laquelle le premier corps monolithique RMO a un volume de macropores d'environ 15 % ou moins du volume d'enveloppe du premier corps monolithique RMO, un rapport d'aspect des particules d'environ 2 ou plus et une largeur des particules supérieure ou égale à environ 1 mm, et
dans laquelle un second corps monolithique RMO comprend :
un liant ; et
RMO ;
dans laquelle le second corps monolithique RMO a un rapport d'aspect des particules d'environ 1,
dans laquelle le premier corps monolithique RMO a un rapport d'aspect des particules plus élevé que le second corps monolithique RMO,
dans laquelle le second corps monolithique RMO a un diamètre des particules environ égal ou inférieur à la largeur des particules du premier corps monolithique RMO, dans laquelle le rapport d'aspect des particules est défini comme le rapport entre la longueur des particules et la largeur des particules,
dans laquelle la largeur des particules, la longueur des particules et le rapport d'aspect des particules du premier corps monolithique RMO sont mesurés par analyse dynamique d'image,
dans laquelle le diamètre des particules du second corps monolithique RMO est mesuré par diffraction laser,
dans laquelle le volume d'enveloppe est défini comme le volume de mercure déplacé par le premier corps monolithique RMO à la pression atmosphérique (101,325 kPa), et
dans laquelle le volume des macropores est déterminé par porosimétrie au mercure.

2. Composition selon la revendication 1, dans laquelle le liant du second corps monolithique RMO est un liant organique, éventuellement dans laquelle le liant organique du premier et/ou du second corps monolithique RMO est un liant polymère organique.

3. Composition selon la revendication 1 ou la revendication 2, dans laquelle :
(a) le second corps monolithique RMO comprend au moins environ 50 % en poids de RMO, sur la base du poids total du second corps monolithique RMO solide, éventuellement dans laquelle le second corps monolithique RMO comprend au moins environ 80 % en poids de RMO et jusqu'à environ 20 % en poids de liant ; et/ou
(b) la composition comprend d'environ 50 à environ 99,9 % en poids du premier corps monolithique RMO et/ou d'environ 0,1 à environ 50 % en poids du second corps monolithique RMO, sur la base du poids total de la composition solide.

4. Composition selon l'une quelconque des revendications 1 à 3, dans laquelle :
(a) le premier corps monolithique RMO a un volume de macropores d'environ 13 % ou moins du volume d'enveloppe du premier corps monolithique RMO et/ou dans laquelle le second corps monolithique RMO a un volume de macropores d'environ 13 % ou moins du volume d'enveloppe du second corps monolithique RMO ;
(b) la composition a une masse volumique apparente, telle que mesurée selon la norme ASTM B-527, d'environ 0,3 à environ 1,5 g/cm³, et/ou dans laquelle le premier corps monolithique RMO et/ou le second corps monolithique RMO a une densité d'enveloppe d'environ 0,4 à environ 2 g/cm³ et/ou dans laquelle le premier corps monolithique RMO et/ou le second corps monolithique RMO a une densité relative d'environ 0,3 à environ 1,3.
dans laquelle la densité d'enveloppe est mesurée en divisant le poids du corps monolithique RMO par son volume d'enveloppe, et
dans laquelle la densité relative est définie comme le rapport entre la densité d'enveloppe du corps monolithique RMO et la densité cristalline du RMO, dans laquelle la densité cristalline du RMO est la densité théorique d'un seul cristal RMO ; et/ou
(c) le premier corps monolithique RMO et/ou le second corps monolithique RMO a une microporosité d'environ 40 % à environ 75 %, sur la base du volume total des pores, telle que déterminée par la norme ASTM D4641-17, et/ou dans laquelle le premier corps monolithique RMO et/ou le second corps monolithique RMO a une surface spécifique BET d'environ 0 à environ 2 500 m²/g, telle que mesurée par sorption de N₂ à 77 K.

5. Composition selon l'une quelconque des revendications 1 à 4, dans laquelle :
(a) le rapport d'aspect des particules du premier corps monolithique RMO est d'environ 2 à environ 7 ; et/ou
(b) le premier corps monolithique RMO a une longueur des particules d'environ 2 à environ 35 mm, et/ou dans laquelle le premier corps monolithique RMO a une largeur des particules d'environ 1 à environ 5 mm, et/ou dans laquelle le diamètre des particules du second corps monolithique RMO est d'environ 20 µm à environ 3 mm.

6. Composition selon l'une quelconque des revendications 1 à 5, dans laquelle la composition comprend en outre un gaz sélectionné parmi l'hydrogène, le dioxyde de carbone, le méthane, le krypton et des mélanges de ceux-ci.

7. Composition selon l'une quelconque des revendications 1 à 6, dans laquelle :
(a) les premier et second corps monolithiques RMO comprennent le même RMO et/ou le même liant ;
(b) le RMO des premier et/ou second corps monolithiques RMO est sélectionné indépendamment parmi un RMO comprenant un ion métallique sélectionné parmi un métal de transition, Si, Mg, Al et des mélanges de ceux-ci ; et/ou
(c) le RMO des premier et/ou second corps monolithiques RMO est sélectionné indépendamment parmi un RMO comprenant un liant organique comprenant un acide carboxylique, tel qu'un acide dicarboxylique, un acide tricarboxylique et/ou un acide tétracarboxylique, une azine, telle qu'une diazine, un azole, tel qu'un imidazole et/ou un triazole et des mélanges de ceux-ci.

8. Composition selon l'une quelconque des revendications 1 à 7, dans laquelle le RMO du premier et/ou du second corps monolithique RMO est sélectionné indépendamment parmi HKUST-1, ZIF-8, MOF-808, ZU-301, UiO-66, UTSA-16, CALF-20, TIFSIX-3-Ni, NbOFFIVE-1-Ni, UiO-66-NH₂, MOF-74/CPO-27, MOF-74-Mg/CPO-27-Mg, SIFSIX, le fumarate d'aluminium et des mélanges de ceux-ci.

9. Composition selon les revendications 7 ou 8, sélectionnée parmi les compositions dans lesquelles :
(a) le gaz comprend de l'hydrogène et le premier et/ou le second corps monolithique RMO comprend un RMO sélectionné indépendamment parmi HKUST-1, ZIF-8, MOF-808, ZU- 301, UiO-66 et des mélanges de ceux-ci ;
(b) le gaz comprend du dioxyde de carbone et le premier et/ou le second corps monolithique RMO comprend un RMO sélectionné indépendamment parmi UTSA-16, CALF-20, ZU-301, TIFSIX-3-Ni, NbOFFIVE-1-Ni, UiO-66-NH₂ et des mélanges de ceux-ci ; et
(c) le gaz comprend du méthane et le premier et/ou le second corps monolithique RMO comprend HKUST-1.

10. Procédé de fabrication de la composition selon l'une quelconque des revendications 1 à 9 comprenant les étapes consistant à :
a. fournir une masse du RMO avec liant humide comprenant :
i. RMO ;
ii. d'environ 50 % en poids à environ 95 % en poids d'un premier solvant sur la base du poids total de la masse du RMO avec liant humide ; et
iii. un liant organique dans lequel le liant peut être ajouté sous forme de solution, de dispersion, de poudre ou d'un mélange de ceux-ci ;
b. réduire éventuellement la proportion du premier solvant dans la masse du RMO avec liant humide pour obtenir une masse du RMO avec liant non séché ;
c. extruder et découper la masse du RMO avec liant humide ou la masse du RMO avec liant non séché pour obtenir un premier corps monolithique RMO non séché ayant un rapport d'aspect des particules d'environ 2 ou plus ;
d. éliminer au moins une partie du premier solvant restant du premier corps monolithique RMO non séché pour obtenir un premier corps monolithique RMO séché ;
e. ajouter éventuellement un second solvant au premier corps monolithique RMO séché de manière à éliminer au moins une partie du premier solvant résiduel, au moins une partie des réactifs n'ayant pas réagi et au moins une partie du liant organique du premier corps monolithique RMO séché pour obtenir un premier corps monolithique RMO à liant réduit facultatif ;
f. éliminer éventuellement au moins une partie du second solvant du premier corps monolithique RMO à liant réduit facultatif pour obtenir un premier corps monolithique RMO non activé facultatif ;
g. activer le premier corps monolithique RMO séché ou le premier corps monolithique RMO non activé facultatif en soumettant le premier corps monolithique RMO séché ou le premier corps monolithique RMO non activé facultatif à une température d'environ 100 °C ou plus pour obtenir un premier corps monolithique RMO ; et
h. combiner le premier corps monolithique RMO avec un second corps monolithique RMO pour obtenir une composition, dans lequel le second corps monolithique RMO est tel que défini selon l'une quelconque des revendications 1 à 9.

11. Procédé de fabrication de la composition selon l'une quelconque des revendications 1 à 9 comprenant les étapes consistant à :
I. former une masse réactionnelle de RMO humide en mettant en contact des matériaux précurseurs RMO et un solvant réactionnel, dans lequel la masse réactionnelle de RMO humide comprend :
i. d'environ 20 % à environ 70 %, ou d'environ 30 % en poids à environ 60 % en poids, ou d'environ 40 % à environ 50 % d'un RMO, sur la base du poids total de la masse réactionnelle de RMO humide ;
ii. d'environ 3 % à environ 50 %, d'environ 8 % à environ 40 %, ou d'environ 10 % à environ 30 % de précurseurs RMO n'ayant pas réagi en poids du RMO dans la masse réactionnelle de RMO humide ; et
iii. d'environ 10 % en poids à environ 70 % en poids, de préférence d'environ 10 % à environ 60 %, de préférence d'environ 10 % à moins d'environ 50 %, de solvant réactionnel en poids de la masse réactionnelle de RMO humide ;
II. mettre en contact la masse réactionnelle de RMO humide avec un liant organique pour obtenir une masse du RMO avec liant humide ;
III. réduire éventuellement la proportion du solvant réactionnel dans la masse du RMO avec liant humide pour obtenir une masse du RMO avec liant non séché ;
IV. extruder et découper la masse du RMO avec liant humide ou la masse du RMO avec liant non séché pour obtenir un premier corps monolithique RMO non séché ayant un rapport d'aspect des particules d'environ 2 ou plus ;
V. éliminer au moins une partie du solvant restant du premier corps monolithique RMO non séché pour obtenir un premier corps monolithique RMO séché ;
VI. mettre en contact éventuellement le premier corps monolithique RMO séché avec un solvant de lavage de manière à éliminer au moins une partie du solvant réactionnel résiduel, au moins une partie des réactifs n'ayant pas réagi et/ou au moins une partie du liant organique du premier corps monolithique RMO séché pour obtenir un premier corps monolithique RMO à liant réduit facultatif ;
VII. éliminer éventuellement au moins une partie du solvant du premier corps monolithique RMO à liant réduit facultatif pour obtenir un premier corps monolithique RMO non activé facultatif ;
VIII. activer le premier corps monolithique RMO séché ou le premier corps monolithique RMO non activé facultatif en soumettant le premier corps monolithique RMO séché ou le premier corps monolithique RMO non activé facultatif à une température d'environ 100 °C ou plus pour obtenir un premier corps monolithique RMO ; et
IX. combiner le premier corps monolithique RMO avec un second corps monolithique RMO pour obtenir une composition, dans lequel le second corps monolithique RMO est tel que défini selon l'une quelconque des revendications 1 à 9, dans lequel les précurseurs RMO n'ayant pas réagi se réfèrent à un matériau n'ayant pas réagi qui est utilisé pour préparer le RMO.

12. Procédé selon les revendications 10 ou 11, dans lequel le procédé comprend en outre une ou plusieurs étapes pour fournir un second corps monolithique RMO destiné à être utilisé dans l'étape (h) ou l'étape (IX), dans lequel les étapes comprennent :
le broyage d'une partie du premier corps monolithique RMO séché pour obtenir un second corps monolithique RMO séché, dans lequel le second corps monolithique RMO séché a un diamètre des particules environ égal ou inférieur à la largeur des particules du premier corps monolithique RMO séché, et
l'activation du second corps monolithique RMO séché en soumettant le second corps monolithique RMO séché à une température supérieure à environ 100 °C pour obtenir un second corps monolithique RMO ; et/ou
le broyage d'une partie du corps monolithique RMO à liant réduit facultatif pour obtenir un second corps monolithique RMO à liant réduit facultatif, dans lequel le second corps monolithique RMO à liant réduit facultatif a un diamètre des particules inférieur ou égal à la largeur des particules du premier corps monolithique RMO à liant réduit facultatif,
l'élimination d'au moins une partie du second solvant ou solvant de lavage du second corps monolithique RMO à liant réduit facultatif pour obtenir un second corps monolithique RMO non activé facultatif, et
l'activation du second corps monolithique RMO non activé facultatif en soumettant le second corps monolithique RMO non activé facultatif à une température supérieure à environ 100 °C pour former le second corps monolithique RMO.

13. Procédé de fabrication de la composition selon l'une quelconque des revendications 1 à 9 comprenant les étapes consistant à :
1. fournir une masse du RMO avec liant humide comprenant :
i. RMO ;
ii. d'environ 50 % en poids à environ 95 % en poids d'un premier solvant sur la base du poids total de la masse du RMO avec liant humide ; et
iii. un liant organique dans lequel le liant peut être ajouté sous forme de solution, de dispersion, de poudre ou d'un mélange de ceux-ci ;
2. réduire éventuellement la proportion du premier solvant dans la masse du RMO avec liant humide pour obtenir une masse du RMO avec liant non séché ;
3. extruder et découper la masse du RMO avec liant humide ou la masse du RMO avec liant non séché pour obtenir un premier corps monolithique RMO non séché ayant un rapport d'aspect des particules d'environ 2 ou plus ;
4. éliminer au moins une partie du premier solvant restant du premier corps monolithique RMO non séché pour obtenir un premier corps monolithique RMO séché ;
5. broyer une partie du premier corps monolithique RMO séché pour obtenir un second corps monolithique RMO séché, dans lequel le second corps monolithique RMO séché a un diamètre des particules environ égal ou inférieur à la largeur des particules du premier corps monolithique RMO séché ;
6. ajouter éventuellement un second solvant aux premier et second corps monolithiques RMO séchés de manière à éliminer au moins une partie du premier solvant résiduel, au moins une partie des réactifs n'ayant pas réagi et au moins une partie du liant organique des premier et second corps monolithiques RMO séchés pour obtenir des premier et second corps monolithiques RMO à liant réduit facultatifs ;
7. éliminer éventuellement au moins une partie du second solvant des premier et second corps monolithiques RMO à liant réduit pour obtenir des premier et second corps monolithiques RMO non activés facultatifs ; et
8. activer les premier et second corps monolithiques RMO séchés ou les premier et second corps monolithiques RMO non activés facultatifs en soumettant les premier et second corps monolithiques RMO séchés ou les premier et second corps monolithiques RMO non activés facultatifs à une température supérieure à environ 100 °C pour obtenir une composition comprenant un premier corps monolithique RMO et un second corps monolithique RMO, dans lequel le second corps monolithique RMO est tel que défini selon l'une quelconque des revendications 1 à 9 ; ou
1. fournir une masse réactionnelle de RMO humide selon la revendication 11 et mettre en contact la masse réactionnelle de RMO humide avec un liant organique pour obtenir une masse du RMO avec liant humide ;
2. réduire éventuellement la proportion du solvant dans la masse du RMO avec liant humide pour obtenir une masse du RMO avec liant non séché ;
3. extruder et découper la masse du RMO avec liant humide ou la masse du RMO avec liant non séché pour obtenir un premier corps monolithique RMO non séché ayant un rapport d'aspect des particules d'environ 2 ou plus ;
4. éliminer au moins une partie du solvant restant du premier corps monolithique RMO non séché pour obtenir un premier corps monolithique RMO séché ;
5. broyer une partie du premier corps monolithique RMO séché pour obtenir un second corps monolithique RMO séché, dans lequel le second corps monolithique RMO séché a un diamètre des particules environ égal ou inférieur à la largeur des particules du premier corps monolithique RMO séché ;
6. ajouter éventuellement un second solvant aux premier et second corps monolithiques RMO séchés de manière à éliminer au moins une partie du solvant réactionnel résiduel, au moins une partie des réactifs n'ayant pas réagi et au moins une partie du liant organique des premier et second corps monolithiques RMO séchés pour obtenir des premier et second corps monolithiques RMO à liant réduit facultatifs ;
7. éliminer éventuellement au moins une partie du second solvant des premier et second corps monolithiques RMO à liant réduit pour obtenir des premier et second corps monolithiques RMO non activés facultatifs ; et
8. activer les premier et second corps monolithiques RMO séchés ou les premier et second corps monolithiques RMO non activés facultatifs en soumettant les premier et second corps monolithiques RMO séchés ou les premier et second corps monolithiques RMO non activés facultatifs à une température supérieure à environ 100 °C pour obtenir une composition comprenant un premier corps monolithique RMO et un second corps monolithique RMO, dans laquelle le second corps monolithique RMO est tel que défini selon l'une quelconque des revendications 1 à 9.

14. Réservoir de stockage de gaz comprenant une composition selon l'une quelconque des revendications 1 à 9.

15. Utilisation d'un réservoir de stockage de gaz selon la revendication 14, ou d'une composition selon l'une quelconque des revendications 1 à 9, pour l'absorption, le stockage et/ou la libération d'un gaz, éventuellement dans laquelle le gaz comprend de l'hydrogène, du dioxyde de carbone, du méthane ou du krypton ou un mélange de ceux-ci.

16. Utilisation selon la revendication 15, dans laquelle :
(a) le gaz comprend de l'hydrogène et le premier et/ou le second corps monolithique RMO comprend un RMO sélectionné parmi HKUST-1, ZIF-8, MOF-808, ZU-301, UiO-66 et des mélanges de ceux-ci ; et/ou
(b) le gaz comprend du dioxyde de carbone et le premier et/ou le second corps monolithique RMO comprend un RMO sélectionné parmi UTSA-16, CALF-20, ZU-301, TIFSIX-3-Ni, NbOFFIVE- 1-Ni, UiO-66-NH₂ et des mélanges de ceux-ci ; et/ou
(c) le gaz comprend du méthane et le premier et/ou le second corps monolithique RMO est HKUST-1.
